# EUROPÄISCHE PATENTANMELDUNG

(11) **EP 0 844 547 A1**
(43) Veröffentlichungstag der Anmeldung: **27.05.1998**
(21) Anmeldenummer: 97120463.1
(22) Anmeldetag: 21.11.1997
(51) Int. Cl.: G05D 23/13, G05D 11/16, E03C 1/04

(54) **Verfahren und Vorrichtung zur wiederholbaren Dosierung von Fluids**

(30) Priorität: 22.11.1996 DE 19648493
(71) Anmelder: Kludi Armaturen Scheffer Vertriebs- und Verwaltungs oHG, 58708 Menden (DE)
(72) Erfinder: Skupin, Konrad, Dipl.-Ing., 35088 Battenberg (DE); Schumacher, Peter, Dipl.-Ing., 59227 Ahlen (DE); Wiesendahl, Guido, Dipl.-Ing., 58313 Herdecke (DE); Weidner, Eugen, 58644 Iserlohn (DE)
(74) Vertreter: Beetz & Partner Patentanwälte

(57) **Zusammenfassung**

Die Erfindung betrifft ein Verfahren und eine Vorrichtung zur wiederholbaren Dosierung von Fluids und insbesondere Flüssigkeiten in einer wählbaren und reproduzierbaren Menge, bei denen die zu dosierende Fluidmenge anhand eines einmal manuell vollzogenen Dosiervorgangs gelernt und abrufbar gespeichert wird.

Die Vorrichtung umfaßt eine Fluidleitung **2** für ein Fluid **1** mit Fluideinlaß **3** und Fluidauslaß **4**, zwischen denen ein Absperrorgan **7** vorgesehen ist, das von einer Steuereinheit **8** gesteuert ist, eine Betätigungseinrichtung **5** und eine Speichereingabeeinrichtung **9** (M, SP). Das System ist so ausgebildet, daß über die Betätigungseinrichtung **5** und/oder die Speichereingabeeinrichtung **9** ein Lernmodus initiiert und durch einmaliges Vordosieren eine entsprechende Mengeninformation gespeichert und durch Betätigung der Speichereingabeeinrichtung **9** ein Dosiermodus initiiert wird, in dem die der gespeicherten Mengeninformation entsprechende Fluidmenge durch das Absperrorgan **7** dosiert wird.

## Beschreibung

Die Erfindung betrifft ein Verfahren und eine Vorrichtung zur wiederholbaren Dosierung von Fluids, insbesondere von Flüssigkeiten, in einer wählbaren und reproduzierbaren Menge.

Die Dosierung, d.h., die Mengenbemessung, von Fluids aus Fluidquellen und insbesondere die Dosierung von Flüssigkeiten aus Reservoirs, Behältern, Leitungssystemen und anderen Flüssigkeitsquellen mit Hilfe eines Absperrorgans stellt als solche einen seit langem geläufigen Stand der Technik dar. Beispiele hierfür sind die Befüllung von Behältern mit bestimmten Mengen an Gasen oder Flüssigkeiten, die Einspeisung abgemessener Fluidmengen in Leitungssysteme oder etwa die freie Abgabe von Fluids aus einem Fluidauslaß, z.B. das Ausfließen von Flüssigkeiten wie Wasser zu Spül- oder Waschzwecken aus einer Auslaufarmatur.

Typische Beispiele für herkömmliche Dosiersysteme, bei denen zumeist vorgegebene Fluidmengen abgemessen bzw. dosiert werden, finden sich etwa bei Wasch- und Spülmaschinen, die automatisch mit einer bestimmten Flüssigkeitsmenge befüllt werden, Wasch- und Spülsystemen, etwa für WCs und Urinale, mengenbegrenzenden Systemen für Duschen und Waschbecken, die insbesondere in Eisenbahnen, Schiffen und Flugzeugen verwendet werden, Flaschen- und Behälterfüllanlagen, Bewässerungsanlagen und Getränkedosierautomaten sowie bei vielen anderen Anwendungen im Bereich der Haustechnik, der Sanitärtechnik, der Nahrungs- und Genußmitteltechnologie, der chemischen Verfahrenstechnik (etwa zur Bemessung bestimmter Mengen an Reaktanten oder Lösungsmittel zur Durchführung chemischer Reaktionen, zur Durchführung von Misch- und Eindosiervorgängen) u.v.a. .

Die Reproduzierung einer Fluidmenge geschieht nach dem Stand der Technik im einfachsten Fall durch Betätigung eines Absperrorgans, etwa eines Wasserhahns, durch eine Bedienungsperson, d.h., durch Öffnen und nachfolgendes Schließen nach Ausfluß oder Abgabe einer bestimmten gewünschten Menge, die über die Masse, das Gewicht, das Volumen, den Füllstand und analoge Variable bestimmt werden kann.

Das Füllen eines Kochtopfs oder einer Badewanne mit Wasser sind typische, geläufige Beispiele für derartige unmittelbar vom Menschen selbst vorgenommene Bemessungen, wobei die Mengenvorgabe individuell erfolgt und die Menge jeweils individuell reproduziert wird.

Automatische Dosiersysteme, wie die oben erwähnten, beruhen bei den einfachsten Konstruktionen auf einer Zuordnung von Ausflußmenge und Zeit: Die zu reproduzierende Fluidmenge entspricht einer zugeordneten Offenzeit eines zeitgesteuerten Absperrorgans. Beispiele hierfür sind Getränkeautomaten, die auf Betätigung einer Betätigungseinrichtung hin eine wählbare vorgegebene und reproduzierbare Flüssigkeitsmengen abgeben.

Die Genauigkeit zeitgesteuerter Dosiersysteme ist allerdings davon abhängig, wie konstant und reproduzierbar der Fluiddurchsatz von der Fluidquelle durch das Absperrorgan ist.

Wegen des Einflusses von Druckänderungen, Temperaturänderungen und damit Dichteänderungen, Querschnittsverringerungen etwa durch Ablagerungen, wie Verkalken, etc., Veränderungen im Öffnungs- und Schließzeitpunkt des Absperrorgans durch Drifteffekte bei der elektrischen oder elektronischen Ansteuerung sowie durch mechanisches Spiel, eines veränderten Druckverlustes am Auslauf und ähnlich wirkender Effekte sind zeitgesteuerte Dosiersysteme nicht besonders genau und vor allem hinsichtlich der dosierten Mengen zeitlich nicht konstant. Zudem ist die Wahl von zu dosierenden Mengen durch entsprechende Zeiteinstellung für eine Bedienungsperson nicht leicht durchführbar. Deshalb sind bei Getränkeautomaten üblicherweise nur einige wenige, voreingestellte Flüssigkeitsabgabemengen herstellerseitig vorgesehen, die wählbar, aber nicht veränderbar sind.

Der Schließvorgang des Absperrorgans (das z.B. von einer Bedienungsperson oder auch automatisch geöffnet wurde) kann über eine Niveauerfassung im zu befüllenden Behälter gesteuert werden, die etwa mechanisch über Schwimmer, über den hydrostatischen Druck, akustisch mit Schall- bzw. Ultraschalldetektoren oder optisch erfolgen kann.

Die Genauigkeit volumetrischer Dosierungen wird vor allem durch die Temperaturabhängigkeit der Fluiddichte begrenzt.

Daneben kann auch die einem bestimmten Füllstand oder einer bestimmten Volumenmenge entsprechende Masse bzw. das zugehörige Gewicht ermittelt werden.

Aufwendigere und genauere Dosiersysteme beruhen auf der direkten messenden Erfassung einer durch einen Durchflußmesser hindurchgeströmten Fluidmenge und dem Schließen des Absperrorgans bei Erreichen einer vorgegebenen Fluidmenge. Abgesehen von mechanischen Durchflußmessern sind in der Technik vor allem magnetisch-induktive Durchflußmesser, Wirbel-(Karman)-Durchflußmesser, Ultraschall-Durchflußmesser und Masse-(Coriolis)-Durchflußmesser in Gebrauch.

Aus DE 35 18 645 und der daraus durch Teilung abgetrennten Patentanmeldung DE 35 46 550 sind ein Verfahren und eine Schaltungsanordnung zur Steuerung von Sanitär-Mischbatterien für Kalt- und Warmwasser bekannt, mit denen in einem geschlossenen Regelkreis die Temperatur des Mischwassers unter Konstanthaltung der Durchflußmenge des Mischwassers geregelt wird.

Dazu werden aus der Abweichung zwischen Soll- und Isttemperatur mindestens zwei Stellwerte, die zur elektromechanischen Einstellung der Kalt- und Warmwasserzufuhr dienen, so abgeleitet, daß die resultierende Durchflußmenge konstant bleibt.

Aus den Durchflußteilmengen, die den entsprechenden Stellwerten proportional sind, kann durch Integration eine momentane kumulative Füllmenge bestimmt werden, die mit einer vorher gewählten, vorgegebenen kumulativen Füllmenge verglichen wird; die Dosierung wird beendet, wenn die momentane kumulative Füllmenge der vorher gewählten kumulativen Füllmenge entspricht.

Bei diesem vorbekannten Flüssigkeitsdosiersystem kann eine gewählte kumulative Füllmenge, also die Gesamtmenge des zu dosierenden Flüssigkeitsgemisches, in das System eingegeben und darin abrufbar gespeichert werden.

Die Information über die ggf. zu speichernde kumulative Füllmenge wird nach dieser vorbekannten Technik über eine Eingabeeinrichtung direkt als Mengeninformation von einer Bedienungsperson eingegeben. Vorzugsweise werden Standardwerte für die kumulative Füllmenge gespeichert.

Hinsichtlich der Speicherung der Information über die zu dosierende Gesamtmenge unterscheidet sich dieses vorbekannte Dosiersystem etwa von den bekannten Getränkeautomaten, die fest vorgegebene Flüssigkeitsmengen reproduzierbar abgeben, im Prinzip nur darin, daß die reproduzierbar zu dosierende Gesamtmenge an Flüssigkeit frei wählbar durch eine Bedienungsperson eingegeben werden kann.

Bisher existieren allerdings keine Dosiersysteme, die eine freie, leicht einzugebende oder einzustellende und leicht zu ändernde Vorgabe einer wiederholt zu dosierenden Fluidmenge und deren wiederholbare reproduzierbare Abgabe erlauben, ohne daß diese Menge quantitativ im Sinne einer entsprechenden Absolutwerteingabe (z.B. in Litern, Kilogramm, etc.,) eingegeben werden muß.

Darüber hinaus existieren im Stand der Technik keinerlei Systeme, die über die oben erläuterte Speicherbarkeit und Abrufbarkeit gleichbleibender Abgabemengen an Fluid hinaus in der Lage wären, die Speicherinformation aus einer beliebigen, einmalig "vordosierten" Fluidmenge zu lernen und das Fluid daraufhin in beliebig wiederholbarer Weise in einer der abgespeicherten Information entsprechenden Menge reproduzierbar abzugeben.

Die vorliegende Erfindung geht von dem oben beschriebenen Stand der Technik gemäß DE 35 18 645 bzw. DE 35 46 550 aus.

Der Erfindung liegt demgegenüber die Aufgabe zugrunde, ein Verfahren und eine Vorrichtung zur wiederholbaren Dosierung von Fluids in wählbaren und reproduzierbaren Mengen anzugeben, bei denen die zu dosierende Fluidmenge nicht als solche in irgendeiner quantifizierten Form durch eine Bedienungsperson eingegeben, sondern anhand eines einmal manuell vollzogenen Dosiervorgangs gelernt und abrufbar gespeichert wird.

Bereits diese Aufgabenstellung ist im Hinblick auf den Stand der Technik neu.

Die Aufgabe wird gemäß den unabhängigen Ansprüchen gelöst. Die abhängigen Ansprüche betreffen vorteilhafte Ausführungsformen und Weiterbildungen der Erfindungskonzeption.

Die Erfindung bezieht sich entsprechend auf ein lernendes Dosiersystem.

Das erfindungsgemäße Verfahren zur wiederholten Dosierung eines Fluids in einer wählbaren und reproduzierbaren Menge mit Hilfe eines in einer Fluidleitung mit Fluideinlaß und Fluidauslaß vorgesehenen Absperrorgans, das von einer elektronischen Steuereinheit steuerbar ist, die nach Eingabe einer der gewählten, zu dosierenden Menge an Fluid entsprechenden Eingabeinformation das Absperrorgan öffnet und nach Ausströmen der gewählten Menge an Fluid aus dem Fluidauslaß, die als entsprechende Mengeninformation in der Steuereinheit gespeichert ist, das Absperrorgan wieder schließt, ist dadurch gekennzeichnet, daß
(A) zur Erzeugung der in der Steuereinheit gespeicherten Mengeninformation
   - durch Eingabe einer Eingabeinformation an die Steuereinheit oder durch Öffnen des Absperrorgans durch Öffnen durch eine Bedienungsperson ein Lernmodus der Steuereinheit initiiert wird,
   - die Steuereinheit während des Lernmodus die aus dem Fluidauslaß ausgeströmte Menge an Fluid als dieser Menge entsprechende Mengeninformation erfaßt und speichert und
   - der Lernmodus durch das nachfolgende, von einer Bedienungsperson vorgenommene Schließen des Absperrorgans von der Steuereinheit beendet wird
   und
(B) zur wiederholbaren Dosierung des Fluids in einer der in der Steuereinheit gespeicherten Mengeninformation entsprechenden Menge
   - durch Eingabe einer Eingabeinformation an die Steuereinheit, gegebenenfalls in Kombination mit einer Betätigung der Betätigungseinrichtung, ein Dosiermodus der Steuereinheit initiiert wird,
   - das Absperrorgan daraufhin durch die Steuereinheit geöffnet wird,
   - die Steuereinheit das Absperrorgan wieder schließt, wenn eine Menge an Fluid aus dem Fluidauslaß ausgeströmt ist, die der in der Lernphase gespeicherten zugehörigen Mengeninformation entspricht, und
   - der Dosiermodus mit dem Schließen des Absperrorgans beendet wird.

In der einfachsten Ausführungsform wird die Mengeninformation über eine Zeitmessung des Zeitraums zwischen dem Öffnen und dem Schließen des Absperrorgans erzeugt, und zwar bei konstantem bzw. näherungsweise konstantem Durchsatz bzw. Druck des Fluids.

Nach einer vorteilhaften Durchführungsweise des Verfahrens wird die Mengeninformation über eine Durchflußmengenmessung der Durchflußmenge an Fluid durch die Fluidleitung zwischen dem Öffnen und dem Schließen des Absperrorgans erzeugt.

Nach einer weiteren vorteilhaften Ausführungsform wird die Mengeninformation durch Korrektur der dem Zeitraum bzw. der Durchflußmenge entsprechenden Signale oder Daten bezüglich der Temperatur und/oder der Dichte und/oder der Viskosität und/oder des Drucks des Fluids erzeugt.

Die Mengeninformation kann durch die elektronische Steuereinheit vorteilhaft in Form einer Relativmenge oder einer Absolutmenge ermittelt und über eine Anzeigeeinheit ausgedruckt und/oder optisch angezeigt und/oder durch Sprachausgabe ausgegeben werden.

Bei Verwendung eines absolut arbeitenden Durchflußmengensensors zur Ermittlung der Durchflußmenge an Fluid ist es möglich, daß die elektronische Steuereinheit nach einer vorgegebenen Anzahl von Dosiervorgängen bei einem neuerlichen Dosiervorgang eine Überprüfung und ggfs. Korrektur von gespeicherten Steuerdaten aufgrund des Signals vom Durchflußmengensensor vornimmt und die gespeicherten Werte entsprechend aktualisiert.

Die erfindungsgemäße Vorrichtung zur Durchführung des oben definierten Verfahrens weist auf:
- eine Fluidleitung mit einem Fluideinlaß und einem Fluidauslaß,
- ein zwischen Fluideinlaß und Fluidauslaß in der Fluidleitung vorgesehenes Absperrorgan, mit dem der Fluß eines vom Fluideinlaß kommenden, hindurchströmenden Fluids ein- und ausschaltbar ist,
- eine elektronische Steuereinheit, die das Absperrorgan steuert,
- eine Betätigungseinrichtung, die mit der Steuereinheit verbunden ist und bei Betätigung durch eine Bedienungsperson Signale an die Steuereinheit abgibt, aufgrund derer die Steuereinheit das Absperrorgan öffnet bzw. schließt, und
- eine mit der Steuereinheit verbundene Eingabeeinrichtung zur Eingabe einer Eingabeinformation bezüglich der zu dosierenden Menge des Fluids durch eine Bedienungsperson;
   sie ist dadurch gekennzeichnet, daß
   die Eingabeeinrichtung eine Speichereingabeeinrichtung ist, die bei Betätigung Speichersignale an die Steuereinheit abgibt, und
- die Steuereinheit so ausgebildet ist, daß sie
   (A) aufgrund einer durch eine Bedienungsperson durch Betätigung
      - der Betätigungseinrichtung und/oder
      - der Speichereingabeeinrichtung in einer vorgegebenen Reihenfolge vorgenommenen einmaligen manuellen Dosierung einer Fluidmenge in einem dadurch initiierten Lernmodus die zwischen dem über die Betätigungseinrichtung bzw. die Speichereingabeeinrichtung veranlaßten Öffnen und dem nachfolgenden, über
      - die Betätigungseinrichtung
         und/oder
      - die Speichereingabeeinrichtung veranlaßten Schließen des Absperrorgans aus dem Fluidauslaß ausgeströmte Menge an Fluid als eine dieser Menge entsprechende Mengeninformation ermittelt und als gelernte Mengeninformation in einem der Speichereingabeeinrichtung zugeordneten Speicher speichert, wobei der Lernmodus mit erfolgter Speicherung der Mengeninformation endet,
         und
   (B) bei Betätigung der Speichereingabevorrichtung,
      gegebenenfalls in Kombination mit einer Betätigung der Betätigungseinrichtung, in einen
      Dosiermodus geht, während dessen der Lernmodus gesperrt und der Speicher nicht überschreibbar ist, und das Absperrorgan öffnet und gesteuert so schließt, daß die zwischen dem Öffnen und dem nachfolgenden Schließen des Absperrorgans aus dem Fluidauslaß ausgeströmte Menge an Fluid der zuvor im Lernmodus im Speicher gespeicherten gelernten Mengeninformation entspricht,
      wobei der Dosiermodus mit dem automatischen Schließen des Absperrorgans endet.

Nach einer bevorzugten Ausführungsform weist die Speichereingabeeinrichtung ein Speicherbefehlselement sowie ein oder mehrere Speicherplatzelemente auf, die mit der Steuereinheit verbunden sind, wobei das Speicherbefehlselement bei Betätigung ein Signal an die Steuereinheit abgibt, mit dem im Lernmodus ein Speicherbefehl erzeugt und ggf. der Lernbeginn initiiert und ggf. das Lernende definiert wird, und die Speicherplatzelemente bei Betätigung im Lernmodus Signale an die Steuereinheit abgeben, mit denen eine Zuordnung einer im Lernmodus gelernten oder zu lernenden Mengeninformation zu dem betreffenden Speicherplatzelement erfolgt und/oder im Dosiermodus, gegebenenfalls in Kombination mit einer Betätigung der Betätigungseinrichtung, der Dosierbeginn initiiert wird.

Gemäß einer weiteren bevorzugten Ausführungsform der erfindungsgemäßen Vorrichtung besteht die Speichereingabeeinrichtung aus Speicheransprechelementen, die bei Betätigung Signale an die Steuereinheit abgeben, mit denen sowohl ein Speicherbefehl erzeugt und ggf. der Lernbeginn initiiert wird, als auch eine Zuordnung einer im Lernmodus gelernten oder zu lernenden Mengeninformation zu dem betreffenden Speicherplatzelement erfolgt und ggf. das Lernende definiert und/oder im Dosiermodus, gegebenenfalls in Kombination mit einer Betätigung der Betätigungseinrichtung, der Dosierbeginn initiiert wird.

Eine vorteilhafte Ausführungsform der Vorrichtung ist dadurch gekennzeichnet, daß die Steuereinheit so ausgebildet ist, daß sie
(A) bei Betätigung
   - der Betätigungseinrichtung
      und/oder
   - der Speichereingabeeinrichtung in den Lernmodus geht und die zwischen dem über die Betätigungseinrichtung bzw. die Speichereingabeeinrichtung veranlaßten Öffnen und dem nachfolgenden, über
   - die Betätigungseinrichtung
      und/oder
   - die Speichereingabeeinrichtung veranlaßten Schließen des Absperrorgans aus dem Fluidauslaß ausgeströmte Menge an Fluid als eine dieser Menge entsprechende Mengeninformation ermittelt und aufgrund einer Betätigung eines Speicherplatzelements der Speichereingabeeinrichtung bzw. eines Speicheransprechelements der Speichereingabeeinrichtung als gelernte Mengeninformation in einem Speicher speichert, der dem betreffenden Speicherplatzelement bzw. dem betreffenden Speicheransprechelement zugeordnet ist,
   und
(B) bei - ggf. erneuter - Betätigung
   - des Speicherplatzelements der Speichereingabeeinrichtung
      bzw.
   - des Speicheransprechelements der Speichereingabeeinrichtung, gegebenenfalls in Kombination mit einer Betätigung der Betätigungseinrichtung,
      in den Dosiermodus geht und das Absperrorgan öffnet und gesteuert so schließt, daß die zwischen dem Öffnen und dem nachfolgenden Schließen des Absperrorgans aus dem Fluidauslaß ausgeströmte Menge an Fluid der zuvor im Lernmodus im Speicher gespeicherten gelernten Mengeninformation entspricht.

Nach einer bevorzugten Ausführungsform ist das Absperrorgan ein Strömungsschalter, der nur den vollständig offenen Zustand oder den vollständig geschlossenen Zustand annehmen kann, und insbesondere ein Magnetventil.

Eine andere vorteilhafte Ausführungsform der erfindungsgemäßen Vorrichtung ist dadurch gekennzeichnet, daß das Absperrorgan ein Strömungsschalterregister ist, das aus zwei oder mehr parallelgeschalteten Strömungsschaltern, insbesondere Magnetventilen, mit gemeinsamem Fluidauslaß und gegebenenfalls auch gemeinsamem oder teilweise gemeinsamem Fluideinlaß besteht, wobei die einzelnen Strömungsschalter des Strömungsschalterregisters von der elektronischen Steuereinheit steuerbar sind.

Hierdurch läßt sich ein quasikontinuierliches bzw. abgestuftes Öffnen und Schließen des Absperrorgans erzielen. Ferner lassen sich mit derartigen Strömungsschalterregistern auch verschiedene Fluidquellen zu- und abschalten, was besonders für Mischvorgänge, beispielsweise beim Mischen unterschiedlicher Medien oder gleichartiger Medien unterschiedlicher Temperatur, günstig ist.

Alternativ dazu kann das Absperrorgan auch ein Regelorgan sein, das zwischen dem vollständig offenen und dem vollständig geschlossenen Zustand kontinuierlich oder schrittweise über einen Stellantrieb verstellbar ist, der von der elektronischen Steuereinheit steuerbar ist, insbesondere eine Klappe, ein Schieber oder ein Ventil.

Das Absperrorgan kann vorteilhaft aus mindestens zwei Absperrorganen bestehen, die Stellantriebe aufweisen, die von der elektronischen Steuereinheit gesteuert sind, und die einlaßseitig jeweils mit einem von mindestens zwei Fluideinlässen für mindestens zwei unterschiedliche Fluids und auslaßseitig mit dem Fluidauslaß verbunden sind. Diese Ausführung eignet sich zum Mischen von zwei oder mehr Fluids. Derartige Mischvorgänge können alternativ auch mit einer beliebigen Mischeinrichtung, die dem Absperrorgan vorgeschaltet ist, z.B. einem Dreiwegemischer, der einlaßseitig mit zwei Fluideinlässen und auslaßseitig mit dem Fluidauslaß verbunden ist, erfolgen.

Nach einer besonders bevorzugten erfindungsgemäßen Ausführungsform ist zwischen demn Absperrorgan und dem Fluidauslaß eine Sicherheits-Absperrvorrichtung vorgesehen, die einen Strömungsschalter oder ein kontinuierlich oder schrittweise über einen Stellantrieb zwischen dem vollständig offenen und dem vollständig geschlossenen Zustand verstellbares Regelorgan darstellt und von der elektronischen Steuereinheit steuerbar ist, insbesondere ein Magnetventil. Sie wird vorzugsweise bei Beginn eines Dosiervorgangs im Lernmodus wie auch im Dosiermodus zeitlich vor dem Absperrorgan geöffnet und bei Beendigung des Dosiervorgangs zeitlich nach dem Schließen des Absperrorgans geschlossen.

Die erfindungsgemäße Vorrichtung weist bei Varianten, bei denen die Mengeninformation über eine Durchflußmengenmessung erzeugt wird, bei welcher die Durchflußmenge an Fluid, das zwischen dem Öffnen und dem nachfolgenden Schließen des Absperrorgans durch die Fluidleitung fließt, einen Durchflußmengensensor auf, der bevorzugt stromab vom Absperrorgan vorgesehen und mit der Steuereinheit verbunden ist. Die Steuereinheit ist in diesem Fall so ausgebildet, daß sie unter Verwendung des Ausgangssignals des Durchflußmengensensors, das der Ist-Durchflußmenge des Fluids entspricht, das Absperrorgan so steuert, daß die Ist-Durchflußmenge der Soll-Durchflußmenge genau oder näherungsweise entspricht.

Handelsübliche Durchflußmesser, wie oben erwähnt, sind durchwegs so ausgelegt, daß sie sowohl den Massendurchsatz oder Massendurchfluß (Ṁ) (Masse/Zeit) bzw. den Volumendurchsatz oder Volumendurchfluß (V̇) (Volumen/Zeit) als auch die entsprechenden, über die Zeit integrierten Gesamtmassen bzw. Gesamtvolumina zu ermitteln erlauben. Je nach Art des verwendeten Durchflußmessers bzw. dessen Ausgangssignal wird die Steuereinheit, vorzugsweise softwaremäßig, so ausgelegt, daß sie entweder die Gesamtmassen- bzw. Gesamtvolumenermittlung selbst übernimmt oder diese Daten bereits vom Durchflußmengensensor erhält.

Die oben zum Stand der Technik angeführten Durchflußmengensensoren sind dem Fachmann dementsprechend geläufig. Für die Zwecke der Erfindung eignen sich neben mechanischen Durchflußmessern vor allem magnetisch-induktive Durchflußmesser, Wirbel-Durchflußmesser, die auf dem Karman -Prinzip beruhen, Ultraschall-Durchflußmesser sowie Masse-Durchflußmesser, die auf dem Coriolis-Prinzip beruhen.

Ein erfindungsgemäßes Dosiersystem mit Durchflußmengenerfassung ist bevorzugt als geschlossener Regelkreis ausgebildet, insbesondere, wenn das Durchflußmengensignal ein Durchsatzsignal ist (V̇, Ṁ), wobei die Steuereinheit das Signal des Durchflußmengensensors, gegebenenfalls durch Integration des Durchsatzes über die Zeit, auswertet und das Absperrorgan schließt, wenn die aus dem Fluidauslaß ausgeströmte Fluidmenge der Soll-Fluidmenge (Masse, Volumen) entspricht, die als Mengeninformation in einem Speicher abgelegt und durch Betätigung der Speichereingabeeinrichtung abrufbar ist und reproduzierbar dosiert wird.

Die Steuereinheit ist erfindungsgemäß eine beliebige elektronische Einheit, die Eingabeinformationen erhält, sie verarbeitet und entsprechende Stellglieder ansteuert, wozu insbesondere das Absperrorgan gehört.

Die Steuereinheit ist vorzugsweise ein an sich bekanntes Mikrocomputersystem bzw. Mikroprozessorsystem, das eine zentrale Recheneinheit (CPU), einen Festwertspeicher (ROM), einen Schreib-/Lesespeicher (RAM) und ein Interface (I/O-Einheit) aufweist, die vorzugsweise über ein oder mehrere Bussysteme miteinander in Verbindung stehen, die auch zum Datentransfer mit Peripheriegeräten und Peripherieeinrichtungen herangezogen werden können.

Solche Mikroprozessorsysteme einschließlich ihres anwendungsspezifischen Aufbaus und der anwendungsspezifischen Software und der Peripherieeinrichtungen sind dem Fachmann per se geläufig und handelsüblich und bedürfen daher keiner detaillierteren Erläuterung.

Das Betriebssystem sowie vorhandene, gegebenenfalls im ROM abgelegte Programme und Unterprogramme werden in dem Fachmann an sich bekannter Weise so konzipiert, daß die oben definierten Systemfunktionen, in Zuordnung zu vorgesehenen Bedienfunktionen bzw. Bediensequenzen, realisiert werden.

Im Rahmen der vorliegenden Erfindung sind zur Erzielung eines Lernmodus mit Lernen und Abspeichern von Fluidmengen und zur Erzielung eines Dosiermodus zur Reproduzierung abgespeicherter Fluidmengen außerordentlich zahlreiche Kombinationen bezüglich der Art von Eingabeinformationen, der Reihenfolge der Eingabe der Eingabeinformationen und der Dauer der Eingabe von Eingabeinformationen zu Beginn und zum Ende des Lernmodus möglich. Der Fachmann kann, ohne diesbezüglich erfinderisch tätig werden zu müssen, für jede Kombination von Eingabeinformationen bzw. Bedienoperationen und jeden gewünschten Ablauf von Operationen und Funktionen in beiden Betriebsmodi die entsprechende Software erstellen und das System entsprechend programmieren und konfigurieren.

Das Verfahren und die Vorrichtung gemäß der Erfindung können entsprechend in sehr vielen eingabemäßig und funktionell unterschiedlichen Varianten realisiert werden, denen gleichwohl stets die Grundkonzeption gemeinsam ist, daß es sich um ein lernendes Dosiersystem handelt, das in der Lage ist, die bei einem einmaligen manuellen *"*Vordosieren*"* dosierte Fluidmenge zu lernen und dann in einem Dosiermodus beliebig wiederholbar zu reproduzieren.

Die mikroprozessorgesteuerte Vorrichtung enthält nach einer vorteilhaften Ausführungsform im Festwertspeicher (ROM) und/oder im Schreib-/Lesespeicher (RAM) mindestens ein Kennfeld, in dem Steuerwerte zur Steuerung des Absperrorgans und gegebenenfalls einer Sicherheits-Absperreinrichtung in Zuordnung zu Temperaturen, Durchflußmengen und/oder Zeiten sowie gegebenenfalls Korrekturdaten abgespeichert sind, um Meßwerte und Steuerwerte erforderlichenfalls korrigieren zu können. Die Kennfeldstruktur hat den Vorteil, daß darin bereits Rechenergebnisse oder Fremddaten, z.B. empirisch gewonnene Daten in Abhängigkeit von einem oder mehreren Parametern gespeichert werden können, um so Rechenzeit zu sparen und ein schnelles Ansprechen des Steuer- bzw. Regelsystems zu ermöglichen. Kennfeldsteuerungen sind dem Fachmann ebenfalls per se geläufig.

Für viele Anwendungen ist es vorteilhaft, z.B. aus hygienischen oder arbeitshygienischen Gründen, zur Bedienungserleichterung für Behinderte oder zur Verhinderung von Vandalismus, die Betätigungseinrichtung als an sich bekannte Einrichtung zur berührungslosen anwesenheitsorientierten Steuerung bzw. zur Näherungssteuerung auszubilden, die auf dem Prinzip der Lichtschranke mit sichtbarem Licht oder Infrarotlicht, der Passivinfrarotdetektion, der Ultraschalldetektion, dem Radarprinzip oder der Anwendung von Mikrowellen beruht und von der Steuereinheit gesteuert ist.

Eine vorteilhafte Ausführungsform der Vorrichtung weist eine von der Steuereinheit gesteuerte Ausgabeinheit auf, die als optische Anzeige und/oder akustische Ausgabeeinrichtung und insbesondere als Sprachausgabeeinrichtung und/oder als Drucker ausgebildet ist. Sie kann auch eine Interface- oder Busfunktion aufweisen, wodurch in besonders einfacher Weise eine Integration der Vorrichtung in Anlagen, etwa in der Verfahrenstechnik, möglich ist, bei denen unter hierarchischer oder dezentraler Steuerung Dosiervorgänge z.B. in Leitungssystemen vorzunehmen sind.

Gemäß einer weiteren vorteilhaften Ausführungsform sind die Betätigungseinrichtung und/oder die Speichereingabeeinrichtung über die Steuereinheit zum interaktiven Betrieb mit einem Benutzer ausgebildet und vorzugsweise sprachgesteuert. Eine besonders im Behindertenbereich vorteilhaft einsetzbare Vorrichtung ist dadurch gekennzeichnet, daß die Ausgabeeinrichtung als Sprachausgabeeinrichtung ausgebildet ist und ferner ein Mikrophon zur Sprach- oder Lautaufnahme aufweist und die Steuereinheit so ausgebildet ist, daß sie die vom Mikrophon gelieferten Signale zur Sprach- oder Lauterkennung auswertet und bei Empfang bestimmter Sprach- oder Lautsignale die Betätigungseinrichtung und/oder die Speichereingabeeinrichtung in einem Lernmodus oder in einem Dosiermodus ansteuert.

Besonders bevorzugt sind erfindungsgemäße Vorrichtungen, die ein Temperatureingabeelement zur Eingabe von Temperatursollwerten aufweisen, das mit der Steuereinheit verbunden ist, die aufgrund von Signalen vom Temperatureingabeelement die Stellantriebe von Mischeinrichtungen, die einlaßseitig mit Fluidquellen für Fluids unterschiedlicher Temperatur verbunden sind, im Sinne einer Steuerung oder eines geschlossenen Regelkreises so ansteuert, daß am Fluidauslaß ein gemischtes Fluid der eingestellten Temperatur resultiert, da die Mischtemperatur das in der Praxis am häufigsten vorkommende Mischkriterium darstellt.

Die Erfindungskonzeption beinhaltet als bevorzugte Ausführungsform, daß die Steuereinheit so ausgebildet ist, daß das Absperrorgan über die Betätigungseinrichtung im Sinne eines herkömmlichen Strömungsschalters, insbesondere eines Wasserhahns, oder eines Regelorgans manuell, ohne Betätigung eines Speicherplatzelements oder eines Speicheransprechelements des Speichereingabeelements, zu öffnen und wieder zu schließen ist (EIN/AUS-Funktion). Damit besitzt eine solche erfindungsgemäße Vorrichtung neben der Lernfunktion auch die Funktion eines üblichen Wasserhahns, einer Mischbatterie und vergleichbarer Vorrichtungen.

Die Erfindung wird im folgenden anhand von Ausführungsbeispielen unter Bezug auf die Zeichnungen näher erläutert. Die in den dargestellten Vorrichtungen enthaltenen Merkmalskombinationen sind dabei nicht einschränkend zu interpretieren.

Es zeigen:
- Fig. 1 und 3 bis 7:: erfindungsgemäße Vorrichtungen;
- Fig. 2(a), 2(b):: erfindungsgemäß verwendbare Strömungsschalterregister;
- Fig. 8 und 9:: schematische Signaldiagramme zur Erläuterung des Lernmodus und des Dosiermodus sowie der zugeordneten Betätigung des Absperrorgans und einer Sicherheits-Absperreinrichtung;
- Fig. 10 bis 13:: Beispiele für Bedientableaus für erfindungsgemäße Vorrichtungen
- Fig. 14 und 15:: sowie
Flußdiagramme zur Erläuterung des Lernmodus bzw. des Dosiermodus.

Die vorliegende Erfindungskonzeption eignet sich allgemein zur Dosierung sämtlicher Arten von Fluids, also allgemein für Gase und Flüssigkeiten, wozu neben reinen Flüssigkeiten auch entsprechende Lösungen, insbesondere Wasser bzw. wäßrige Lösungen und besonders Brauchwasser, nichtwäßrige Lösungsmittel oder Lösungen, Dispersionen und Emulsionen gehören. Zu den erfindungsgemäß dosierbaren Gasen gehören auch Aerosole, deren disperse Komponente sowohl flüssig als auch fest sein kann. Als Fluids sind besonders bevorzugt Trinkwasser bzw. Brauchwasser vorgesehen, die vorzugsweise, wenn es sich z.B. um Wannenfüll-, Brause-, Waschtisch- oder Spültischarmaturen handelt, mit einer wählbaren Temperatur in das Absperrorgan einspeisbar sind. Das vortemperierte Wasser kommt dabei insbesondere aus einem thermostatisierten Reservoir oder einer Mischeinrichtung.

Zur Vereinfachung sowie im Hinblick darauf, daß die vorliegende Erfindung insbesondere im Sanitärarmaturenbereich anwendbar ist, wird im folgenden auf Wasser als typisches Fluidbeispiel Bezug genommen.

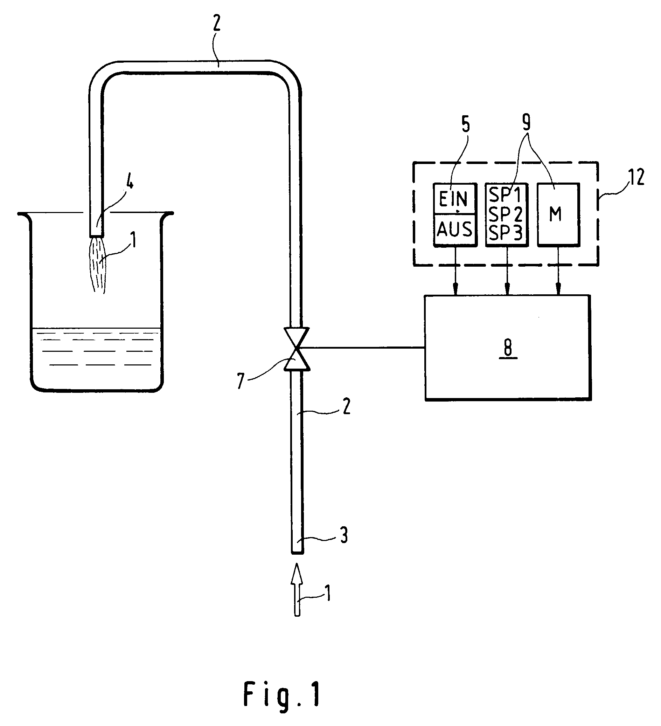

Die in Fig. 1 dargestellte erfindungsgemäße Vorrichtung entspricht der einfachsten Ausführungsform. Sie umfaßt ein Rohrsystem mit einer Fluidleitung 2 mit einem Fluideinlaß 3 für ein Fluid 1 und einem Fluidauslaß 4, aus dem das Fluid 1 austritt. Die Quelle für das Fluid 1 ist vorzugsweise eine Wasserleitung.

Die Vorrichtung von Fig. 1 umfaßt ferner ein Absperrorgan 7, das stromab vom Fluideinlaß 3 vorgesehen ist, sowie eine elektronische Steuereinheit 8, die mit einer Betätigungseinrichtung 5 sowie einer Speichereingabeeinrichtung 9 verbunden ist.

Das Absperrorgan, das besonders vorteilhaft ein Magnetventil ist, wird von der elektronischen Steuereinheit 8 gesteuert.

Die Betätigungseinrichtung 5 besteht im einfachsten Fall aus zwei Tasten (EIN bzw. AUS), durch deren Betätigung das Absperrorgan 7 über die Steuereinheit 8 betätigt werden kann.

Wenn lediglich die Betätigungseinrichtung 5, über welche die Ansteuerung des Absperrorgans 7 veranlaßt wird, betätigt wird, arbeitet die Vorrichtung nur als elektromechanischer Strömungsschalter, hat also einfache Wasserhahnfunktion. Bei Drücken der EIN-Taste der Betätigungseinrichtung 5 wird das Absperrorgan 7 über die Steuereinheit 8 geöffnet und bei Betätigung der AUS-Taste wieder geschlossen. Die beiden Funktionen EIN/AUS der Betätigungseinrichtung 5 können vorteilhafterweise einem einzigen Bedienelement, z.B. einer Taste, zugeordnet sein, wobei beim ersten Betätigen die EIN-Funktion und beim darauffolgenden Betätigen die AUS-Funktion resultieren.

Die Speichereingabeeinrichtung 9 umfaßt ein Speicherbefehlselement M sowie mindestens ein Speicherplatzelement SP und vorzugsweise mehrere Speicherplatzelemente SP1, SP2, SP3, ... .

Diese Betätigungselemente bestehen bevozugt ebenfalls aus Tasten (M, SP1, SP2, SP3, ...); sie stehen mit der Steuereinrichtung 8 in Verbindung.

Das Speicherbefehlselement M dient dazu, bei der Steuereinheit 8 die Speicherung einer gelernten oder zu lernenden Mengeninformation im Lernmodus zu veranlassen und gegebenenfalls auch den Lernmodus zu initiieren. Die Speicherplatzelemente dienen im Lernmodus der Zuordnung einer gelernten oder zu lernenden Mengeninformation zu einem bestimmten Speicherplatz oder Speicherbereich und im Dosiermodus zur Initiierung des Auslesens der entsprechenden gespeicherten Mengeninformation in der Steuereinheit 8, die zur entsprechenden Steuerung des Öffnens und Schließens des Absperrorgans 7 herangezogen wird.

Die Bedienelemente 5 und 9 sind bevorzugt in einem Bedientableau 12 angeordnet, das von der Steuereinheit 8 getrennt vorgesehen sein kann und an einer bedienungsgünstigen Stelle an der entsprechenden Armatur oder in der Nähe davon vorgesehen ist. Die Steuereinheit 8 wird bevorzugt in der Nähe der Armatur so angeordnet, daß sie nicht im Sichtbereich liegt, vorzugsweise z.B. unter einem Wasch- oder Spülbecken oder in einer Wand unter Putz. Die Steuereinheit benötigt eine übliche Stromversorgung, z.B. durch Netzanschluß, und ist durch eine Datenverbindung mit den Bedienelementen, z.B. dem Bedientableau 12, und den Stellgliedern, besonders dem Absperrorgan 7, verbunden. Die verschiedenen Arten derartiger Datenverbindungen sind dem Fachmann an sich geläufig. Besonders vorteilhaft ist eine Datenübertragung per Funk zwischen den Betätigungselementen 5, 9 des Bedientableaus 12 und der Steuereinheit 8. Die Steuereinheit 8 ist ferner vorzugsweise in einer modularen Bauweise mit dem hydraulischen System zusammengefaßt, das aus der Fluidleitung 2 mit Fluideinlaß 3 und Fluidauslaß 4 und dem Absperrorgan 7 sowie weiteren, peripheren Bauteilen, Sensoren, Durchflußreglern, Fluidfiltern, etc. besteht.

Durch das manuelle einmalige *"*Vordosieren*"* im Lernmodus erhält die Steuereinheit 8 eine Mengeninformation, die der vordosierten Fluidmenge zugeordnet ist. Sie wird in Zuordnung zu einem Speicherplatzelement SP (SP1, SP2, SP3, ...) bzw. einem Speicheransprechelement MSP (MSP1, MSP2, MSP3, ...) abrufbar gespeichert und ist in einem neuerlichen Lernmodus überschreibbar.

Diese Mengeninformation ist bei der einfachsten Ausführungsform eine Zeitinformation (Offenzeit des Absperrorgans 7), da bei im Lern- und Dosiermodus hinreichend konstanten Strömungsverhältnissen, d.h., bei z.B. mit einem Durchflußregler konstantgehaltenem Fluiddurchsatz, in diesem Dosiersystem die Offenzeit des Absperrorgans 7 der durchgeflossenen Menge an Fluid näherungsweise proportional ist.

Die Mengeninformation kann jedoch auch eine beliebige andere Information sein, die beispielsweise von einem Durchflußmesser, einem Druckfühler, einem Niveausensor u. dgl. stammt.

Übliche Flüssigkeitsdurchsätze bei Sanitärarmaturen liegen im Bereich von etwa 1 bis etwa 22 l/min und vorteilhaft im Bereich von etwa 2 bis etwa 14 l/min.

Übliche Durchflußregler, die vorteilhaft stromab vom Absperrorgan 7 angeordnet werden, halten in einem Druckbereich von etwa 1 bis 10 bar Primärdruck den Durchfluß (Durchsatz, Volumen/Zeit, V̇) mit einer Genauigkeit von etwa ± 5 % konstant. Sie erlauben deshalb in besonders vorteilhafter Weise die Erfassung der Offenzeit des Absperrorgans 7 als Mengeninformation.

Eine typische Bediensequenz für einen Lernvorgang im Lernmodus und einen Dosiervorgang im Dosiermodus ist wie folgt:
1. Zunächst wird das Speicherbefehlselement M betätigt. Die Speichereinheit 8 wird dadurch in den Lernmodus gebracht, und das Erfassen und Lernen einer Mengeninformation (z.B. der Offenzeit des Absperrorgans 7) wird initiiert (Lernbeginn, im folgenden auch als L_{B} abgekürzt).
2. Die Betätigungseinrichtung 5 wird betätigt; daraufhin öffnet die Steuereinheit 8 das Absperrorgan 7 (EIN) und erfaßt die Mengeninformation während der Offenzeit des Absperrorgans 7.
3. Die erneute Betätigung der Betätigungseinrichtung 5 veranlaßt das Schließen des Absperrorgans 7 (AUS) durch die Steuereinheit 8. Damit liegt die Mengeninformation vor.
4. Bei Betätigung eines Speicherplatzelements SP (SP1, SP2, SP3, ...) wird die Mengeninformation in Zuordnung zum betätigten Speicherplatzelement SP (SP1, SP2, SP3, ...) gespeichert und damit der Lernmodus beendet (Lernende, im folgenden auch als L_{E} abgekürzt).

Die so gelernte Flüssigkeitsmenge kann in einem Dosiermodus beliebig reproduziert werden, etwa durch folgende alternativen Bedienoperationen:
- Einfaches Betätigen des Speicherplatzelements SP (SP1, SP2, SP3, ...), das der gewünschten gelernten Flüssigkeitsmenge zugeordnet ist.
   Daraufhin öffnet die Steuereinheit 8 das Absperrorgan 7 und schließt es nach Durchlauf der der gespeicherten Mengeninformation entsprechenden Flüssigkeitsmenge automatisch.
   Diese Dosierart ist besonders vorteilhaft, da eine Bedienungsperson nur eine einzige Bedienoperation vornehmen muß.
- Alternativ dazu kann zuerst das Speicherplatzelement SP (SP1, SP2, SP3, ...) betätigt werden, wodurch der Dosiermodus bei der Steueinheit 8 initiiert wird, und zwar in Zuordnung zu der betreffenden gewünschten gelernten Flüssigkeitsmenge. Das Öffnen des Absperrorgans 7 erfolgt dann durch nachfolgende Betätigung der Betätigungseinrichtung 5. Das Schließen des Absperrorgans erfolgt wiederum nach Durchlauf der der gespeicherten Mengeninformation entsprechenden Flüssigkeitsmenge automatisch.

Die erfindungsgemäße Vorrichtung, die ein lernendes Dosiersystem darstellt, speichert also die entsprechend von einer Bedienungsperson vordosierte Menge in einer geeigneten, wieder abrufbaren Form, ohne daß es auf Seiten der Bedienungsperson bzw. auf der Vorrichtungsseite erforderlich wäre, irgendeine numerische Information (Volumen, Masse, Zeit, etc.) einzugeben.

Es ist folglich nicht erforderlich, daß die Bedienungsperson weiß, welches Volumen oder welche Masse an Flüssigkeit im Lernmodus gespeichert wurde und im Dosiermodus wieder reproduzierbar ist, da keine derartige Information eingegeben werden muß. Der Lernmodus bzw. Lernbeginn kann nicht nur durch Betätigung der Speichereingabeeinrichtung 9, also des Speicherbefehlselements M oder eines Speicherplatzelementes SP (SP1, SP2, SP3, ...), sondern auch durch Betätigung der Betätigungseinrichtung 5 (EIN) initiiert werden.

Dadurch und durch verschiedene mögliche Abfolgen (Sequenzen) der Betätigung dieser Bedienelemente (5, M, SP) zu Lernbeginn und zu Lernende ergeben sich im Rahmen der vorliegenden Erfindungskonzeption zahlreiche funktionelle Kombinationen von Betätigungen, die durch entsprechende softwaremäßige Auslegung der Steuereinheit 8 - und erforderlichenfalls auch eines *"*intelligenten*"* Bedientableaus 12 - realisierbar sind.

Ein großer Teil dieser möglichen Kombinationen ist in Tabelle 1 aufgelistet. Diese Liste enthält besonders typische Kombinationen von Betätigungen, ist entsprechend also keine erschöpfende Auflistung. Tabelle 1 stellt eine digitale Funktionstabelle dar, in der *"*0*"* keine Betätigung und *"*1*"* die Betätigung des zugehörigen Betätigungselementes bedeuten.

**Tabelle 1**

| Betätigung(en) | | | | | |
|---|---|---|---|---|---|
| zu Lernbeginn | | | zu Lernende | | |
| (5) | (M) | (SP) | (5) | (M) | (SP) |
| 0 | 1 | 0 | 0 | 0 | 1 |
| 0 | 1 | 0 | 1 | 0 | 1 |
| 0 | 0 | 1 | 0 | 1 | 0 |
| 0 | 0 | 1 | 0 | 1 | 1 |
| 0 | 0 | 1 | 1 | 1 | 0 |
| 0 | 0 | 1 | 1 | 1 | 1 |
| 0 | 1 | 1 | 1 | 0 | 0 |
| 1 | 1 | 0 | 0 | 0 | 1 |
| 1 | 1 | 0 | 1 | 0 | 1 |
| 1 | 0 | 1 | 0 | 1 | 0 |
| 1 | 0 | 1 | 1 | 1 | 0 |
| 1 | 1 | 1 | 1 | 0 | 0 |
| 1 | 0 | 0 | 0 | 1 | 1 |
| 1 | 0 | 0 | 1 | 1 | 1 |

Da Tabelle 1 eine Funktionstabelle darstellt, beinhalten zwei *"*1*"* oder drei *"*1*"* in einer Zeile bei Lernbeginn und/oder Lernende keine Reihenfolgeinformation. So beinhaltet beispielsweise die Kombination *"*1 1 0*"* in Zeile 8 der Tabelle 1 (Lernbeginn) die beiden Bediensequenzen
(5) → (M)
und
(M) → (5)
und die Kombination *"*1 1 1*"* von Zeile 12 (Lernbeginn) die Bediensequenzen
(5) → (M) → (SP)
(5) → (SP) → (M)
(M) → (5) → (P)
(M) → (SP → (5)
(SP) → (M) → (5)
(SP → (5) → (M).

Die Pfeile deuten jeweils die Abfolgerichtung an: *"*(5) → (M)*"* bedeutet entsprechend: Zuerst Betätigung von (5), dann von (M).

In Tabelle 2 sind die Bediensequenzen dargestellt, die sich aus Tabelle 1 ergeben. Auch Tabelle 2 stellt folglich keine erschöpfende Auflistung der möglichen Bediensequenzen dar.

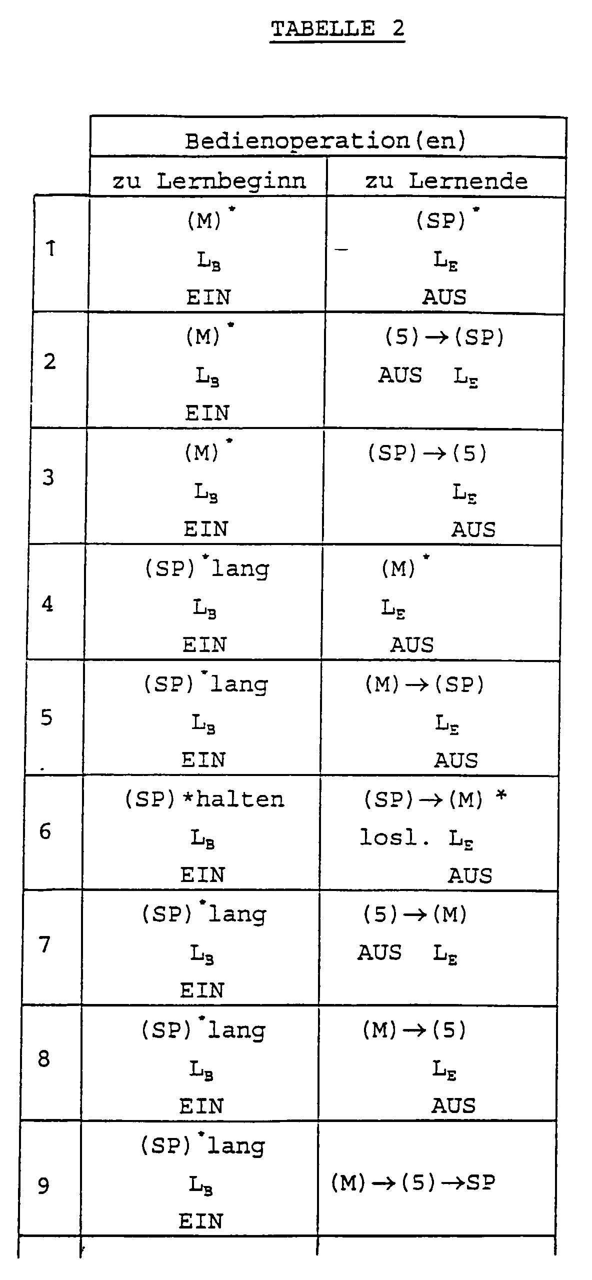

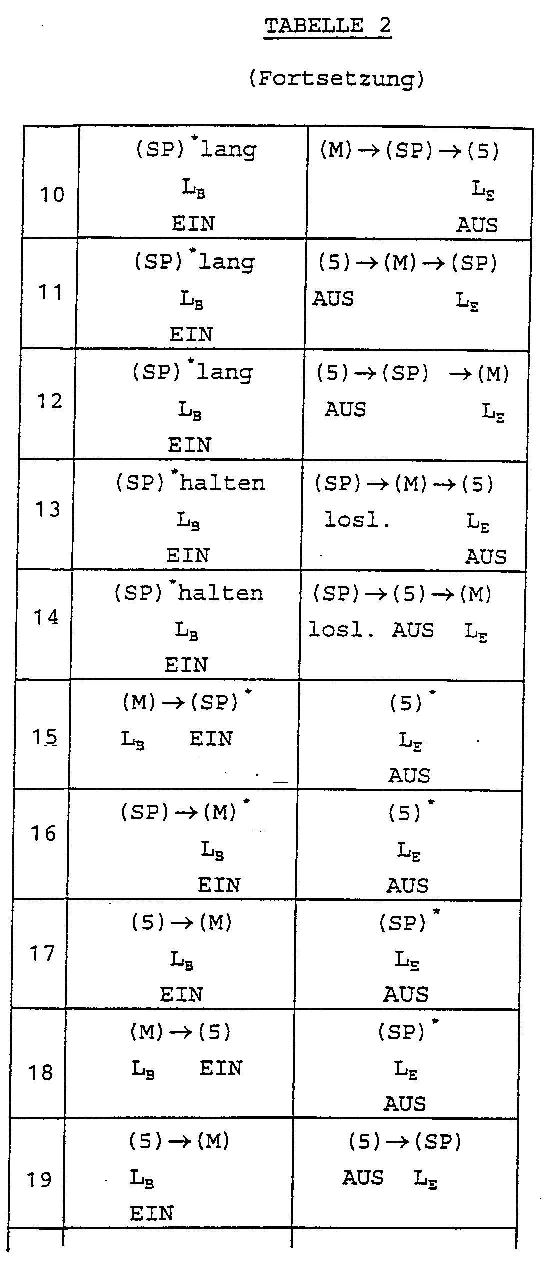

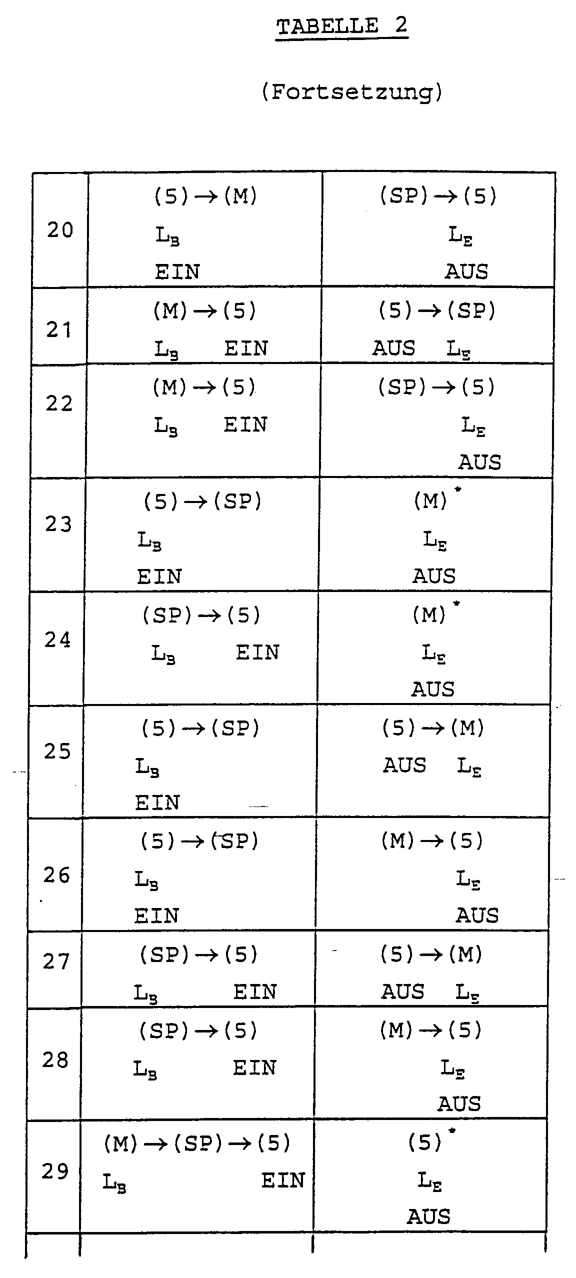

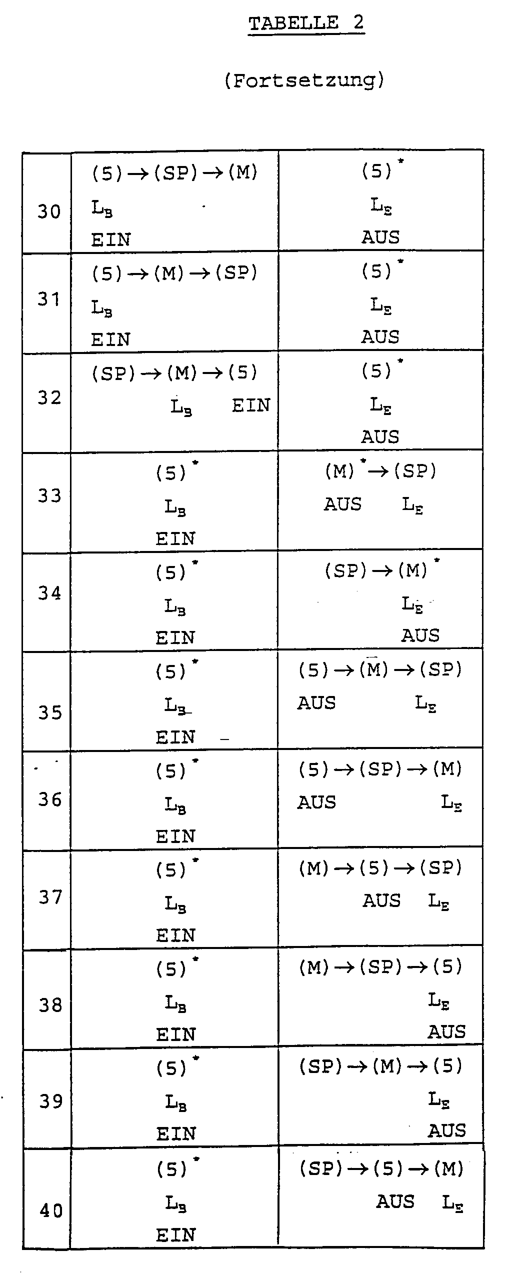

In Tabelle 2 (und den folgenden Erläuterungen) bedeuten:
- L_{B}: den Beginn des Lernmodus,
- L_{E}: das Ende des Lernmodus,
- EIN: das Öffnen des Absperrorgans (7),
- AUS: das Schließen des Absperrorgans (7),
- →: die Abfolge der Bedienoperationen und
- ∗: eine Doppelfunktion des betreffenden Eingabeelements, d.h., die ihm unmittelbar zugeordnete Funktion (1. Funktion) sowie eine weitere Funktion (2. Funktion).

Die in Tabelle 2 aufgelisteten typischen Kombinationen von Betätigungen sind unmittelbar verständlich, da sie Abfolgen der angegebenen Bedienoperationen darstellen.

Zur weiteren Erläuterung werden nachstehend einige Beispiele für in Tabelle 2 enthaltene Betätigungssequenzen und die entsprechenden Funktionen angegeben.

### Beispiel gemäß Tabelle 2, Zeile 19:

### Lernbeginn (L_{B}):

Durch Betätigen von (5) wird das Absperrorgan 7 geöffnet (EIN). Die Steuereinheit 8 ist so ausgelegt, daß bei Betätigung von (5) die Mengeninformation erfaßt und zwischengespeichert wird. Die nachfolgende Betätigung von (M) bestätigt die Speicherung oder veranlaßt die endgültige Speicherung.

### Lernende (L_{E}):

Die Betätigung von (5) veranlaßt die Steuereinheit 8 zum Schließen des Absperrorgans 7 (AUS). Die Betätigung von (SP) führt zur Abspeicherung der vorliegenden Mengeninformation in Zuordnung zu dem gewählten Speicherplatzelement (SP) (z.B. SP2).

### Beispiel gemäß Tabelle 2, Zeile 20:

### Lernbeginn (L_{B}):

Hier gilt das gleiche wie im Beispiel gemäß Tabelle 2, Zeile 19.

### Lernende (L_{E}):

Die Betätigung von (SP) veranlaßt die Steuereinheit 8, die Mengeninformation (die zu diesem Zeitpunkt noch nicht vorliegt) einem bestimmten, gewählten Speicherplatzelement (SP) (z.B. SP2) zuzuordnen. Die anschließende Betätigung von (5) veranlaßt die Steuereinheit 8, das Absperrorgan 7 zu schließen (AUS). Damit liegt die abzuspeichernde Mengeninformation vor, nach deren Abspeicherung der Lernmodus beendet wird.

### Beispiel gemäß Tabelle 2, Zeile 21:

### Lernbeginn (L_{B}):

Die Betätigung von (M) signalisiert der Steuereinheit 8, daß die zwischen dem anschließend veranlaßten Öffnen (EIN) und dem darauffolgenden Schließen (AUS) des Absperrorgans 7 durchgeflossene Fluidmenge als Mengeninformation gespeichert werden soll.

Die Betätigung von (5) veranlaßt das Öffnen des Absperrorgans 7 (EIN).

### Lernende (L_{E}):

Durch Betätigung von (5) wird das Absperrorgan 7 geschlossen (AUS). Die Betätigung von (SP) führt zur Abspeicherung der vorliegenden Mengeninformation in Zuordnung zu einem gewählten Speicherplatzelement (SP) (z.B. SP2).

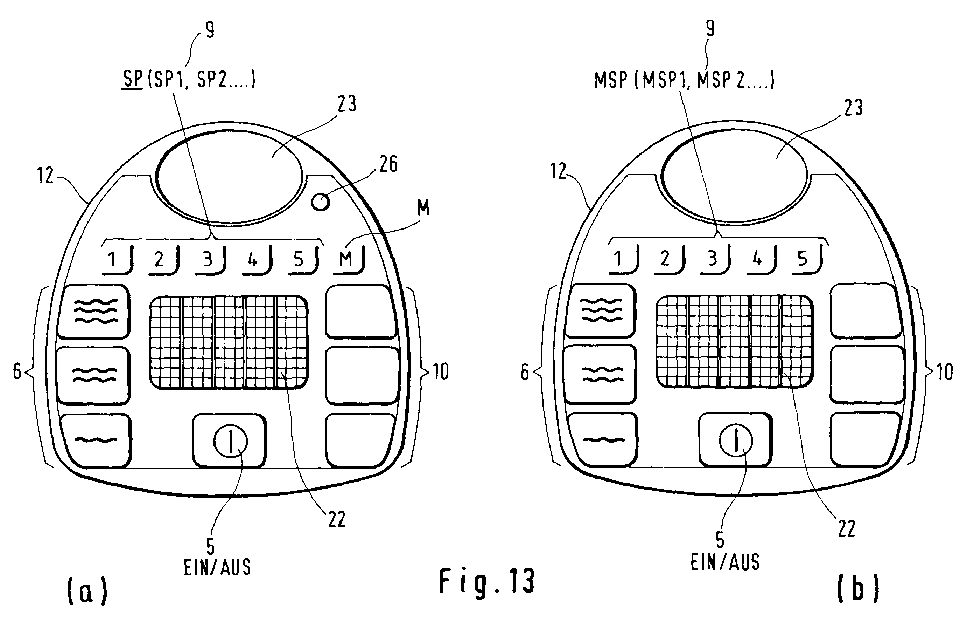

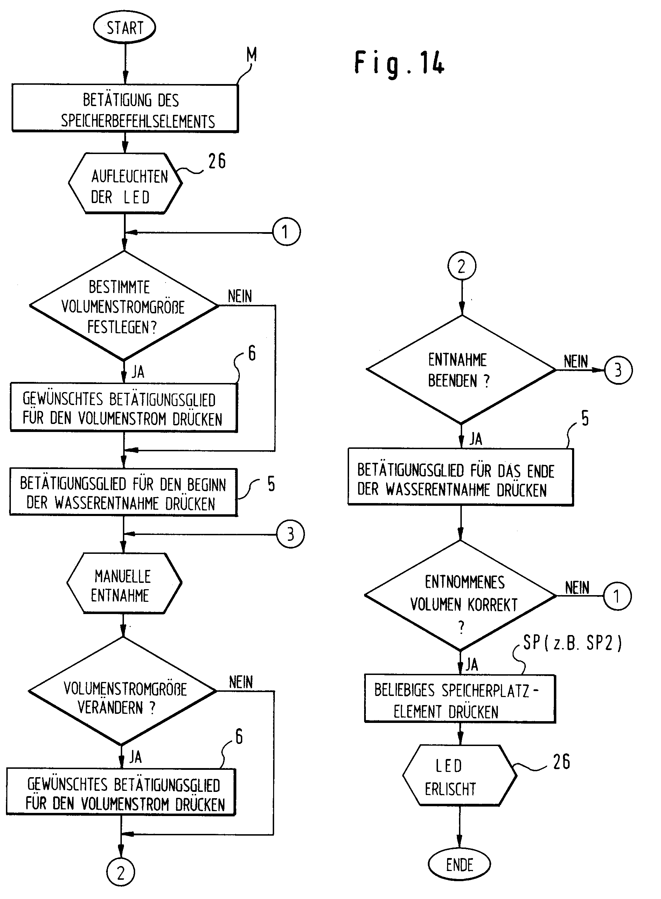

Diese Bediensequenz, und damit die zugehörige funktionelle Auslegung der Vorrichtung und insbesondere die softwaremäßige Auslegung der Steuereinheit 8, ist erfindungsgemäß besonders vorteilhaft, wie später unter Bezug auf die Fig. 13 und 14 weiter erläutert wird.

### Beispiel gemäß Tabelle 2, Zeile 22:.

### Lernbeginn (L_{B}):

Hier gilt das gleiche wie im Beispiel gemäß Tabelle 2, Zeile 21.

### Lernende (L_{E}):

Hier gilt das gleiche wie im Beispiel gemäß Tabelle 2, Zeile 20.

Auch diese Variante ist erfindungsgemäß vorteilhaft.

### Beispiel gemäß Tabelle 2, Zeile 25:

### Lernbeginn (L_{B}):

Durch Betätigung von (5) wird das Absperrorgan 7 geöffnet (EIN), und der Lernmodus beginnt. Durch die anschließende Betätigung von (SP) wird die zu lernende Mengeninformation einem der Speicherplatzelemente (SP) (z.B. SP2) zugeordnet.

### Lernende (L_{E}):

Durch Betätigung von (5) wird das Absperrorgan 7 geschlossen (AUS). Durch die anschließende Betätigung des Speicherbefehlselements (M) wird die Mengeninformation in Zuordnung zu dem gewählten Speicherplatzelement (SP) (z.B. SP2) abgespeichert und der Lernmodus beendet.

### Beispiel gemäß Tabelle 2, Zeile 26:

### Lernbeginn (L_{B}):

Hier gilt das gleiche wie in dem vorhergehenden Beispiel gemäß Tabelle 2, Zeile 25.

### Lernende (L_{E}):

Die Betätigung von (M) signalisiert der Steuereinheit 8, daß die (zu diesem Zeitpunkt noch nicht vorliegende) Mengeninformation in Zuordnung zu dem gewählten (SP) (z.B. SP2) gespeichert werden soll.
Die anschließende Betätigung von (5) führt zum Schließen des Absperrorgans 7 (AUS), zur Abspeicherung der Mengeninformation in Zuordnung zu dem gewählten (SP) (z.B. SP2) und zur Beendigung des Lernmodus.

### Beispiel gemäß Tabelle 2, Zeile 27:

### Lernbeginn (L_{B}):

Die Betätigung von (SP) initiiert den Lernmodus und veranlaßt die Steuereinheit 8 zur Zuordnung der zu lernenden Mengeninformation zu dem gewählten (SP) (z.B. SP2). Das nachfolgende Betätigen von (5) führt zum Öffnen des Absperrorgans 7 (EIN).

### Lernende (L_{E}):

Die Betätigung von (5) führt zum Schließen des Absperrorgans 7 (AUS). Damit liegt die Mengeninformation vor, die aufgrund der anschließenden Betätigung von (M) in Zuordnung zu dem gewählten (SP) (z.B. SP2) abgespeichert wird. Nach erfolgter Speicherung wird der Lernmodus beendet.

### Beispiel gemäß Tabelle 2, Zeile 28:

### Lernbeginn (L_{B}):

Hier gilt das gleiche wie in dem vorhergehenden Beispiel gemäß Zeile 27.

### Lernende (L_{E}):

Hier gilt das gleiche wie im Beispiel gemäß Tabelle 2, Zeile 26.

Das Symbol *"***"* tritt, wie Tabelle 2 zeigt, nur auf, wenn zu Lernbeginn oder Lernende nur eine einzige Bedienoperation vorgesehen ist, oder wenn (5) nicht vorkommt.

Da zu Lernbeginn im Lernmodus sowohl die Erfassung und Speicherung der Mengeninformation initiiert als auch das Absperrorgan 7 geöffnet werden muß und zu Lernende die ermittelte Mengeninformation gespeichert und das Absperrorgan 7 wieder geschlossen werden muß, müssen also jeweils diese beiden Funktionen bei einer derartigen Auslegung des erfindungsgemäßen Systems durch die vorzunehmende einzige Bedienoperation ausgelöst werden.

### Beispiel gemäß Tabelle 2, Zeile 1:

### Lernbeginn (L_{B}):

Nur Betätigen von (M): Das System geht in den Lernmodus (Lernbeginn LB) (unmittelbar zugeordnete 1. Funktion), und das Absperrorgan 7 wird geöffnet (EIN) (2. Funktion).

### Lernende (L_{E}):

Nur Betätigen von (SP): Das Absperrorgan 7 wird geschlossen (AUS) (2. Funktion), und die Mengeninformation wird gespeichert (1. Funktion), wobei zugleich der Lernmodus beendet wird.

### Beispiel gemäß Tabelle 2, Zeile 33:

### Lernbeginn (L_{B}):

Nur Betätigen der Betätigungseinrichtung (5). Die Steuereinheit 8 ist in diesem Fall so ausgelegt, daß bei jeder Betätigung der Betätigungseinrichtung (5), die zum Öffnen des Absperrorgans 7 führt (1. Funktion), auch eine Erfassung und Zwischenspeicherung der Mengeninformation erfolgt (2. Funktion).

### Lernende (L_{E}):

Durch Betätigen von (M) wird das Absperrorgan 7 geschlossen (2. Funktion). Ferner wird die Abspeicherung der vorliegenden Mengeninformation initiiert (1. Funktion), die bei Betätigung des Speicherplatzelements (SP) in Zuordnung zum gewählten Speicherplatzelement (SP1, SP2, SP3, ...) erfolgt. Das Lernende L_{E} folgt entsprechend auf die Betätigung von (SP).

Analog sind auch die übrigen mit dem Sternchensymbol *"***"* bezeichneten Einzelbetätigungen der Tabelle 2 zu verstehen.

Wo keine zusätzlichen Angaben vorliegen, bedeuten die Betätigungen *"*(5)*"*, *"*(M)*"* und *"*(SP)*"* eine kurze Betätigung des Betätigungselements, z.B. ein kurzes Drücken der zugeordneten Taste.

Bei bestimmten Kombinationen, vor allem bei *"***"*-Funktionen, also Doppel- bzw. Mehrfachfunktion des betreffenden Betätigungselements, kann es günstig sein, ein über die Zeitspanne eines kurzen Betätigens hinausgehendes längeres Betätigen während einer vorgegebenen Zeitdauer (z.B. über eine Sekunde oder mehr), ein dauerndes Halten während einer vorgegebenen Zeit und späteres Loslassen oder eine Mehrfachbetätigung (z.B. zweimaliges Drücken der betreffenden Taste) vorzusehen. Hierdurch wird mit dem betreffenden Eingabeelement nicht nur die unmittelbar zugeordnete Funktion, sondern, aufgrund der Zusatzinformation durch längeres Betätigen, Halten oder Mehrfachbetätigung, auch die 2. Funktion (und gegebenenfalls weitere Funktionen) ausgelöst.

Ein Beispiel hierfür ist aus Tabelle 2, Zeile 4, ersichtlich:

### Lernbeginn (L_{B}):

Ein kurzes Drücken der Taste (SP) führt zum Dosiermodus und zum Start des Dosierens der gespeicherten Flüssigkeitsmenge durch Öffnen des Absperrorgans 7 und zum automatischen Schließen nach Dosierung der gewählten gespeicherten Menge.

Ein längeres Betätigen von (SP) (oder Halten oder Mehrfachbetätigung) initiiert dagegen den Lernmodus, einschließlich der Zuordnung der zu speichernden Mengeninformation zu einem bestimmten Speicherplatzelement (SP) (SP1, SP2, SP3, ...) (1. Funktion), und führt zum Öffnen des Absperrorgans 7 (EIN) (2. Funktion).

### Lernende (L_{E}):

Betätigen des Speicherbefehlselements (M) führt zum Schließen des Absperrorgans 7 (2. Funktion) und zur Abspeicherung der Mengeninformation (1. Funktion).

Ein weiteres Beispiel für die Verwendung des Parameters Zeit als Zusatzinformation zeigt Tabelle 2, Zeile 6:

In diesem Fall ist die Steuereinheit 8 so ausgelegt, daß zu Lernbeginn das Halten des Speicherplatzelements (SP) zur Initiierung des Lernmodus, einschließlich der Speicherplatzzuordnung (1. Funktion) und zum Öffnen des Absperrorgans 7 (EIN) (2. Funktion) führt, das so lange geöffnet bleibt, bis die Betätigung des Speicherplatzelements (SP) beendet wird, also beispielsweise eine Taste (SP) wieder losgelassen wird. Die Betätigung von (M) (*-Doppelfunktion) führt dann zum Schließen des Absperrorgans 7 (1. Funktion) und zur Abspeicherung der Mengeninformation (2. Funktion). Auch der Dosiermodus kann durch längeres Betätigen oder Halten der Betätigungseinrichtung 5 initiiert werden. Zusätzlich zu den bereits oben genannten beiden Alternativen der Initiierung des Dosiermodus besteht z.B. eine dritte Möglichkeit in folgender Betätigungssequenz :
(5) → (SP)
lang .

Während durch kurzes Betätigen von (5) die normale *"*Wasserhahnfunktion*"* der Vorrichtung resultiert, erkennt die Steuereinheit 8 bei längerem Betätigen bzw. längerem Halten von (5), daß der Dosiermodus initiiert werden soll. Bei anschließendem Betätigen von (SP) (SP1, SP2, SP3, ...) erfolgt dann das Öffnen des Absperrorgans 7, das nach Ausfließen der (SP) zugeordneten Flüssigkeitsmenge automatisch wieder geschlossen wird.

Im Hinblick auf die obigen Erläuterung ist der Fachmann ohne weiteres in der Lage, die Steuereinheit 8 so auszulegen bzw. die zugehörige Software so zu gestalten, daß die zu den angegebenen Bedienoperationen gehörenden Verfahrensschritte bzw. Vorrichtungsfunktionen realisiert werden.

Nach einer vorteilhaften Ausführungsform der Erfindung kann im Lernmodus wie auch im Dosiermodus der Durchsatz an Fluid (Volumen/Zeit, V̇; Masse/Zeit, Ṁ) innerhalb vorgegebener Grenzen gewählt werden. Diese zusätzliche Funktion entspricht dem mehr oder weniger weiten *"*Aufdrehen*"* eines Wasserhahns oder dem mehr oder weniger starken Öffnen einer Einhebel-Auslaufarmatur zur Erzielung eines stärkeren oder schwächeren Auslaufstrahls.

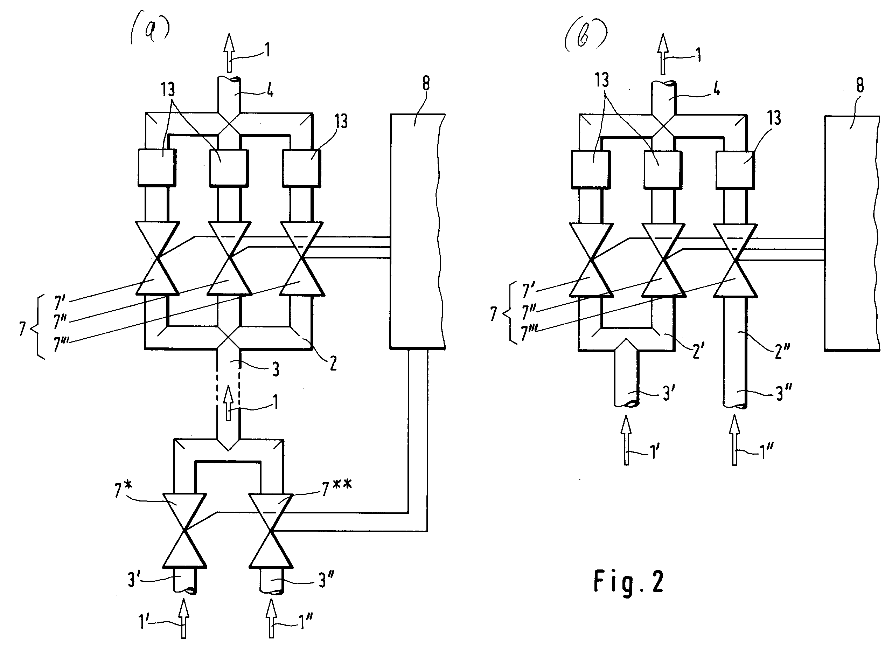

Die Fig. 2(a) und (b) zeigen zwei vorteilhafte Ausführungsformen des Absperrorgans 7 unter Verwendung von Magnetventilen, die wegen der einfachen elektrischen Ansteuerbarkeit und der Betriebssicherheit sehr günstig sind. Die Anordnung von Fig. 2(a) stellt ein Strömungsschalterregister aus 3 parallelgeschalteten und von der Steuereinheit 8 unabhängig ansteuerbaren Absperrorganen 7*'*, 7*''*, 7*'''* dar, die Magnetventile sind.

Die Magnetventile 7*'*, 7*''*, 7*'''* weisen einlaßseitig eine gemeinsame Fluidleitung 2 auf, die mit einem gemeinsamen Fluideinlaß 3 in Verbindung steht, in den das Fluid 1 eingespeist wird. Die einzelnen Magnetventile münden in einen gemeinsamen Fluidauslaß 4. Derartige Strömungsschalterregister sind dem Fachmann als solche bekannt. Durch unterschiedliche Ansteuerung der drei Magnetventile ergeben sich bei nicht zeitversetztem Betrieb der einzelnen Magnetventile die in der nachstehenden Tabelle 3 dargestellten Kombinationen und damit Durchsätze an Fluid:

**Tabelle 3**

| ZUSTAND | 7*'* | 7*''* | 7*'''* |
|---|---|---|---|
| AUS | 0 | 0 | 0 |
| EIN | 1 | 0 | 0 |
| | 0 | 1 | 0 |
| | 0 | 0 | 1 |
| | 1 | 1 | 0 |
| | 1 | 0 | 1 |
| | 0 | 1 | 1 |
| | 1 | 1 | 1 |

Besonders vorteilhaft weisen die Magnetventile 7*'*, 7*''*, 7*'''* unterschiedliche Strömungsquerschnitte und damit Durchsätze in Offenstellung auf, um die in der obigen Funktionstabelle aufgeführten Kombinationen zur Erzielung gestaffelter Durchsätze voll ausnützen zu können. Den einzelnen Magnetventilen 7*'*, 7*''*, 7*'''* sind Durchflußregler 13 nachgeschaltet, die den Durchsatz in den jeweiligen Auslaßleitungen der Magnetventile konstanthalten, wodurch die Genauigkeit der Reproduzierung der verschiedenen Gesamtdurchsätze des Absperrorgans 7 erhöht wird.

Im unteren Teil von Fig. 2 (a) sind, entsprechend einer fakultativen Maßnahme, zwei weitere Magnetventile 7*, 7** dargestellt, die einlaßseitig einen Fluideinlaß 3' bzw. 3'' für ein Fluid 1' bzw. 1'' aufweisen und auslaßseitig mit einem gemeinsamen Fuidauslaß verbunden sind, der, wie gestrichelt dargestellt ist, den Fluideinlaß 3 der zuvor beschriebenen Anordnung für das Fluid 1 bilden kann. Die Magnetventile 7*, 7** sind ebenfalls von der Steuereinheit 8 gesteuert.
Die Gesamtanordnung von Fig. 2 (a) stellt somit eine Parallel-Reihenschaltung von Magnetventilen dar.

Die Fluids 1', 1'' können zwei von der Art her unterschiedliche Fluids oder gleiche Fluids mit einer unterschiedlichen Eigenschaft, insbesondere zwei Fluids unterschiedlicher Temperatur, darstellen (z.B. Fluid 1' : kalt; Fluid 1'' : heiß).

Durch entsprechende Ansteuerung der Magnetventile 7*, 7** läßt sich eine einfache Mischerfunktion erzielen, wobei das resultierende Mischfluid 1 (das bei der dargestellten Anordnung z.B. kalt, warm oder heiß sein kann) in das Absperrorgan 7 eingespeist wird. Vor allem bei gleichbleibender Versorgung mit den Fluids 1', 1'' (druckkonstant, durchsatzkonstant, temperaturkonstant) ist diese Anordnung wegen ihres einfachen Aufbaus und der einfachen Ansteuerung vorteilhaft.
Selbstverständlich können auch mehrere derartige Anordnungen von Magnetventilen 7*, 7** vorgesehen sein, und zwar auch bei der im folgenden erläuterten Anordnung von Fig. 2 (b).

Das in Fig. 2(b) dargestellte Strömungsschalterregister entspricht dem von Fig. 2(a) mit dem Unterschied, daß zwei der Magnetventile (7*'*, 7*''*) einlaßseitig an eine gemeinsame Fluidleitung 2*'* und damit einen gemeinsamen Fluideinlaß 3*'* für ein Fluid 1*'* angeschlossen sind, während das dritte Magnetventil 7*'''* über eine Fluidleitung 2*''* mit einem unabhängigen Fluideinlaß 3*''* für ein zweites Fluid 1*''* verbunden ist.
Strömungsschalterregister dieses Typs, die auch eine größere Anzahl Magnetventile als dargestellt aufweisen können, eignen sich zum gesteuerten Schalten und gleichzeitigen Mischen zweier Fluids 1*'*, 1*''*, die z.B. ein und dieselbe Flüssigkeit mit unterschiedlicher Temperatur sein können. Durch diese Anordnung kann die erfindungsgemäße Vorrichtung nicht nur verschiedene Durchsätze an Fluid schalten, sondern gleichzeitig auch Mischerfunktion aufweisen.

Das Absperrorgan 7 kann auch mit einer Durchflußsteuereinrichtung oder Durchflußregeleinrichtung kombiniert werden, um wählbare Fluiddurchsätze zu realisieren. Solche Einrichtungen können stromauf oder stromab vom Absperrorgan 7 vorgesehen werden. Vorzugsweise werden hierfür kolbengesteuerte Einrichtungen verwendet.

Die Speichereingabeeinrichtung 9, die in Fig. 1 dargestellt ist, besteht aus einem Speicherbefehlselement M und einem und bevorzugt mehreren Speicherplatzelementen SP (SP1, SP2, SP3, ...).

Im Rahmen der Erfindungskonzeption können die beiden Eingabefunktionen *"*(M)*"* (Speicherbefehl) und *"*(SP)*"* (Speicherplatzzuordnung/Speicherplatzansprechen) der Speichereingabeeinrichtung 9 auch zu einer Gesamtfunktion zusammengefaßt sein, wodurch sich eine apparative wie auch bedienungsmäßige Vereinfachung ergibt.

Das nachstehende Schema erläutert diese beiden Alternativen, wobei Alternative 1 in der Vorrichtung von Fig. 1 verwirklicht ist.

### Speichereingabeeinrichtung 9 :

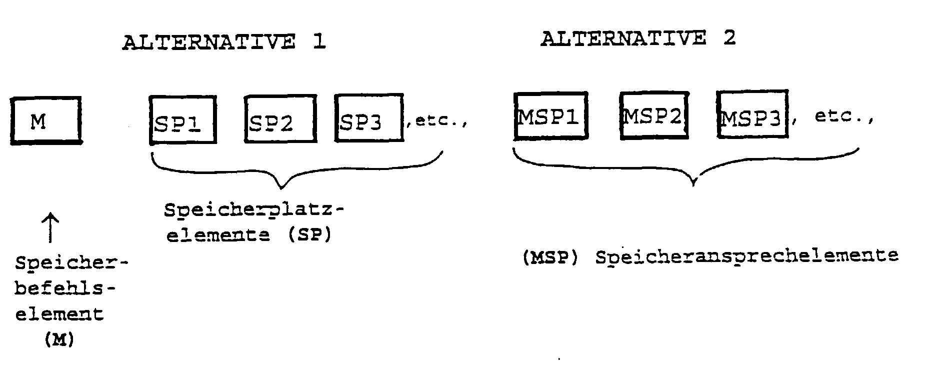

Die Speicheransprechelemente (MSP) weisen jeweils zugleich die Funktion des Speicherbefehlselements (M) und eines Speicherplatzelements (SP) auf. Es ist bei Alternative 2 also jeweils nur ein Betätigungselement (Eingabetaste) zu betätigen.

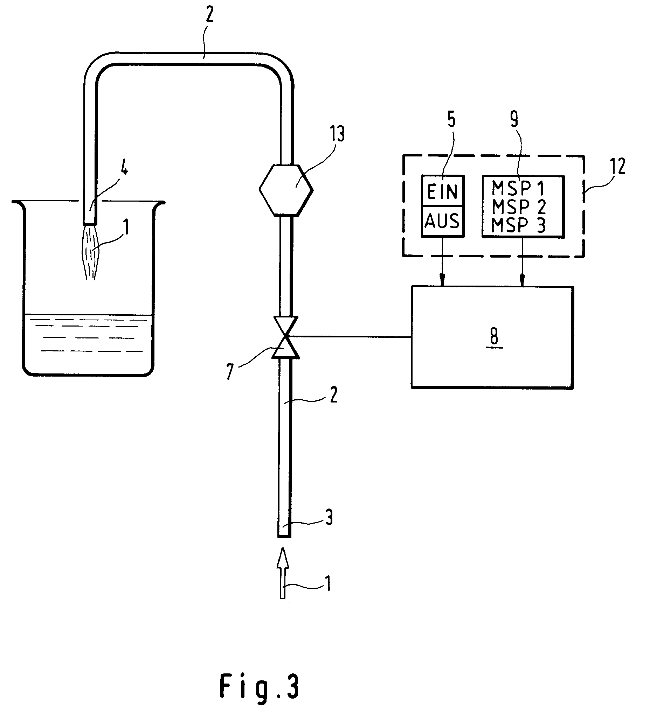

Eine erfindungsgemäße Vorrichtung, die der Alternative 2 entspricht, ist in Fig. 3 dargestellt. Gleiche Bezugszeichen bezeichnen gleiche Elemente wie in den Fig. 1 und 2. In der Fluidleitung 2 ist stromab vom Absperrorgan 7 ein Durchflußregler 13 angeordnet, der den Durchsatz des Fluids bei geöffnetem Absperrorgan 7 konstanthält.

Aufgrund der Zusammenfassung der beiden Funktionen *"*(M)*"* und *"*(SP)*"* ergeben sich bei der Alternative 2 von Fig. 3 für den Lernmodus die in der nachstehenden Tabelle 4 zusammengefaßten typischen funktionellen Kombinationen von Betätigungen der Betätigungseinrichtung 5 und der Speichereingabeeinrichtung 9 (MSP).

**Tabelle 4**

| Betätigung(en) | | | |
|---|---|---|---|
| zu Lernbeginn | | zu Lernende | |
| (5) | (MSP) | (5) | (MSP) |
| 1 | 0 | 0 | 1 |
| 1 | 0 | 1 | 1 |
| 0 | 1 | 0 | 1 |
| 0 | 1 | 1 | 0 |
| 0 | 1 | 1 | 1 |
| 1 | 1 | 0 | 1 |
| 1 | 1 | 1 | 0 |
| 1 | 1 | 1 | 1 |

Wie im Fall von Tabelle 1 enthalten auch in Tabelle 4 die Zeilen, in denen sich zwei *"*1*"* befinden, keine Reihenfolgeinformation.

In Tabelle 5 sind die Bediensequenzen dargestellt, die sich aus Tabelle 4 ergeben. Auch diese Auflistung ist nicht erschöpfend.

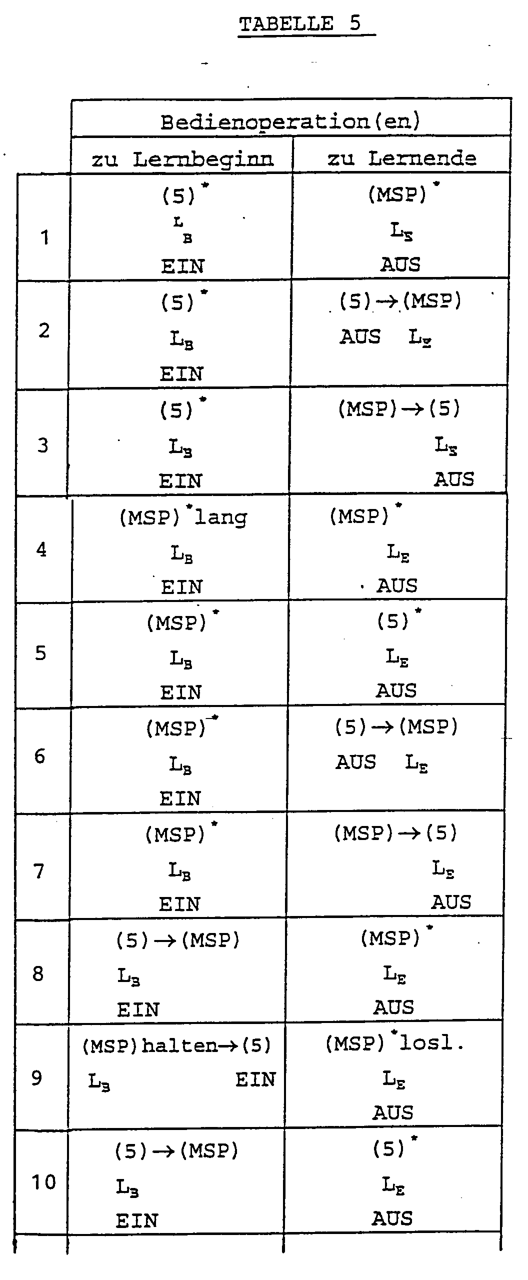

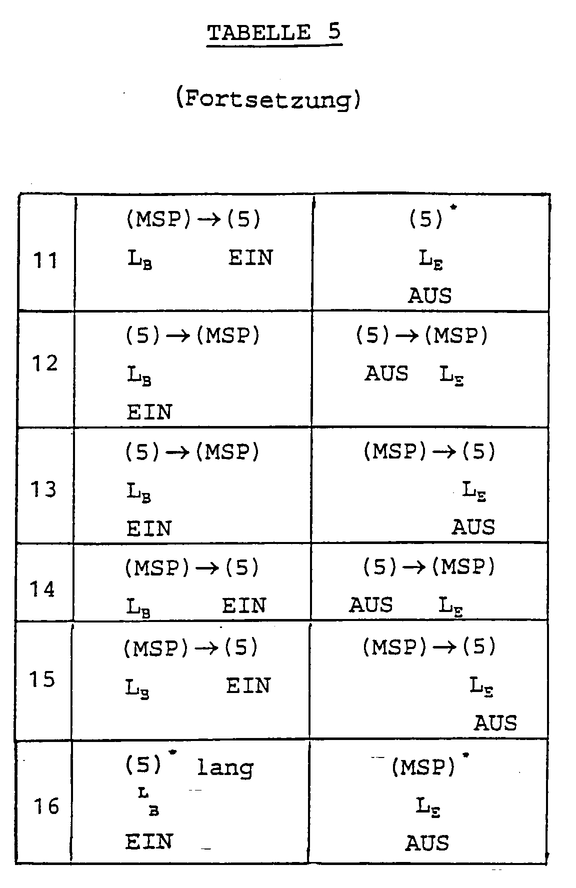

Die Abkürzungen L_{B}, L_{E}, EIN, AUS, → und * sind wie zu Tabelle 2 definiert.

Die in Tabelle 5 aufgelisteten typischen Kombinationen von Bedienoperationen gemäß der in Fig. 3 dargestellten Alternative 2 sind unmittelbar verständlich. Zur weiteren Erläuterung werden nachstehend einige Beispiele für Betätigungssequenzen und die zugeordneten Funktionen angegeben.

### Beispiel gemäß Tabelle 5, Zeile 1:

### Lernbeginn (L_{B}):

Nur Betätigung von (5). Die Steuereinheit 8 ist in diesem Fall so ausgelegt, daß bei jeder Betätigung der Betätigungseinrichtung (5), die zum Öffnen des Absperrorgans 7 führt (EIN) (1. Funktion), auch eine Erfassung und Zwischenspeicherung der Mengeninformation erfolgt (2. Funktion).

### Lernende (L_{E}):

Durch Betätigung von (MSP), im Falle mehrerer Speicheransprechelemente (MSP1, MSP2, MSP3, ...) durch Betätigung eines gewählten Speicherplatzelements (z.B. MSP2), wird das Absperrorgan 7 geschlossen (AUS) (2. Funktion). Ferner wird die Abspeicherung der vorliegenden Mengeninformation initiiert (1. Funktion). Das Lernende L_{E} tritt bei Betätigung von (MSP) mit der Abspeicherung der Mengeninformation ein.

### Beispiel gemäß Tabelle 5, Zeile 2:

### Lernbeginn (L_{B}):

Für den Lernbeginn gilt das zum vorhergehenden Beispiel gemäß Tabelle 5, Zeile 1, Gesagte.

### Lernende (L_{E}):

Durch Betätigung der Betätigungseinrichtung (5) wird das Absperrorgan 7 geschlossen (AUS). Durch die anschließende Betätigung des Speicheransprechelements (MSP) wird die Abspeicherung der vorliegenden Mengeninformation initiiert, worauf das Lernende (L_{E}) eintritt.

### Beispiel gemäß Tabelle 5, Zeile 8:

### Lernbeginn (L_{B}):

Durch Betätigung von (5) wird das Absperrorgan 7 geöffnet (EIN), und der Lernmodus beginnt. Durch das anschließende Betätigen von (MSP) wird die zu lernende Mengeninformation einem der Speicheransprechelemente (MSP) (MSP1, MSP2, MSP3, ...) (z.B. MSP2) zugeordnet.

### Lernende (L_{E}):

Die nochmalige Betätigung von (MSP) führt zunächst zum Schließen des Absperrorgans 7 (AUS) (2. Funktion) und daraufhin zur Abspeicherung der vorliegenden Mengeninformation in Zuordnung zum gewählten Speicheransprechelement (MSP) (z.B. MSP2).

### Beispiel gemäß Tabelle 5, Zeile 10:

### Lernbeginn (L_{B}):

Für den Lernbeginn gilt das zum vorhergehenden Beispiel gemäß Tabelle 5, Zeile 8, Gesagte.

### Lernende (L_{E}):

Bei Betätigung von (5) wird zunächst das Absperrorgan 7 geschlossen (AUS) (1. Funktion) und die Abspeicherung der Mengeninformation in Zuordnung zum gewählten Speicheransprechelement (MSP) (z.B. MSP2) veranlaßt.

### Beispiel gemäß Tabelle 5, Zeile 11:

### Lernbeginn (L_{B}):

Durch Betätigung von (MSP) wird der Lernmodus gestartet, wobei die Zuordnung zu einem Speicheransprechelement (MSP) (z.B. MSP2) vorliegt. Durch anschließende Betätigung von (5) wird das Absperrorgan 7 von der Steuereinheit 8 geöffnet (EIN).

### Lernende (L_{E}):

Bei Betätigung von (5) wird das Absperrorgan 7 geschlossen (AUS) (1. Funktion); daraufhin wird die Abspeicherung der nun vorliegenden Mengeninformation in Zuordnung zum gewählten Speicheransprechelement (MSP) (z.B. MSP2) veranlaßt (2. Funktion), wodurch der Lernmodus beendet wird.

### Beispiel gemäß Tabelle 5, Zeile 14:

### Lernbeginn (L_{B}):

Hier gilt das gleiche wie im vorhergehenden Beispiel gemäß Tabelle 5, Zeile 11.

### Lernende (L_{E}):

Durch Betätigung von (5) wird das Absperrorgan 7 geschlossen (AUS). Die anschließende nochmalige Betätigung des gewählten Speicheransprechelements (MSP) (z.B. MSP2) führt zur Abspeicherung der Mengeninformation in Zuordnung zum gewählten Speicheransprechelement (MSP) (z.B. MSP2).

### Beispiel gemäß Tabelle 5, Zeile 15:

### Lernbeginn (L_{B}):

Hier gilt das gleiche wie in dem Beispiel gemäß Zeile 11.

### Lernende (L_{E}):

Die nochmalige Betätigung von (MSP) führt zur Zuordnung der (zu diesem Zeitpunkt noch nicht vorliegenden) Mengeninformation zu einem gewählten Speicheransprechelement (MSP). Die Betätigung von (5) führt zum Schließen des Absperrorgans 7 (AUS) und zur Abspeicherung der nunmehr vorliegenden Mengeninformation in Zuordnung zum gewählten Speicheransprechelement (MSP) (z.B. MSP2).

### Beispiel gemäß Tabelle 5, Zeile 16:

### Lernbeginn (L_{B}):

Nur Betätigen von (5). Die Steuereinheit 8 ist so ausgelegt, daß bei jeder Betätigung von (5) während einer vorgegebenen Zeitdauer, die zum Öffnen des Absperrorgans 7 führt (EIN) (1. Funktion), auch eine Erfassung und Zwischenspeicherung der Mengeninformation erfolgt (2. Funktion).

### Lernende (L_{E}):

Für das Lernende gilt das zu dem Beispiel gemäß Tabelle 5, Zeile 1, Gesagte.

Bei der oben erläuterten und in Fig. 3 dargestellten 2. Alternative der Konzeption der Speichereingabeeinrichtung 9 wird der Dosiermodus, also das Abrufen einer gespeicherten Mengeninformation, bei jeweils entsprechender Auslegung der Steuereinheit 8, insbesondere durch folgende Bedienoperationen und zugeordnete Funktion initiiert:
1. (MSP)
   oder
2. (MSP) lang/halten
   oder
3. (MSP → (5)
   oder
4. (5) → (MSP)

Es ist im Rahmen der Erfindungskonzeption selbstverständlich, daß die z.B. softwaremäßig in der Steuereinheit 8 für den Lernmodus vorgesehenen Betätigungen von Betätigungselementen bzw. Bedienoperationen an die für den Dosiermodus wie auch die *"*normale Wasserhahnfunktion*"* vorgesehenen Betätigungen von Betätigungselementen bzw. Bedienoperationen angepaßt sein müssen. Die in den Tabellen 2 und 5 aufgelisteten Bedienoperationen für den Lernmodus bedingen eine entsprechend geeignete Wahl einer Bediensequenz im Dosiermodus. Diese Korrelation zwischen Bedienoperation(en) im Lernmodus und Bedienoperation(en) im Dosiermodus bzw. bei der normalen Ventilfunktion der Vorrichtung kann vom Fachmann leicht vorgenommen werden. Für jede konkret vorgesehene Lernmodus-Bedienoperation bzw. Bedienoperationssequenz können eine oder mehrere zugehörige und damit kompatible Bedienoperationen für den Dosiermodus und die normale Ventilfunktion gewählt werden.

In den folgenden Tabellen 6 und 7 sind typische Beispiele für diese Korrelation angegeben.

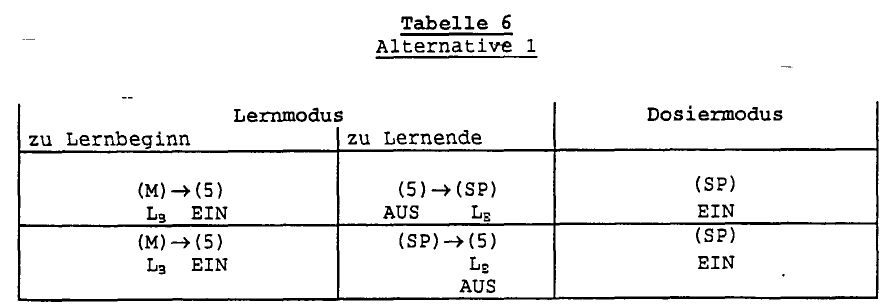

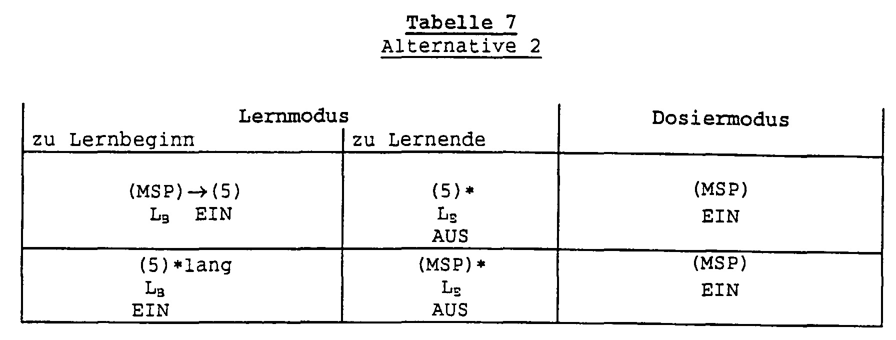

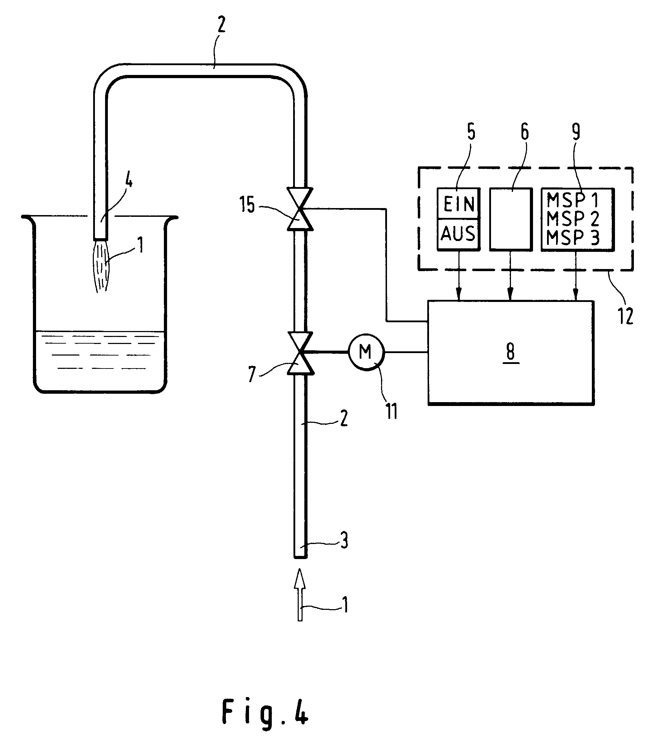

In Fig. 4 ist eine erfindungsgemäße Vorrichtung dargestellt, deren Absperrorgan 7 ein Regelorgan ist, das zwischen dem vollständig geschlossenen Zustand und dem vollständig geöffneten Zustand kontinuierlich oder schrittweise über einen Stellantrieb 11 verstellbar ist, der von der Steuereinheit 8 gesteuert ist. Das Regelorgan ist insbesondere eine Klappe, ein Schieber oder ein Ventil. Derartige Regelorgane sind dem Fachmann geläufig. Stromab vom Absperrorgan 7 ist eine Sicherheits-Absperreinrichtung 15 vorgesehen, die ebenfalls von der Steuereinheit 8 gesteuert ist. Die Sicherheits-Absperreinrichtung 15 ist bei der Vorrichtung von Fig. 4 ein Strömungsschalter und insbesondere ein Magnetventil.

Die Steuereinheit 8 ist bei der Vorrichtung von Fig. 4 so ausgebildet, daß im Lernmodus wie auch im Dosiermodus und auch bei der normalen Ventilfunktion bei Beginn eines Dosiervorgangs zuerst die Sicherheits-Absperreinrichtung 15 und anschließend das Absperrorgan 7 geöffnet und bei Beendigung eines Dosiervorgangs zuerst das Absperrorgan 7 und anschließend die Sicherheits-Absperreinrichtung 15 geschlossen werden.

Die übrigen Elemente der Vorrichtung sind gleich wie in den Fig. 1, 2 und 3 und mit den gleichen Bezugszeichen bezeichnet.

Die im Bedientableau 12 angeordneten Bedienelemente (Betätigungseinrichtung 5 und Speichereingabeeinrichtung 9) entsprechen der Anordnung von Fig. 3 und damit der oben erläuterten 2. Alternative. Zusätzlich ist jedoch noch ein Durchflußeingabeelement 6 vorgesehen, das zur Eingabe eines gewünschten Fluiddurchflusses (Fluiddurchsatzes, V̇) dient und bei Betätigung Signale an die Steuereinheit 8 abgibt, aufgrund deren das Absperrorgan 7 (z.B. im Falle eines Strömungsschalterregisters wie in Fig. 2(a) und (b)) und/oder ein dem Absperrorgan 7 vor- oder nachgeschaltetes Steuer- oder Regelorgan (Strömungsschalterregister, Regelventil), das von der Steuereinheit 8 gesteuert ist, den gewählten Durchsatz vorgibt. Das Durchflußeingabeelement 6 kann dabei z.B. im einfachsten Fall aus mehreren Tasten bestehen, denen verschiedene vorgegebene Fluiddurchsätze funktionell zugeordnet sind. Das Durchflußeingabeelement 6 kann auch aus einer einzigen Taste bzw. einem Taster bestehen, der mit einer Anzeige, z.B. mehreren Leuchtdioden, kombiniert ist, die ihrerseits verschiedenen Fluiddurchsätzen zugeordnet und von der Steuereinheit 8 angesteuert sind, wobei bei jeder Betätigung der Taste die Anzeige sequentiell in einem geschlossenen zyklischen Ablauf von einer Leuchtdiode zur nächsten springt. Eine andere vorteilhafte Möglichkeit besteht darin, das Durchflußeingabeelement 6 im Zusammenwirken mit der Steuereinheit 8 so auszubilden, daß durch mehr oder weniger langes Halten dieses Betätigungselements der Fluiddurchsatz kontinuierlich oder schrittweite verstellt und eingestellt werden kann, wobei die Verstellrichtung (Zunahme/Abnahme) und/oder der aktuelle Zustand (z.B. *"*viel*"*, *"*mittel*"*, *"*wenig*"* oder entsprechende Symbole (l/min) im Bedientableau 12 anzeigbar sind.

Die Steuereinheit 8 kann in verschiedener Weise mit dem Durchflußeingabeelement 6 zusammenwirken. Im einfachsten Fall ist die Betätigung des Durchflußeingabeelements 6 von den für den Lern- und Dosiermodus sowie die normale Ventilfunktion erforderlichen Betätigungen unabhängig und wird vor der Betätigung der Betätigungseinrichtung 5 und/oder der Speichereingabeeinrichtung 9 vorgenommen (unabhängige Vorwahl des Fluiddurchflusses).

Es kann auch vorgesehen sein, das Durchflußeingabeelement 6 in die Betätigungssequenzen der Betätigungselemente 5 und 9 mit einzubeziehen. Für die Betätigung des Durchflußeingabeelements 6 ergeben sich daraus zahlreiche Bediensequenzen, von denen einige typische in den Tabellen 8 und 9 dargestellt sind.

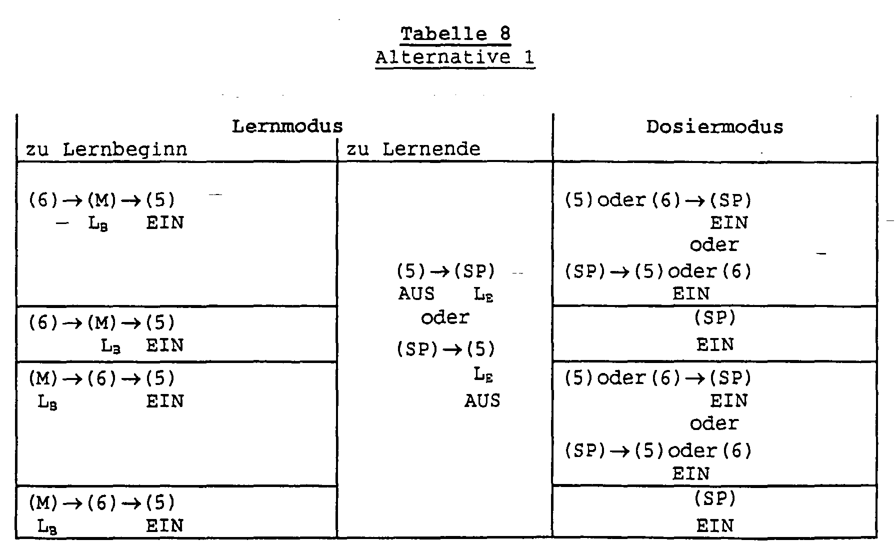

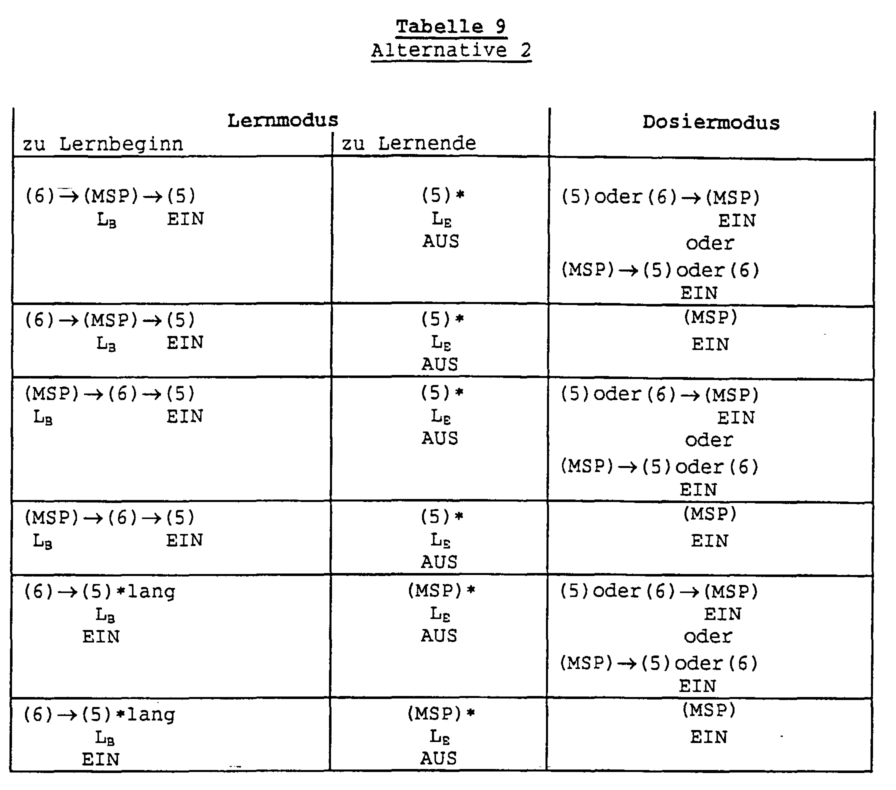

Die obigen Tabellen 8 und 9 zeigen beispielhaft, wie die Betätigung des Durchflußeingabeelements 6 und die zugehörigen Funktionen in die Bediensequenz integriert werden können.

Dabei ist es sehr vorteilhaft, im Lerumodus auch die der gewählten Durchflußmenge (Durchsatz) entsprechende Durchflußinformation gemäß der Betätigung des Durchflußeingabeelements 6 in Zuordnung zur Mengeninformation ebenfalls zu speichern, so daß im Dosiermodus keine zusätzliche Eingabe eines Durchflusses durch Betätigung von (6) erforderlich ist. Dies geht aus Tabelle 8, Zeilen 2 und 4, und Tabelle 9, Zeilen 2, 4 und 6, hervor.

Die Abkürzung *"*L_{B}*"* bezieht sich nach der oben gegebenen Definition auf den Beginn des auf die Mengeninformation bezogenen Lernvorgangs. Bei den Bediensequenzen der Tabellen 8 und 9, bei denen im Lernmodus zu Lernbeginn (6) als erstes Betätigungselement betätigt wird (Tabelle 8, Zeilen 1 und 2, Tabelle 9, Zeilen 1, 2, 5 und 6), erfolgt der diesbezügliche Lernbeginn, der sich auf den gewählten Durchfluß bezieht, mit der Betätigung von (6).

Nach einer vorteilhaften Ausführungsform der erfindungsgemäßen Vorrichtung ist dem Durchflußeingabeelement 6 zusätzlich zur Eingabe einer Durchflußinformation auch die EIN-Funktion und gegebenenfalls auch die AUS-Funktion der Betätigungseinrichtung 5 zugeordnet. Dadurch wird eine Bedienungsvereinfachung erzielt.

In den nachfolgenden Tabellen 10 und 11 sind einige typische derartige Bediensequenzen für die beiden Alternativen 1 und 2 aufgeführt.

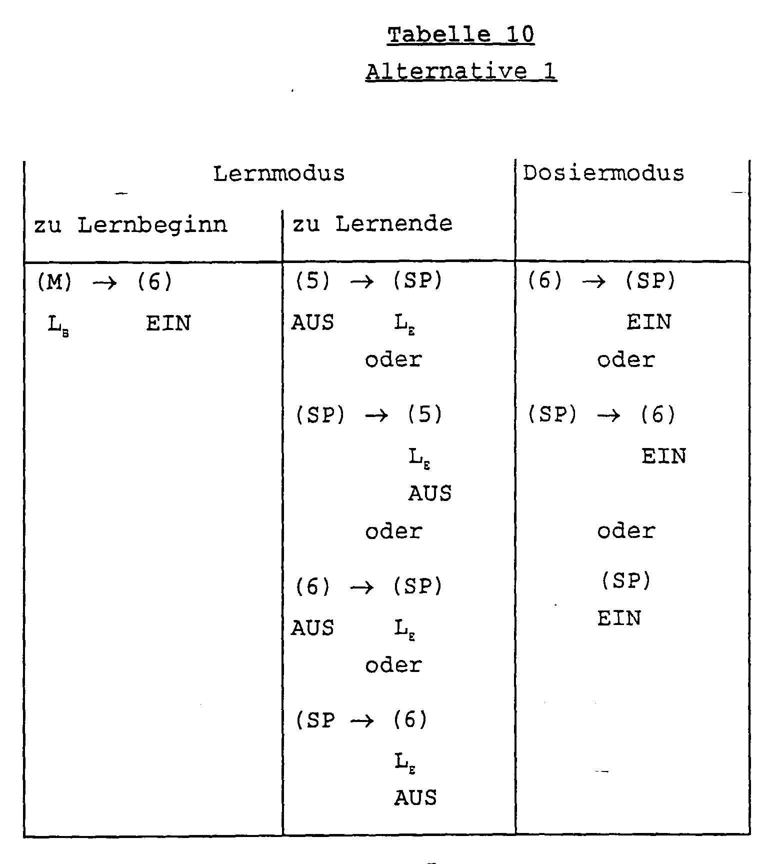

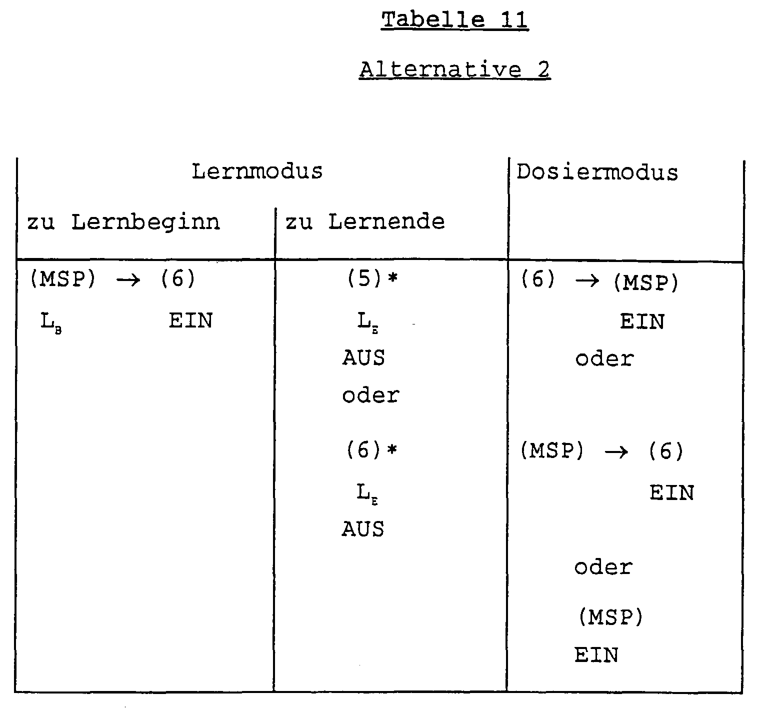

Beim *"*normalen Wasserhahnbetrieb*"*, bei dem nur das Absperrorgan 7 ein- und ausgeschaltet wird, ist bevorzugt, auch ein vorhandenes Durchflußeingabeelement 6 darin einzubeziehen.
Typischerweise können solche Bediensequenzen, ohne einen Lernmodus zu initiieren bzw. durchzuführen, z.B. wie folgt aussehen:

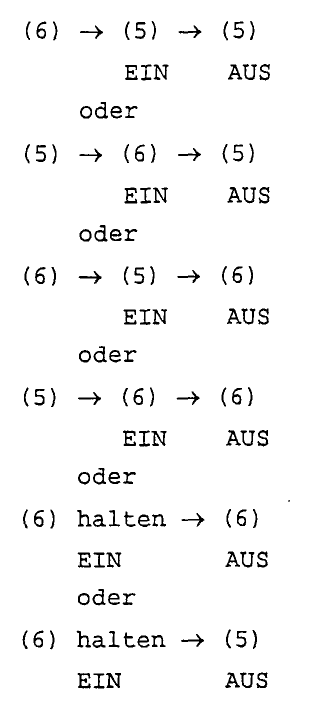

Es kann ferner der Fall vorgesehen sein, daß bei der normalen Ventilfunktion der erfindungsgemäßen Vorrichtung dann, wenn zum Öffnen des Absperrorgans 7 nur die Betätigungseinrichtung 5, jedoch nicht das Durchflußeingabeelement 6 betätigt wird, ein vorrichtungsseitig vorgegebener Durchsatz, z.B. ein mittlerer Durchsatz, realisiert wird.

Die insbesondere softwaremäßige Auslegung der Steuereinheit 8 zur Realisierung der im Zusammenhang mit dem Durchflußeingabeelement 6 erläuterten sowie weiterer diesbezüglicher Funktionen kann der Fachmann aufgrund der obigen Erläuterungen ohne weiteres vornehmen.

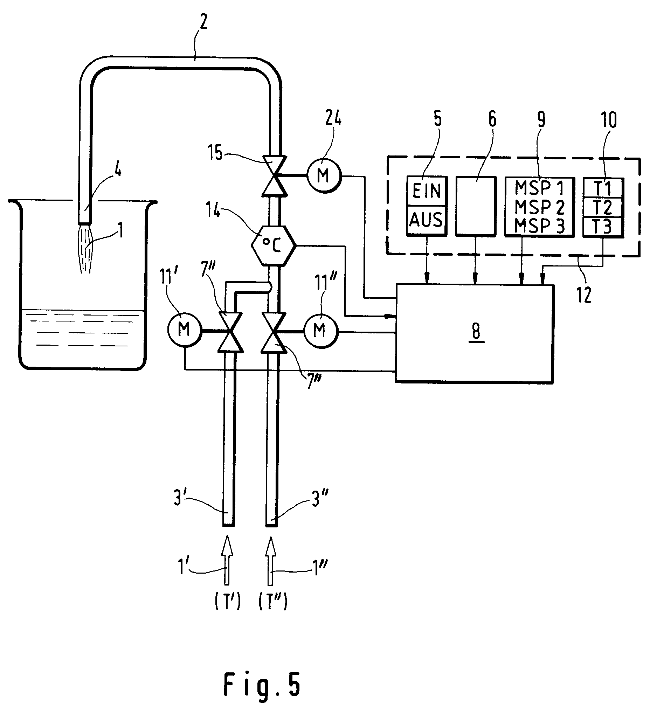

Die in Fig. 5 dargestellte Vorrichtung weist zwei Absperrorgane 7*'*, 7*''* auf, die einlaßseitig mit zwei Fluideinlässen 3*'*, 3*''* verbunden sind, in die zwei unterschiedliche Fluids 1*'*, 1*''* eingespeist werden können. Vorzugsweise handelt es sich dabei um Brauchwasser unterschiedlicher Temperatur (T*'*, T*''*). Die Absperrorgane 7*'*, 7*''* sind Regelorgane mit Stellantrieben 11*'*, 11*''*, die von der Steuereinheit 8 gesteuert sind. Sie sind auslaßseitig mit der Fluidleitung 2 verbunden, in der ein Temperaturfühler 14 und eine als Regelorgan mit Stellantrieb 24 ausgebildete und von der Steuereinheit 8 gesteuerte Sicherheits-Absperreinrichtung 15 vorgesehen sind. Der Temperaturfühler 14 ist ebenfalls mit der Steuereinheit 8 verbunden. Die Betätigungselemente (5), (6) und (9) des Bedientableaus 12 entsprechen in ihrer Konzeption denen der zuvor im einzelnen erläuterten Anordnung von Fig. 4.

Die Sicherheits-Absperreinrichtung 15 ist in diesem Falle als Regelorgan ausgebildet, das kontinuierlich oder schrittweise über den Stellantrieb 24 zwischen dem vollständig geschlossenen und dem vollständig offenen Zustand verstellbar ist.

Als weiteres Eingabeelement ist ein Temperatureingabeelement 10 im Bedientableau 12 vorgesehen, das, analog dem Durchflußeingabeelement 6, zur Eingabe einer Solltemperatur in der Fluidleitung 2 und am Fluidauslaß 4 dient.

Mit Hilfe des Temperaturfühlers 14, der die Isttemperatur erfaßt, und der Absperrorgane 7*'*, 7*''* kann über die Steuereinheit 8 ein geschlossener Temperaturregelkreis verwirklicht werden.

Das Temperatureingabeelement 10 kann in gleicher Weise wie das oben beschriebene Durchflußeingabeelement 6 ausgebildet sein. Die dadurch vorgegebene Solltemperatur (T1, T2, T3, ...) wird durch entsprechende Ansteuerung der Stellantriebe 11*'*, 11*''* im Sinne einer Mischerfunktion je nach gewählter Regelcharakteristik mehr oder weniger genau realisiert.

Der durch das Durchflußeingabeelement 6 vorgegebene Durchsatz an Fluid kann bei dieser Anordnung zugleich durch die Steuereinheit 8 und das Absperrorgan 7*'*, 7*''* erzeugt werden, da näherungsweise das Verhältnis der Durchsätze der Fluids 1*'*, 1*''* der resultierenden Mischtemperatur und die Summe der beiden Durchsätze dem gewünschten Gesamtdurchsatz entsprechen.

Die Betätigung des Temperatureingabeelements 10 kann, ebenso wie dies auch beim Durchflußeingabeelement 6 möglich ist, von der eigentlichen Betätigungssequenz der Betätigungselemente (5) und (9) unabhängig vorzunehmen sein, wobei die Betätigung des Temperatureingabeelements 10 vorzugsweise der der anderen Betätigungselemente (5) und (9) vorgeschaltet ist, und zwar vor oder nach einer vorgeschalteten Betätigung des Durchflußeingabeelements 6.

Beispiele für typische Bediensequenzen unter Einbeziehung des Durchflußeingabeelements 6 und des Temperatureingabeelements 10 sind für die Alternativen 1 und 2 in den nachfolgenden Tabellen 12 und 13 aufgeführt, die sich auf Bediensequenzen beziehen, in denen die Bedienelemente (6) und (10) keine Doppelfunktion (keine zusätzliche EIN- und/oder AUS-Funktion von (5) ) aufweisen.

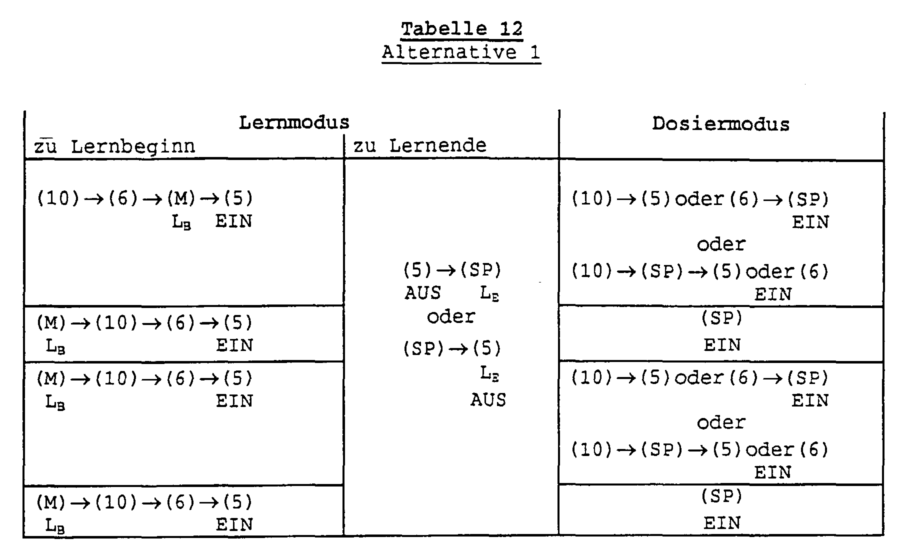

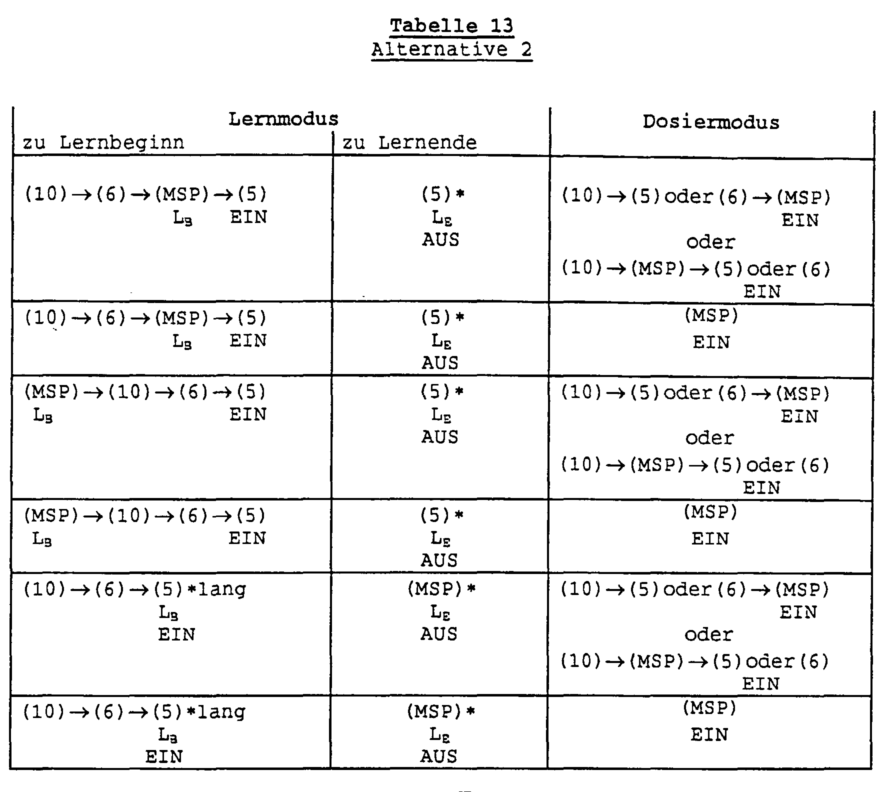

Es ist im Rahmen der vorliegenden Erfindung besonders bevorzugt, die den Eingaben von (10) und (6) entsprechenden Informationen im Lernmodus in Zuordnung zur Mengeninformation zu speichern, da im Dosiermodus dann diese Eingaben zum Durchfluß und der Temperatur des zu dosierenden Fluids nicht mehr erforderlich sind und Dosierung im Dosiermodus durch Betätigung eines einzigen Betätigungselements (Tabelle 12, Zeilen 2 und 4: (SP); Tabelle 13, Zeilen 2, 4 und 6: (MSP) ) möglich ist.

Die Auslegung des Dosiersystems der Erfindung in der Weise, daß das Durchflußeingabeelement 6 auch noch die EIN-Funktion von (5) und gegebenenfalls auch die AUS-Funktion aufweist (vergl. die Tabellen 10 und 11), ist auch dann vorteilhaft, wenn zusätzlich das Temperatureingabeelement 10 vorgesehen ist.

Die EIN-Funktion von (5) und gegebenenfalls auch die AUS-Funktion kann alternativ auch dem Temperatureingabeelement 10 zugeordnet sein.

In den nachfolgenden Tabellen 14 und 15 sind einige typische derartige Bediensequenzen für die beiden Alternativen 1 und 2 aufgeführt.

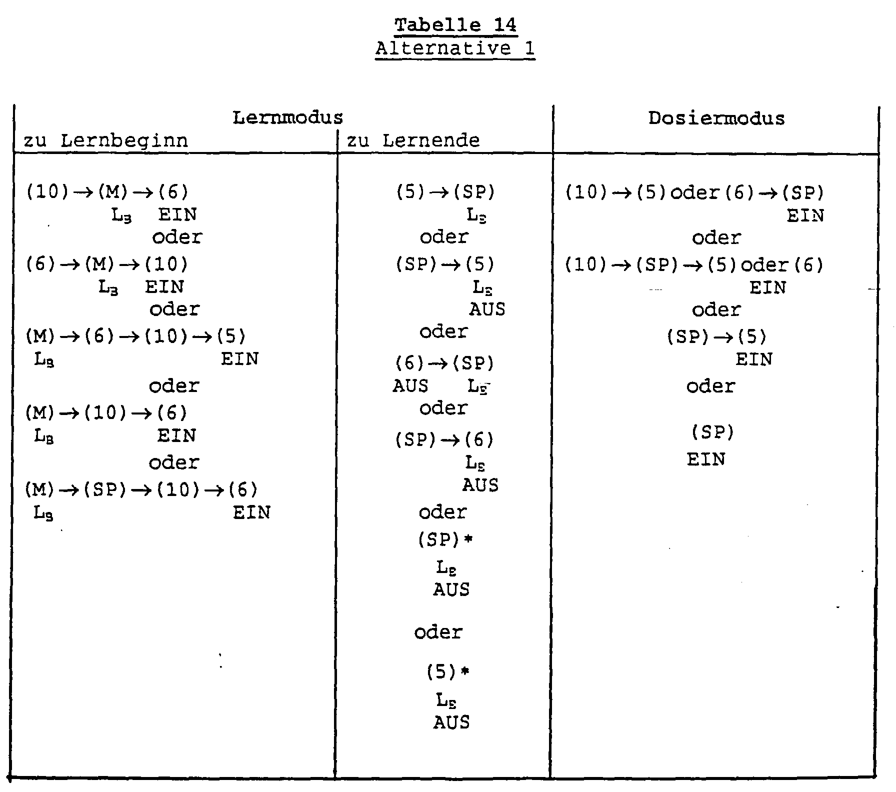

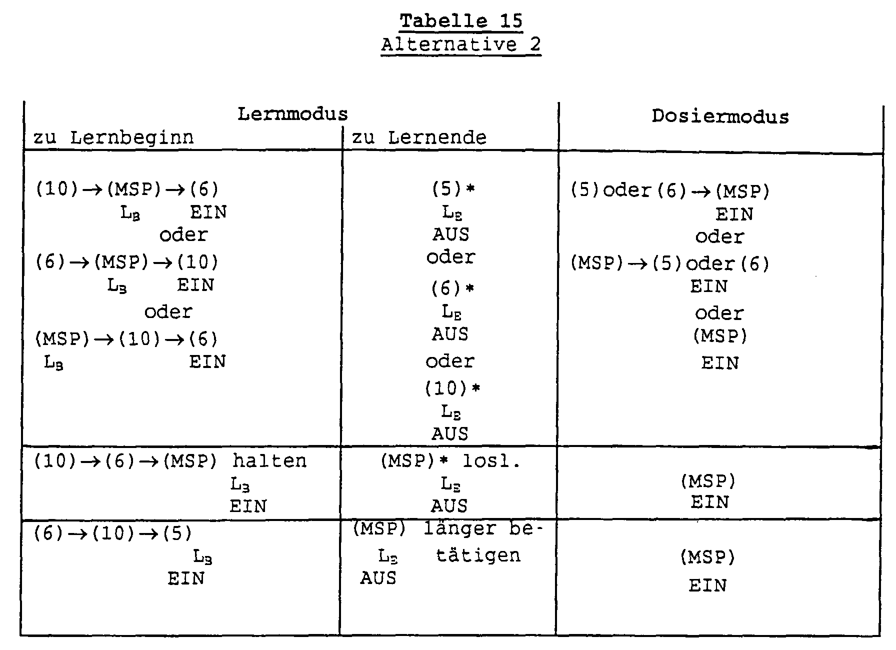

Für die normale Ventilfunktion (*"*Wasserhahnfunktion*"*) der Vorrichtung ergeben sich bei Vorliegen eines Durchflußeingabeelements 6 und eines Temperatureingabeelements 10 ebenfalls zahlreiche Bediensequenzen, von denen einige typische Sequenzen nachstehend aufgelistet sind:

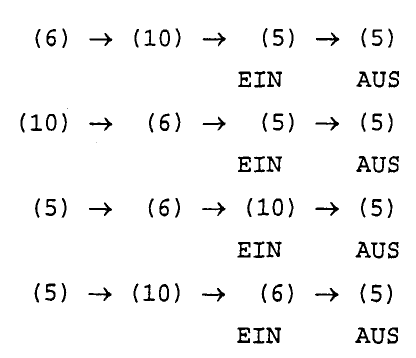

Die Tabellen 12 bis 15 und die obigen Bediensequenzen geben nur einen Teil der im Rahmen der Erfindung möglichen Kombinationen von Betätigungsvorgängen und entsprechenden Funktionen wieder. Der Fachmann kann, je nach konkretem Anwendungsfall, geeignete Betätigungssequenzen anhand des Erfindungskonzepts realisieren.

Nach einer weiteren vorteilhaften Ausführungsform der Erfindung ist die Funktion der Speichereingabeeinrichtung 9 (M, SP; MSP) mit der der Betätigungseinrichtung 5 integriert; entsprechend ist nur ein einziges Betätigungselement (5) für diese Funktionen vorgesehen.
Diese Auslegung der erfindungsgemäßen Vorrichtung führt entsprechend dazu, daß die normale Strömungsschalterfunktion (Wasserhahnfunktion) durch die Dosierfunktion ersetzt ist. Funktionen und Bedienoperationen für diese sehr einfach zu bedienende Vorrichtung, die im einfachsten Fall eine "Einknopf"- oder "Einhebel"-Vorrichtung ist, werden im folgenden an einem Beispiel erläutert.

Lernmodus:

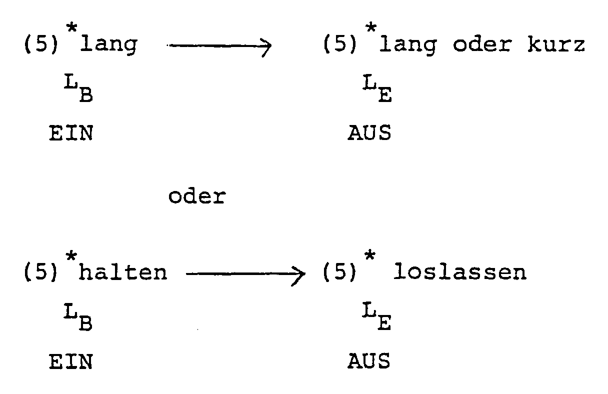

Das Sternchensymbol * bedeutet wiederum die Mehrfachfunktion, wie oben erläutert, wobei hier die zusätzliche Funktion von (9) (M, SP; MSP) vorliegt.

Dosiermodus:

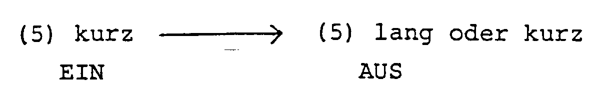

Es wird diejenige Fluidmenge dosiert, die im letzten Lernmodus (der durch langes Drücken/Betätigen von (5) initiiert wird) gelernt und gespeichert wurde.

Die Vorrichtung ist dabei vorteilhaft so ausgebildet, daß herstellerseitig eine Grund-Fluidmenge abgespeichert ist, die bei Durchführung des Dosiermodus ohne vorherige , durch Lernen erfolgte Abspeicherung einer Fluidmenge dem Dosiermodus so lange zugrundegelegt wird, bis ein Überschreiben mit einer gelernten Fluidmenge erfolgt ist.
Diese Vorrichtung ist sehr einfach zu bedienen und eignet sich für zahlreiche Anwendungsfälle für solche einfachen Dosierungen, etwa im Sanitärbereich für Waschbecken- und Brausearmaturen, Urinalspülsysteme, etc.
Bei diesen Systemen können das Durchflußeingabeelement 6 und/oder das Temperatureingabeelement 10 unabhängig vorgesehen sein, so daß durch entsprechende Bedienoperationen Durchsatz und Temperatur des Fluids gewählt werden können.

Nach einer weiteren vorteilhaften Ausführungsform der Erfindung ist die Betätigungseinrichtung 5 kein Eingabeelement wie etwa eine Taste, ein Knopf oder eine Lichtschranke, etc., sondern ist funktionell mit dem mechanisch betätigbaren Element einer herkömmlichen Auslaufarmatur, z.B. dem Hebel einer Einhebelmischbatterie, kombiniert. So ist es möglich, über die Hebeldrehung die Mischfluidtemperatur (Funktion des Temperatureingabeelements 10) und über das Heben und Senken sowohl den Durchfluß (Funktion des Durchflußeingabeelements 6) als auch die EIN/AUS-Funktion (Funktion der Betätigungseinrichtung 5) zu vereinen.

Eine weitere vorteilhafte Ausführungsform der Erfindungskonzeption besteht ferner darin, daß in Verbindung mit einer herkömmlichen Armatur, insbesondere einer Einhebelmischbatterie oder ähnlichen Ablaufarmaturen, lediglich eine Speichereingabeeinrichtung 9, vorteilhaft in Form eines oder mehrerer Speicheransprechelemente MSP, vorgesehen ist und die Steuereinheit 8 so ausgelegt ist, daß bei Betätigung des Wasserhahns (EIN/AUS, Funktion von (5) ) die zwischen dem Öffnen und dem darauffolgenden Schließen ausgeströmte Wassermenge zwischengespeichert und bei Betätigung des Speicheransprechelements MSP (oder des Speicherbefehlselements M und eines Speicherplatzelements SP) diese Wassermenge gespeichert wird und durch Betätigung von MSP (oder M, SP) in einem Dosiermodus wieder abrufbar ist.

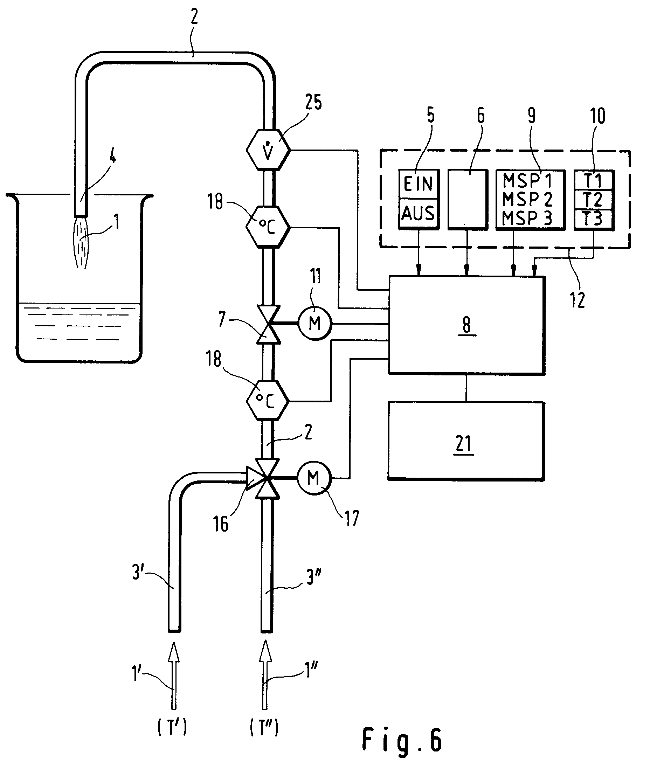

Fig. 6 stellt eine erfindungsgemäße Vorrichtung da, bei der dem Absperrorgan 7, das ein Regelorgan mit Stellantrieb 11 ist, ein Dreiwegemischer 16 mit Stellantrieb 17 vorgeschaltet ist, der einlaßseitig mit Fluideinlässen 3*'*, 3*''* für zwei unterschiedliche Fluids 1*'*, 1*''* verbunden ist. Die beiden Fluids 1*'*, 1*''* sind vorzugsweise, wie bei Fig. 5, Wasser unterschiedlicher Temperatur (T*'*, T*''*). Zusammen mit dem Temperaturfühler 18 und der Steuereinheit 8 liegt ein geschlossener Regelkreis vor, so daß dem Absperrorgan 7 ein Fluid zugeführt wird, dessen Temperatur auf den über das Temperatureingabeelement 10 eingegebenen Temperatursollwert regelbar ist.

Wie aus Fig. 6 ersichtlich ist, kann der Temperaturfühler 18 in Strömungsrichtung nach dem Dreiwegemischer 16 entweder vor oder nach dem Absperrorgan 7 vorgesehen sein.

Die Betätigungselemente (5), (6), (9) und (10) und ihre Funktion sind wie bei Fig. 5.

Fig. 6 zeigt ferner, daß ein Durchflußmengensensor 25 stromab vom Absperrorgan 7 vorgesehen sein kann, der mit der Steuereinheit 8 in Verbindung steht. Im Sinne eines zweiten geschlossenen Regelkreises kann das Absperrorgan 7 über die Steuereinheit 8 so betrieben werden, daß auf den über das Durchflußeingabeelement 6 eingegebenen Solldurchsatz geregelt wird. In diesem Beispiel hat also das als Steuer- oder Regelorgan ausgelegte Absperrorgan 7 nicht nur die Absperrfunktion und damit die Dosierfunktion, sondern steuert oder regelt auch den Durchsatz.

Durch diese Anordnung mit dem Durchflußmengensensor 25 kann ferner eine automatische Kontrolle bzw. Nacheichung von abgespeicherten Dosiermengen, die im Dosiermodus abgegeben werden, vorgenommen werden. Wenn, z.B. durch Verkalkung, der Rohrquerschnitt in der Fluidleitung 2 oder am Fluidauslaß 4 im Laufe der Zeit nach einem Lernvorgang verringert und damit der pro Zeiteinheit bei gegebenem Primärdruck erzielte Durchsatz kleiner wird, kann, vorzugsweise bei einem absolut arbeitenden Durchflußmengensensor 25, eine automatische Korrektur der gespeicherten Daten, z.B. der Offenzeit des Absperrorgans 7, durchgeführt werden, die in diesem Fall durch Korrektur so verlängert wird, daß die ursprünglich durch einmaliges Vordosieren gelernte Dosiermenge unabhängig vom Leitungszustand korrekt abgegeben wird.
Dabei kann softwaremäßig vorgesehen sein, daß dieser Selbstcheck und die gegebenenfalls erforderliche Nacheichung bzw. das gegebenenfalls erforderliche Updating von Speicherinhalten in vorgegebenen Zeitabständen vorgenommen wird.

Im übrigen erlaubt die Ausbildung des Absperrorgans 7 als Regelorgan mit Stellantrieb 11 in Verbindung mit dem Durchflußmengensensor 25 auch die Realisierung beliebiger Kennlinien für den Öffnungs- und Schließvorgang, um beispielsweise Druckstöße im Leitungssystem, die bei abruptem Öffnen von Strömungsschaltern, wie Magnetventilen, auftreten, zu vermeiden.

Die in Fig. 6 dargestellte Vorrichtung weist schließlich noch eine Ausgabeeinheit 21 auf, die mit der Steuereinheit 8 verbunden ist. Die Ausgabeeinheit 21, die auch innerhalb des Bedientableaus 12 vorgesehen sein kann, ist insbesondere eine Anzeige (Display), mit der, in Zuordnung zu Bedienelementen oder zu Eigenschaften des dosierten Fluids 1, insbesondere Temperaturen (T, °C), Durchsätze (l/min; kg/min), Speicherplatzzuordnungen (SP1, SP2, SP3, ...), Massen (kg), Volumina (l) und/oder Zeiten (s, min), bezogen auf den Lernmodus und/oder den Dosiermodus, angezeigt werden können. Vorteilhaft ist die Ausgabeeinheit 21 auch ein Drucker und/oder hat Schnittstellenfunktion, um eine Integration der erfindungsgemäßen Vorrichtung in Steuer- oder Regelsysteme, z.B. SPS, zu ermöglichen. Die Ausgabeeinheit 21 ist nach einer weiteren vorteilhaften Ausführungsform *"*intelligent*"*, d.h., vorzugsweise mit einem Mikrocomputersystem ausgerüstet, und, nach einer weiteren bevorzugten Ausführungsform, für eine interaktive Betätigung durch Benutzer mit optischer und/oder akustischer Kommunikation ausgelegt, besonders durch Spracherkennung und Sprachausgabe.

Dadurch lassen sich die erfindungsgemäße Vorrichtung und das erfindungsgemäße Verfahren außerordentlich vorteilhaft auch im Lebensbereich von Behinderten und Senioren anwenden, wobei die Betätigung der Betätigungselemente nicht notwendig durch mechanische Bedienung erfolgen muß, sondern auch z.B. akustisch erfolgen kann. Auch die Ausbildung besonders der Betätigungseinrichtung 5 mit der Steuereinheit 8 als näherungsgesteuerte bzw. anwesenheitsgesteuerte Schaltvorrichtung ist gerade für derartige Anwendungen von großer Bedeutung.

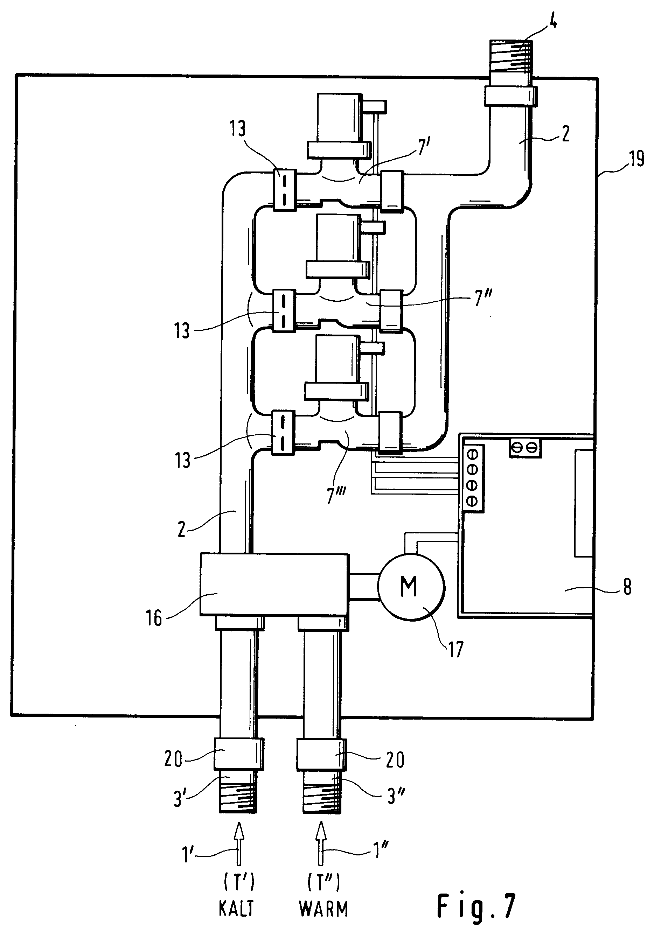

Fig. 7 ist eine schematische Darstellung einer erfindungsgemäßen Vorrichtung, wobei die Betägigungselemente bzw. das Bedientableau 12 weggelassen sind.
Das Absperrorgan besteht hier, wie im Falle der Fig. 2(a), aus einem Strömungsschalterregister aus 3 parallelgeschalteten Magnetventilen 7*'*, 7*''*, 7*'''*, die von der Steuereinheit 8 gesteuert werden. Den Magnetventilen 7*'*, 7*''*, 7*'''* sind eingangsseitig Durchflußregler 13 vorgeschaltet, welche die Durchsätze an Fluid in den betreffenden Leitungszweigen der Fluidleitung 2 konstanthalten.

Das Strömungsschalterregister ist eingangsseitig mit einem Dreiwegemischer 16 mit Stellantrieb 17 verbunden, der von der Steuereinheit 8 gesteuert ist. In den beiden Fluideinlässen 3*'*, 3*''* für die Fluids 1*'*, 1*'* sind Rückflußverhinderer mit Sieb vorgesehen, die mit der Bezugszahl 20 bezeichnet sind. Dieser Aufbau liegt auch bei der Vorrichtung von Fig. 6 vor. Die beiden Fluids 1*'*, 1*''* sind vorzugsweise kaltes und warmes Wasser mit den Temperaturen T*'*, T*''*. Die gemeinsamen Ausgänge der Magnetventile 7*'*, 7*''*, 7*'''* des Strömungsschalterregisters münden in den Fluidauslaß 4.

Die Ansteuerung des Absperrorgans 7*'*, 7*''*, 7*'''* und des Dreiwegemischers 16 erfolgen insbesondere nach einer der oben beschriebenen Arten.

Die Teilvorrichtung von Fig. 7, die den hydraulischen Teil sowie die Sensorik und die Steuereinheit 8 der erfindungsgemäßen Vorrichtung umfaßt, ist vorzugsweise kompakt und modular aufgebaut und in einem Gehäuse 19 untergebracht. Dieser Teil der erfindungsgemäßen Vorrichtung wird an einer installationstechnisch geeigneten, möglichstnicht sichtbaren Stelle angeordnet. Die Verbindung des Bedientableaus 12 mit dem Modul gemäß Fig. 7 bzw. der Steuereinheit 8 erfolgt normalerweise durch übliche elektrische Leitungen zur Stromversorgung und zum Datenaustausch. Der Datentransfer kann jedoch vorteilhaft auch drahtlos per Funk erfolgen, wobei bei dieser Ausführungsform das Bedientableau 12 eine eigene Stromversorgung zur Versorgung der Elektronik einschließlich des darin vorgesehenen Funksenders aufweist. Der Funkempfänger befindet sich dann vorzugsweise in der Steuereinheit 8.

Die Vorrichtung von Fig. 7 weist keinen Temperaturfühler auf, mit dem in einem geschlossen Regelkreis die Mischtemperatur über den Dreiwegemischer 16 geregelt wird, da dies nicht unbedingt erforderlich ist und der Dreiwegemischer 16 so konzipiert oder auch so durch die Steuereinheit 8 angesteuert werden kann, daß z.B. für jeden möglichen Durchsatz eine Mischerkennlinie abgespeichert ist, die es erlaubt, praktisch unabhängig von wechselnden Durchsätzen die gewünschte Mischtemperatur aufrechtzuerhalten. Auf diese Weise ist die Vorrichtung einfacher und störungsunanfälliger aufgebaut.

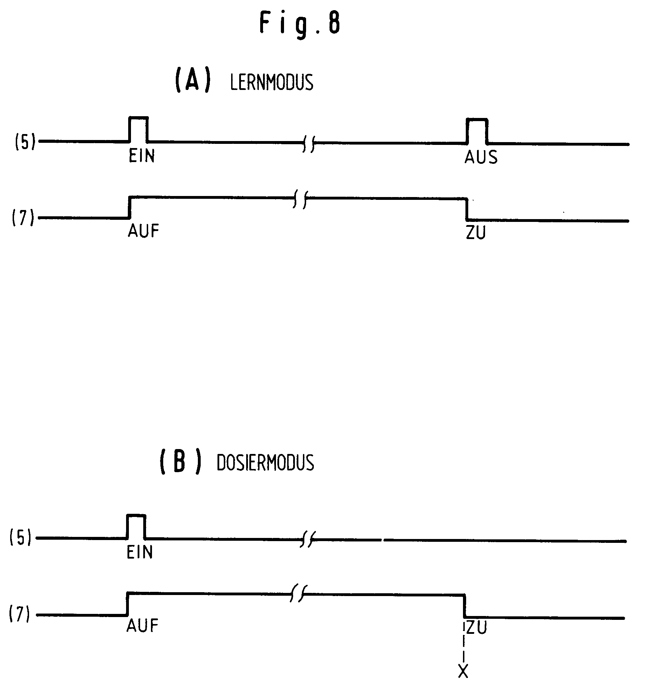

Fig. 8 zeigt schematisch anhand von Signaldiagrammen den zeitlichen Ablauf des Lernmodus (A) und des Dosiermodus (B) bei erfindungsgemäßen Vorrichtungen, z.B. vom Typ der Vorrichtung der Fig. 1, 3 und 7, und zwar für eine Betätigungssequenz, bei der mit (5) das Absperrorgan 7 über die Steuereinheit 8 geöffnet wird. Durch kurzes Betätigen der Betätigungseinrichtung 5 wird das Öffnen des Absperrorgans 7 initiiert, das bei einem darauffolgenden Impuls von (5) wieder geschlossen wird. Die verschiedenen zur Speicherung der gelernten Mengeninformation erforderlichen Betätigungen sind hier zur Vereinfachung nicht dargestellt.

Im Dosiermodus wird aufgrund einer Betätigung von (5) das Absperrorgan 7 geöffnet; nach Durchlauf der der gespeicherten gelernten Mengeninformation entsprechenden Fluidmenge durch die Vorrichtung wird zum Zeitpunkt X, ohne Betätigung der Betätigungseinrichtung (5) oder irgendeines anderen Betätigungselements, das Absperrorgan 7 wieder geschlossen.

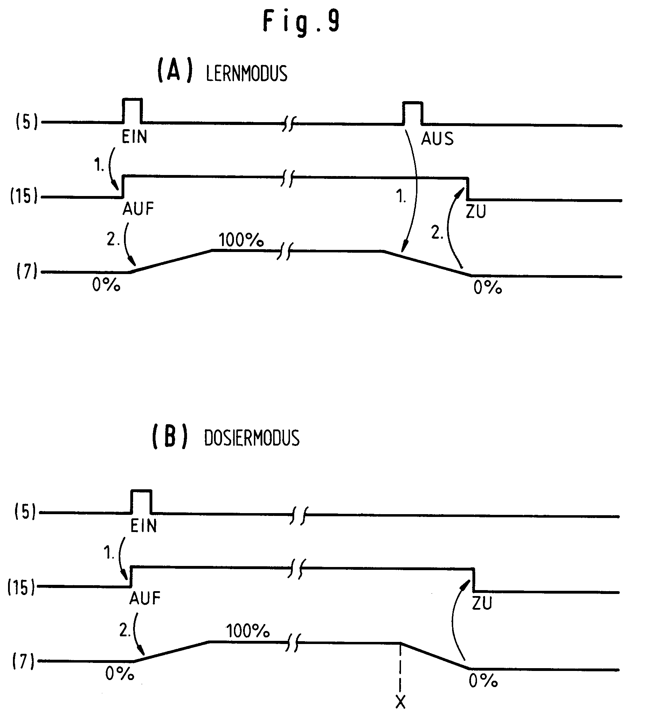

Fig. 9 zeigt analoge Signaldiagramme für eine erfindungsgemäße Vorrichtung, bei der eine Sicherheits-Absperreinrichtung 15 vorgesehen ist und das Absperrorgan 7 ein über einen Stellantrieb durch die Steuereinheit 8 gesteuertes Regelorgan ist, wie etwa in den Fig. 4 und 5 dargestellt.

Im Lernmodus (A) wird aufgrund des EIN-Signals von der Betätigungseinrichtung 5 zunächst die Sicherheits-Absperreinrichtung 15 (1. Schritt) und dann das Absperrorgan 7 geöffnet (2. Schritt), das nach einer gegebenen Zeit seine Offenstellung (100 %) erreicht. Bei der zweiten Betätigung der Betätigungseinrichtung 5 wird aufgrund des AUS-Signals zunächst das Absperrorgan 7 wieder in die Schließstellung (0 %) gesteuert (1. Schritt), nach deren Erreichen die Sicherheits-Absperreinrichtung 15 geschlossen wird (2. Schritt).

Im Dosiermodus (B) wird aufgrund des EIN-Signals von der Betätigungseinrichtung 5 in gleicher Weise wie im Lernmodus zuerst die Sicherheits-Absperreinrichtung 15 und dann das Absperrorgan 7 geöffnet. Das Schließen des Absperrorgans 7 nach erfolgter Abgabe der gespeicherten Dosiermenge erfolgt wiederum automatisch ohne externe Betätigung irgendeines Betätigungselements zum Zeitpunkt X.

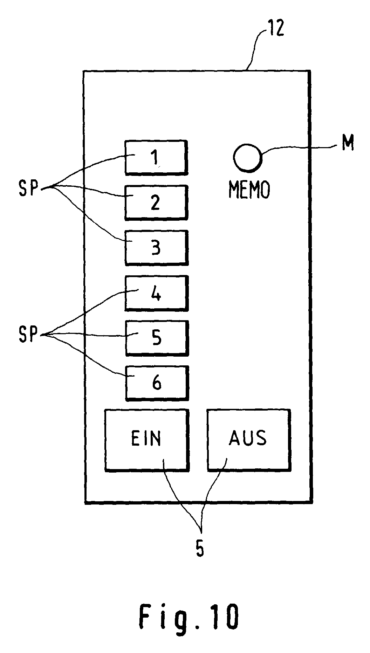

Die Fig. 10 bis 12 zeigen schematisch Bedientableaus 12. Fig. 10 liegt die zuvor im Detail erläuterte Alternative 1 der erfindungsgemäßen Speichereingabeeinrichtung 9 (vgl. z.B. Fig. 1) zugrunde.
Das Bedientableau 12 umfaßt 6 Tasten (1 bis 6) als Speicherplatzelemente SP1, SP2, SP3, SP4, SP5, SP6. Die Taste M entspricht dem Speicherbefehlselement. Die Betätigungseinrichtung 5 umfaßt eine EIN-Taste und eine AUS-Taste.

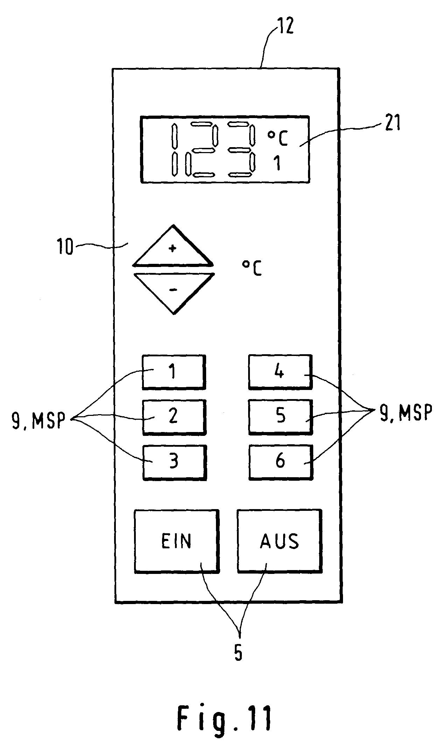

Das Bedientableau 12 von Fig. 11 entspricht der Alternative 2 der erfindungsgemäßen Speichereingabeeinrichtung 9. Es umfaßt sechs Speicheransprechelemente MSP (1 bis 6), die Speicheransprechelemente MSP1, MSP2, MSP3, MSP4, MSP5, MSP6 darstellen. Auch hier ist die Betätigungseinrichtung 5 in Form von zwei Tasten (EIN/AUS) ausgebildet. Das Bedientableau 12 weist ferner ein Temperatureingabeelement 10 und eine Ausgabeeinheit 21 in Form eines Displays (z.B. eines LCD) auf. Das Temperatureingabeelement 10 ist als Auf/Ab-Taster ausgebildet, wobei der Wert der Solltemperatur in der Ausgabeeinheit 21 angezeigt wird. Ferner wird die Nummer des gerade aktivierten Speicheransprechelements (Nr. 1) angezeigt.

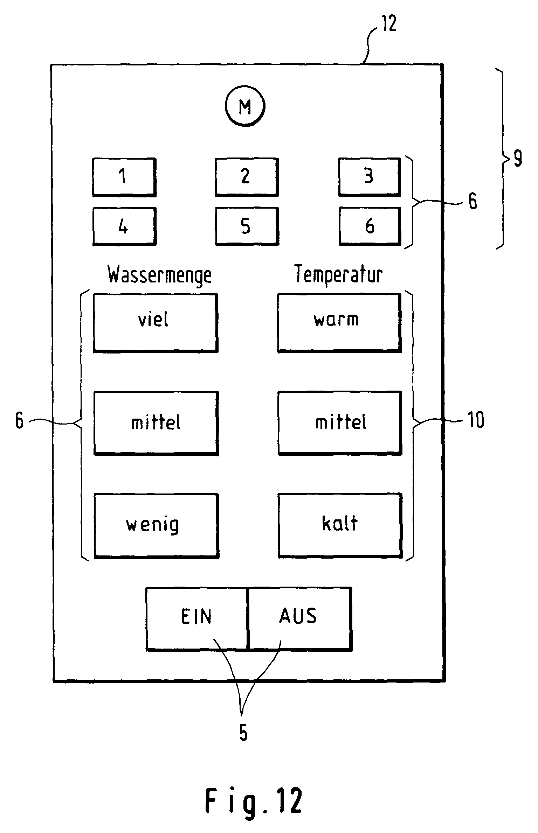

Das Bedientableau 12 von Fig. 12 entspricht, bis auf die unterschiedliche räumliche Anordnung, hinsichtlich der Speichereingabeeinrichtung 9 der Alternative 1 und Fig. 10; auch hier sind ein Speicherbefehlselement M und sechs Speicherplatzelemente SP (1 bis 6) SP1, SP2, SP3, SP4, SP5, SP6 sowie ein EIN/AUS-Schalter bzw. -Taster als Betätigungseinrichtung 5 vorgesehen.

Zusätzlich weist dieses Bedientableau 12 noch ein Durchflußeingabeelement 6, das aus 3 Tasten besteht (*"*viel*"*, *"*mittel*"*, *"*wenig*"*), sowie ein Temperatureingabeelement 10 auf, das ebenfalls 3 Tasten umfaßt (*"*warm*"*, *"*mittel*"*, *"*kalt*"*).

Die Funktionen und Betätigungssequenzen dieser Betätigungselemente wurden oben bereits im einzelnen erläutert.

In Fig. 13 sind zwei konkreten Ausführungsformen entsprechende Bedientableaus 12 dargestellt, die als scheibenartige Körper ausgebildet sind und eine Öffnung 23 aufweisen, mit der sie auf eine entsprechende Nase, z.B. an einer Auslaufarmatur, abnehmbar aufgesteckt werden können. Bei diesen Bedientableaus 12 handelt es sich um intelligente, durch Stromversorgung über Solarzellen 22 versorgungsmäßig autarke Einrichtungen, die vorzugsweise leitungsunabhängig insbesondere per Funk mit der Steuereinheit 8 in Datenverbindung stehen. Diese kann auch durch optische Datenübertragung, z.B. im IR-Bereich, erfolgen.

Fig. 13(a) entspricht Alternative 1 der erfindungsgemäßen Speichereingabeeinrichtung 9, Fig. 13(b) der Alternative 2.

Fig. 13(a) umfaßt entsprechend, analog Fig. 12, neben der Betätigungseinrichtung 5, die als EIN/AUS-Taster ausgebildet ist, ein Speicherbefehlselement M, fünf Speicherplatzelemente SP (SP1, SP2, SP3, SP4, SP5), eine Leuchtdiode 26, die bei aktiviertem Speicherbefehlselement M leuchtet, ein Durchflußeingabeelement 6, das drei mit Symbolen für verschiedene Durchsätze versehene Tasten umfaßt, sowie ein Temperatureingabeelement 10, das ebenfalls drei Tasten umfaßt, die mit Symbolen für verschiedene Temperaturen versehen sind.

Fig. 13(b) entspricht Fig. 13(a) mit dem Unterschied, daß Alternative 2 der Speichereingabeeinrichtung 9 realisiert ist, die entsprechend aus fünf Speicheransprechelementen MSP (MSP1, MSP2, MSP3, MSP4, MSP5) besteht.

Diese Bedientableaus weisen die Vorteile auf, daß sie von der übrigen Vorrichtung völlig getrennt sein und im Funkbereich an beliebiger Stelle angeordnet oder befestigt oder von Bedienungspersonen getragen oder etwa in die Tasche gesteckt werden können. Durch die autarke Stromversorgung in Verbindung mit üblichen elektrischen Stromspeichereinrichtungen ist ein wartungsfreier Betrieb bei gleichzeitig absoluter Betriebssicherheit über Zeiträume von vielen Jahren gewährleistet. Die Betätigungselemente der Bedientableaus 12 von Fig. 13 sind ferner vorzugsweise wasserdicht gekapselt und aus schlagfesten Materialien hergestellt, so daß auch diesbezüglich eine lange Lebensdauer gewährleistet ist. Die Betätigungselemente 9 (M, SP; MSP), 5, 6, 10 umfassen hier zwar auch Tasten, vorzugsweise Piezotasten bzw. in einer Folientastatur integrierte Tasten, jedoch werden die an die Steuereinheit 8 zu übermittelnden Signale der Betätigungselemente durch Umsetzung in geeignete Funkcodeimpulse erzeugt, die in einer im Bedientabeau 12 vorgesehenen elektronischen Schaltung erfolgt. Derartige Signalcodierungen sind auf dem Gebiet der Funkfernsteuerung per se geläufig, so daß eine nähere Erläuterung nicht erforderlich ist.

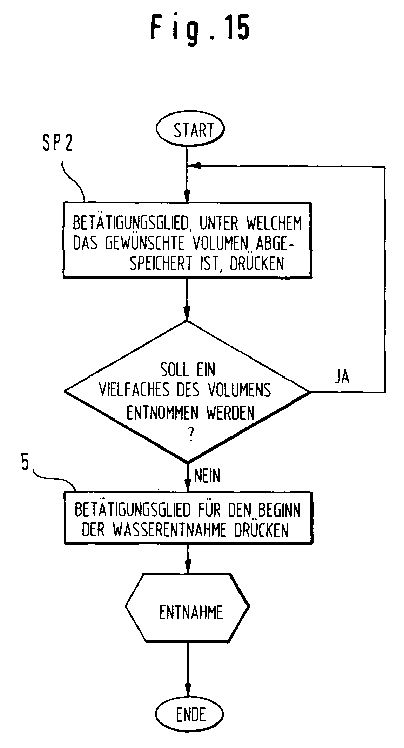

Die Fig. 14 und 15 stellen Flußdiagramme für den Lernmodus (Fig. 14) und den Dosiermodus (Fig. 15) einer erfindungsgemäßen Vorrichtung vom Typ der Fig. 1, 7, 13 (Alternative 1 der Speichereingabeeinrichtung 9) dar.

Die zugrundeliegende Bediensequenz für den Lernmodus der Fig. 14 ist in Tabelle 8, Zeile 4, enthalten, und zwar als

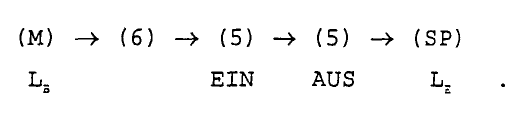

Die Fig. 15 zugrundeliegende Bediensequenz für den Dosiermodus ist ebenfalls in Tabelle 8, Zeile 4, enthalten:

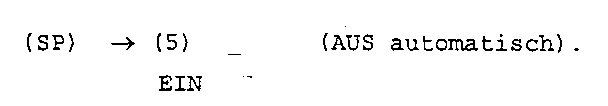

Die Flußdiagramme der Fig. 14 und 15 implementieren diese Bediensequenzen.

Nach einer weiteren bevorzugten Ausführungsform ist die Steuereinheit 8 so ausgebildet, daß sie nach Erfassung einer dauernden Abgabe von Fluid 1 über einen vorgegebenen Zeitraum nach dem über die Betätigungseinrichtung 5 und/oder die Speichereingabeeinrichtung 9 veranlaßten Öffnen des Absperrorgans 7 hinaus und/oder nach Überschreitung eines vorgegebenen maximalen Dosiervolumens oder einer vorgegebenen maximalen Dosiermasse an Fluid 1 das Absperrorgan 7 und/oder die Sicherheits-Absperreinrichtung 15 schließt und vorzugsweise in diesem Fall ein optisches und/oder aktustisches Störungssignal über die Ausgabeeinheit 21 abgibt.

Gemäß einer weiteren vorteilhaften Variante der erfindungsgemäßen Vorrichtung ist die Steuereinheit 8 so ausgebildet, daß in den Speichern bzw. Speicherbereichen, die den Speicherplatzelementen (SP1, SP2, SP3, ...) oder den Speicherplatzelementen (MSP1, MSP2, MSP3, ...) der Speichereingabeeinrichtung 9 zugeordnet sind, herstellerseitig vorgegebene Dosiermengen vorab gespeichert sind, die im Lernmodus überschreibbar sind und bei Ausfall der Stromversorgung bzw. von Pufferbatterien und/oder bei Betätigung einer Reset- oder Clear-Einrichtung wieder aktivierbar sind.

Aus der obigen Beschreibung ist ersichtlich, daß die vorliegende Erfindung ein völlig neuartiges, sehr breit anwendbares Konzept einer lernenden Dosiervorrichtung und eines Verfahrens zur wiederholbaren Dosierung von Fluids in wählbaren und lernbaren Mengen betrifft.

## Patentansprüche

1. Vorrichtung zur wiederholbaren Dosierung eines Fluids (1) in einer wählbaren und reproduzierbaren Menge, die aufweist:
- eine Fluidleitung (2) mit einem Fluideinlaß (3) und einem Fluidauslaß (4),
- ein zwischen Fluideinlaß (3) und Fluidauslaß (4) in der Fluidleitung (2) vorgesehenes Absperrorgan (7), mit dem der Fluß eines vom Fluideinlaß (3) kommenden, hindurchströmenden Fluids (1) ein- und ausschaltbar ist,
- eine elektronische Steuereinheit (8), die das Absperrorgan (7) steuert,
- eine Betätigungseinrichtung (5), die mit der Steuereinheit (8) verbunden ist und bei Betätigung durch eine Bedienungsperson Signale an die Steuereinheit (8) abgibt, aufgrund derer die Steuereinheit (8) das Absperrorgan (7) öffnet bzw. schließt, und
- eine mit der Steuereinheit (8) verbundene Eingabeeinrichtung zur Eingabe einer Eingabeinformation bezüglich der zu dosierenden Menge des Fluids (1) durch eine Bedienungsperson,
dadurch gekennzeichnet, daß
- die Eingabeeinrichtung eine Speichereingabeeinrichtung (9) (M, SP; MSP) ist, die bei Betätigung Speichersignale an die Steuereinheit (8) abgibt,
und
- die Steuereinheit (8) so ausgebildet ist, daß sie
(A) aufgrund einer durch eine Bedienungsperson durch Betätigung
- der Betätigungseinrichtung (5) und/oder
- der Speichereingabeeinrichtung (9) (M, SP; MSP) in einer vorgegebenen Reihenfolge vorgenommenen einmaligen manuellen Dosierung einer Fluidmenge in einem dadurch initiierten Lernmodus die zwischen dem über die Betätigungseinrichtung (5) bzw. die Speichereingabeeinrichtung (9) (M, SP; MSP) veranlaßten Öffnen (EIN) und dem nachfolgenden, über
- die Betätigungseinrichtung (5)
und/oder
- die Speichereingabeeinrichtung (9) (M, SP; MSP) veranlaßten Schließen (AUS) des Absperrorgans (7) aus dem Fluidauslaß (4) ausgeströmte Menge an Fluid (1) als eine dieser Menge entsprechende Mengeninformation ermittelt und als gelernte Mengeninformation in einem der Speichereingabeeinrichtung (9)(M, SP; MSP) zugeordneten Speicher speichert, wobei der Lernmodus mit erfolgter Speicherung der Mengeninformation endet,
und
(B) bei Betätigung der Speichereingabevorrichtung (9) (M, SP; MSP), gegebenenfalls in Kombination mit einer Betätigung der Betätigungseinrichtung (5), in einen Dosiermodus geht, während
dessen der Lernmodus gesperrt und der Speicher nicht überschreibbar ist, und das Absperrorgan (7) öffnet (EIN) und gesteuert so schließt (AUS), daß die
zwischen dem Öffnen (EIN) und dem nachfolgenden Schließen des Absperrorgans (7) (AUS) aus dem Fluidauslaß (4) ausgeströmte Menge an Fluid (1) der zuvor im Lernmodus im Speicher gespeicherten gelernten Mengeninformation entspricht, wobei der Dosiermodus mit dem automatischen Schließen des Absperrorgans (7) endet (Fig. 1, 3, 8, 9).

2. Vorrichtung nach Anspruch 1 und/oder 2, dadurch gekennzeichnet, daß die Speichereingabeeinrichtung (9) ein Speicherbefehlselement (M) sowie ein oder mehrere Speicherplatzelemente (SP; SP1, SP2, SP3, ...) aufweist, die mit der Steuereinheit (8) verbunden sind, wobei das Speicherbefehlselement (M) bei Betätigung ein Signal an die Steuereinheit (8) abgibt, mit dem im Lernmodus ein Speicherbefehl erzeugt und ggf. der Lernbeginn (L_{B}) initiiert und ggf. das Lernende (L_{E}) definiert wird, und die Speicherplatzelemente (SP; SP1, SP2, SP3, ...) bei Betätigung im Lernmodus Signale an die Steuereinheit (8) abgeben, mit denen eine Zuordnung einer im Lernmodus gelernten oder zu lernenden Mengeninformation zu dem betreffenden Speicherplatzelement erfolgt und/oder im Dosiermodus der Dosierbeginn initiiert wird (Fig. 1).

3. Vorrichtung nach Anspruch 1 und/oder 2, dadurch gekennzeichnet, daß die Speichereingabeeinrichtung (9) aus Speicheransprechelementen (MSP; MSP1, MSP2, MSP3, ...) besteht, die bei Betätigung Signale an die Steuereinheit (8) abgeben, mit denen sowohl ein Speicherbefehl erzeugt und ggf. der Lernbeginn (L_{B}) initiiert wird als auch eine Zuordnung einer im Lernmodus gelernten oder zu lernenden Mengeninformation zu dem betreffenden Speicherplatzelement erfolgt und ggf. das Lernende (L_{E}) definiert und/oder im Dosiermodus der Dosierbeginn initiiert wird (Fig. 3).

4. Vorrichtung nach Anspruch 2 oder 3, dadurch gekennzeichnet, daß
- die Steuereinheit (8) so ausgebildet ist, daß sie
(A) bei Betätigung
- der Betätigungseinrichtung (5)
und/oder
- der Speichereingabeeinrichtung (9) (M, SP; MSP) in den Lernmodus geht und die zwischen dem über die Betätigungseinrichtung (5) bzw. die Speichereingabeeinrichtung (9) (M, SP; MSP) veranlaßten Öffnen (EIN) und dem nachfolgenden, über
- die Betätigungseinrichtung (5)
und/oder
- die Speichereingabeeinrichtung (9) (M, SP; MSP) veranlaßten Schließen (AUS) des Absperrorgans (7) aus dem Fluidauslaß (4) ausgeströmte Menge an Fluid (1) als eine dieser Menge entsprechende Mengeninformation ermittelt und aufgrund einer Betätigung eines Speicherplatzelements (SP1, SP2, SP3, ...) der Speichereingabeeinrichtung (9) (M, SP) bzw. eines Speicheransprechelements (MSP1, MSP2, MSP3, ...) der Speichereingabeeinrichtung (9) (MSP) als gelernte Mengeninformation in einem Speicher speichert, der dem betreffenden Speicherplatzelement (SP1, SP2, SP3, ...) bzw. dem betreffenden Speicheransprechelement (MSP1, MSP2, MSP3, ...) zugeordnet ist,
und
(B) bei - ggf. erneuter - Betätigung
- des Speicherplatzelements (SP1, SP2, SP3, ...) der Speichereingabeeinrichtung (9) (M, SP) bzw.
- des Speicheransprechelements (MSP1, MSP2, MSP3, ...) der Speichereingabeeinrichtung (9) (MSP), gegebenenfalls in Kombination mit einer Betätigung der Betätigungseinrichtung (5), in den Dosiermodus geht und das Absperrorgan (7) öffnet (EIN) und gesteuert so schließt (AUS), daß die zwischen dem Öffnen und dem nachfolgenden Schließen des Absperrorgans (7) aus dem Fluidauslaß (4) ausgeströmte Menge an Fluid (1) der zuvor im Lernmodus im Speicher gespeicherten gelernten Mengeninformation entspricht (Fig. 1, 3, 8, 9).

5. Vorrichtung nach einem oder mehreren der Ansprüche 1 bis 4, dadurch gekennzeichnet, daß das Absperrorgan (7) ein Strömungsschalter ist, der nur den vollständig offenen Zustand oder den vollständig geschlossenen Zustand annehmen kann, insbesondere ein Magnetventil (Fig. 1, 3).

6. Vorrichtung nach einem oder mehreren der Ansprüche 1 bis 4, dadurch gekennzeichnet, daß das Absperrorgan (7) ein Strömungsschalterregister ist, das aus zwei oder mehr parallelgeschalteten und/oder unabhängigen Strömungsschaltern (7', 7'', 7'''), insbesondere Magnetventilen, mit gemeinsamem Fluidauslaß (4) und gegebenenfalls auch gemeinsamem oder teilweise gemeinsamem Fluideinlaß (3; 3', 3'') besteht, wobei die einzelnen Strömungsschalter (7', 7'', 7''') des Strömungsschalterregisters durch die Steuereinheit (8) steuerbar sind (Fig. 2(a), 2(b), 7).

7. Vorrichtung nach einem oder mehreren der Ansprüche 1 bis 4, dadurch gekennzeichnet, daß das Absperrorgan (7) ein Regelorgan ist, das zwischen dem vollständig offenen und dem vollständig geschlossenen Zustand kontinuierlich oder schrittweise über einen Stellantrieb (11) verstellbar ist, der von der Steuereinheit (8) Steuerbar ist, insbesondere eine Klappe, ein Schieber oder ein Ventil (Fig. 4 bis 6).

8. Vorrichtung nach einem oder mehreren der Ansprüche 1 bis 7, dadurch gekennzeichnet, daß ein Durchflußeingabeelement (6) vorgesehen ist, das bei Betätigung Signale an die Steuereinheit (8) abgibt, die das Absperrorgan (7) eingabeabhängig so steuert, daß ein dem eingegebenen Soll-Durchfluß entsprechender Fluiddurchsatz (V̇) erzielt wird (Fig. 4, 6, 12, 13).

9. Vorrichtung nach Anspruch 8, dadurch gekennzeichnet, daß die Steuereinheit (8) so ausgebildet ist, daß das Durchflußeingabeelement (6) gleichzeitig die EIN-Funktion der Betätigungseinrichtung (5) aufweist, mit der das Absperrorgan (7) geöffnet wird.

10. Vorrichtung nach einem oder mehreren der Ansprüche 1 bis 9, dadurch gekennzeichnet, daß die Steuereinheit (8) so ausgebildet ist, daß die Speicherplatzelemente (SP1, SP2, SP3, ...) der Speichereingabeeinrichtung (9) (M, SP) bzw. die Speicheransprechelemente (MSP1, MSP2, MSP3, ...) der Speichereingabeeinrichtung (9) (MSP) gleichzeitig die AUS-Funktion der Betätigungseinrichtung (5) aufweisen, mit der das Absperrorgan (7) geschlossen wird.

11. Vorrichtung nach einem oder mehreren der Ansprüche 1 bis 10, dadurch gekennzeichnet, daß das Absperrorgan (7) aus mindestens zwei Absperrorganen (7', 7'') besteht, die Stellantriebe (11', 11'') aufweisen, die von der Steuereinheit (8) gesteuert sind, und die einlaßseitig jeweils mit einem von mindestens zwei Fluideinlässen (3', 3'') für mindestens zwei unterschiedliche Fluids (1', 1'') und auslaßseitig mit dem Fluidauslaß (4) verbunden sind (Fig. 5).

12. Vorrichtung nach einem oder mehreren der Ansprüche 7 bis 11, dadurch gekennzeichnet, daß stromauf vom Absperrorgan (7) ein Dreiwegemischer oder ein Vierwegemischer (16) in der Fluidleitung (2) vorgesehen ist, dereinlaßseitig mit zwei bzw. drei Fluideinlässen (3'. 3'') und auslaßseitig mit dem Absperrorgan (7) verbunden ist (Fig. 6, 7).

13. Vorrichtung nach einem oder mehreren der Ansprüche 1 bis 12, dadurch gekennzeichnet, daß sie eine zwischen dem Absperrorgan (7) und dem Fluidauslaß (4) angeordnete Sicherheits-Absperreinrichtung (15) aufweist, die einen Strömungsschalter oder ein kontinuierlich oder schrittweise über einen Stellantrieb (24) zwischen dem vollständig offenen und dem vollständig geschlossenen Zustand verstellbares Regelorgan darstellt und von der Steuereinheit (8) steuerbar ist, insbesondere ein Magnetventil (Fig. 4, 5).

14. Vorrichtung nach einem oder mehreren der Ansprüche 1 bis 13, dadurch gekennzeichnet, daß sie stromab von jedem Fluideinlaß (3; 3', 3'') und vorzugsweise stromab vom Absperrorgan (7) und bevorzugt unmittelbar an das Absperrorgan (7) anschließend einen Rückflußverhinderer (20), vorzugsweise ein Rückschlagventil oder eine Rückschlagklappe, aufweist (Fig. 2(a), 2(b), 7).

15. Vorrichtung nach einem oder mehreren der Ansprüche 1 bis 14, dadurch gekennzeichnet, daß die Steuereinheit (8) so ausgebildet ist, daß das Absperrorgan (7) über die Betätigungseinrichtung (5) im Sinne eines herkömmlichen Strömungsschalters (insbesondere eines Wasserhahns) oder eines Regelorgans manuell, ohne Betätigung eines Speicherplatzelements (SP1, SP2, SP3, ...) oder eines Speicheransprechelements (MSP1, MSP2, MSP3, ...) des Speichereingabeelements (9), zu öffnen (EIN) und wieder zu schließen (AUS) ist.

16. Vorrichtung nach einem oder mehreren der Ansprüche 1 bis 15, dadurch gekennzeichnet, daß sie einen Durchflußmengensensor (25) aufweist, der stromab vom Absperrorgan (7) vorgesehen und mit der Steuereinheit (8) verbunden ist, und die Steuereinheit (8) so ausgebildet ist, daß sie unter Verwendung des Ausgangssignals des Durchflußmengensensors (25) als der Ist-Durchflußmenge des in den Fluidauslaß (4) eingespeisten Fluids (1) entsprechendes Signal und Vergleich mit einem über ein Durchflußeingabeelement (6) eingegebenen, der Soll-Durchflußmenge zugeordneten Signal das Absperrorgan (7), vorzugsweise im Sinne eines geschlossenen Regelkreises, so ansteuert, daß die im Auslauf des Absperrorgans (7) resultierende Durchflußmenge genau oder näherungsweise der Soll-Durchflußmenge entspricht (Fig. 6).

17. Vorrichtung nach einem oder mehreren der Ansprüche 1 bis 16, dadurch gekennzeichnet, daß die Steuereinheit (8) ein an sich bekanntes Mikroprozessorsystem ist, das eine zentrale Recheneinheit (CPU), einen Festwertspeicher (ROM), einen Schreib-/Lesespeicher (RAM) und ein Interface (I/O-Einheit) aufweist.

18. Vorrichtung nach Anspruch 17, dadurch gekennzeichnet, daß der Festwertspeicher (ROM) und/oder der Schreib-/Lesespeicher (RAM) mindestens ein Kennfeld enthält, in dem Steuerwerte zur Steuerung des Absperrorgans (7) und ggfs. der Sicherheits-Absperreinrichtung (15) in Zuordnung zu der Temperatur (T1, T2) und/oder der Durchflußmenge und/oder der Zeit abgespeichert sind.

19. Vorrichtung nach einem oder mehreren der Ansprüche 1 bis 18, dadurch gekennzeichnet, daß die Betätigungseinrichtung (5) eine an sich bekannte Einrichtung zur berührungslosen anwesensheitsorientierten Steuerung bzw. zur Näherungssteuerung ist, die auf dem Prinzip der Lichtschranke mit sichtbarem Licht oder Infrarotlicht, der Passivinfrarotdetektion, der Ultraschalldetektion, dem Radarprinzip oder der Anwendung von Mikrowellen beruht und von der Steuereinheit (8) gesteuert ist.

20. Vorrichtung nach einem oder mehreren der Ansprüche 1 bis 19, dadurch gekennzeichnet, daß sie eine von der Steuereinheit (8) gesteuerte Ausgabeeinheit (21) aufweist, die als optische Anzeige und/oder akustische Ausgabeeinrichtung und insbesondere Sprachausgabeeinrichtung und/oder als Drucker ausgebildet ist (Fig. 6).

21. Vorrichtung nach einem oder mehreren der Ansprüche 1 bis 20, dadurch gekennzeichnet, daß die Betätigungseinrichtung (5) und/oder die Speichereingabeeinrichtung (9) über die Steuereinheit (8) zum interaktiven Betrieb mit einem Benutzer ausgebildet sind und vorzugsweise sprachgesteuert sind.

22. Vorrichtung nach Anspruch 20 oder 21, dadurch gekennzeichnet, daß die Ausgabeeinrichtung (21) als Sprachausgabeeinrichtung ausgebildet ist und ferner ein Mikrophon zur Sprach- oder Lautaufnahme aufweist und die Steuereinheit (8) so ausgebildet ist, daß sie die vom Mikrophon gelieferten Signale zur Sprach- oder Lauterkennung auswertet und bei Empfang bestimmter Sprach- oder Lautsignale die Betätigungseinrichtung (5) und/oder die Speichereingabeeinrichtung (9) in einem Lernmodus oder in einem Dosiermodus ansteuert.

23. Vorrichtung nach einem oder mehreren der Ansprüche 1 bis 22, dadurch gekennzeichnet, daß sie für Wasser oder wäßrige Lösungen, insbesondere Brauchwasser, nichtwäßrige Lösungsmittel oder Lösungen, Dispersionen oder Emulsionen oder für Gase oder Aerosole als Fluids (1) ausgelegt ist.

24. Vorrichtung nach einem oder mehreren der Ansprüche 1 bis 23, dadurch gekennzeichnet, daß sie ein Temperatureingabeelement (10) zur Eingabe von Temperatursollwerten aufweist, das mit der Steuereinheit (8) verbunden ist, die aufgrund von Signalen vom Temperatureingabeelement (10) die Stellantriebe (11', 11''; 17) von Mischeinrichtungen (7', 7''; 16), die einlaßseitig mit Fluidquellen für Fluids (1', 2'') unterschiedlicher Temperatur verbunden sind, im Sinne einer Steuerung oder eines geschlossenen Regelkreises so ansteuert, daß am Fluidauslaß (4) ein gemischtes Fluid der eingestellten Temperatur resultiert (Fig. 5, 6, 7).

25. Vorrichtung nach einem oder mehreren der Ansprüche 1 bis 24, dadurch gekennzeichnet, daß sie ein Bedientableau (12) aufweist, in dem die Betätigungseinrichtung (5) und/oder die Speichereingabeeinrichtung (9) (M, SP; MSP) und/oder das Durchflußeingabeelement (6) und/oder das Temperatureingabeelement (10) vorgesehen sind und das gegebenenfalls auch die Ausgabeeinheit (21) enthält (Fig. 10 bis 13).

26. Vorrichtung nach Anspruch 25, dadurch gekennzeichnet, daß die Betätigungseinrichtung (5), das Durchflußeingabeelement (6), die Speichereingabeeinrichtung (9) und/oder das Temperatureingabeelement (10) des Bedientableaus (12) als Bedienelemente Tasten, insbesondere Folientasten oder Piezotasten, aufweisen (Fig. 10 bis 13).

27. Vorrichtung nach Anspruch 25 oder 26, dadurch gekennzeichnet, daß die Bedienelemente des Bedientableaus (12) in Blindenschrift, insbesondere in Braille-Schrift, bezeichnet sind.

28. Vorrichtung nach einem oder mehreren der Ansprüche 25 bis 27, dadurch gekennzeichnet, daß das Bedientableau (12) an einer Auslaufarmatur, insbesondere einer Sanitär-Auslaufarmatur, oder in räumlicher Nähe zu einer Auslaufarmatur angeordnet ist, insbesondere auf einer Wand oder in einer Wand unter Putz, oder an Einrichtungsgegenständen oder Mobiliar anbringbar oder zum Tragen oder Halten in der Hand ausgebildet ist, wobei die Stromversorgung des Bedientableaus (12) vorzugsweise über darin integrierte Solarzellen (22) erfolgt Fig. 13).

29. Vorrichtung nach Anspruch 28, dadurch gekennzeichnet, daß das Bedientableau (12) am Auslauf einer Sanitär-Auslaufarmatur lösbar bzw. abnehmbar vorgesehen ist, wobei die Datenübertragung zwischen dem Bedientableau (12) und der Steuereinheit (8) leitungsunabhängig erfolgt, insbesondere durch optische Datenübertragung im sichtbaren Spektralbereich oder im IR-Bereich oder durch Datenübertragung per Funk (Fig. 13).

30. Vorrichtung nach einem oder mehreren der Ansprüche 13 bis 29, dadurch gekennzeichnet, daß die Steuereinheit (8) so ausgebildet ist, daß im Lernmodus wie auch im Dosiermodus bei Beginn eines Dosiervorgangs aufgrund einer Betätigung der Betätigungseinrichtung (5) und/oder der Speichereingabeeinrichtung (9) zuerst die Sicherheits-Absperreinrichtung (15) und anschließend das Absperrorgan (7) geöffnet und bei Beendigung eines Dosiervorgangs zuerst das Absperrorgan (7) und anschließend die Sicherheits-Absperreinrichtung (15) geschlossen werden (Fig. 4, 5, 8, 9).

31. Vorrichtung nach einem oder mehreren der Ansprüche 1 bis 30, dadurch gekennzeichnet, daß die Steuereinheit (8) so ausgebildet ist, daß sie den Lernmodus und/oder den Dosiermodusdurch eine geeignete Einrichtung der Ausgabeeinheit (21) optisch und/oder akustisch signalisiert.

32. Vorrichtung nach einem oder mehreren der Ansprüche 1 bis 31, dadurch gekennzeichnet, daß die Steuereinheit (8) so ausgebildet ist, daß sie nach Erfassung einer dauernden Abgabe von Fluid (1) über einen vorgegebenen Zeitraum nach dem über die Betätigungseinrichtung (5) und/oder die Speichereingabeeinrichtung (9) veranlaßten Öffnen des Absperrorgans (7) hinaus und/oder nach Überschreitung eines vorgegebenen maximalen Dosiervolumens oder einer vorgegebenen maximalen Dosiermasse an Fluid (1) das Absperrorgan (7) und/oder die Sicherheits-Absperreinrichtung (15) schließt und vorzugsweise in diesem Fall ein optisches und/oder akustisches Störungssignal über die Ausgabeeinheit (21) abgibt.

33. Vorrichtung nach einem oder mehreren der Ansprüche 20 bis 32, dadurch gekennzeichnet, daß die Steuereinheit (8) so ausgebildet ist, daß die im Lernmodus gespeicherte Dosiermenge im Dosiermodus oder permanent durch die Ausgabeeinheit (21), und vorzugsweise im Bedientableau (12), als physikalische Größe, insbesondere in einem Volumenmaß (Liter, Milliliter) oder einem Massenmaß (Kilogramm, Gramm), angezeigt wird.

34. Vorrichtung nach einem oder mehreren der Ansprüche 1 bis 33, dadurch gekennzeichnet, daß die Steuereinheit (8) so ausgebildet ist, daß in den Speichern bzw. Speicherbereichen, die den Speicherplatzelementen (SP1, SP2, SP3, ...) oder den Speicheransprechelementen (MSP1, MSP2, MSP3, ...) der Speichereingabeeinrichtung (9) zugeordnet sind, herstellerseitig vorgegebene Dosiermengen vorab gespeichert sind, die im Lernmodus überschreibbar sind und bei Ausfall der Stromversorgung bzw. von Pufferbatterien und/oder bei Betätigung einer Reset- oder Clear-Einrichtung wieder aktivierbar sind.

35. Vorrichtung nach einem oder mehreren der Ansprüche 16 bis 34, dadurch gekennzeichnet, daß der Durchflußmengensensor (25) ein absolut arbeitender Durchflußmengensensor ist und die elektronische Steuereinheit (8) so ausgebildet ist, daß sie nach einer vorgegebenen Anzahl von Dosiervorgängen bei einem neuerlichen Dosiervorgang eine Überprüfung und ggfs. Korrektur von abgespeicherten, vorzugsweise in einem oder mehreren Kennfeldern abgespeicherten Steuerdaten aufgrund des Signals vom Durchflußmengensensor (25) vornimmt und die gespeicherten Werte entsprechend aktualisiert.

36. Vorrichtung nach einem oder mehreren der Ansprüche 1 bis 35, dadurch gekennzeichnet, daß sie als Sanitär-Auslaufarmatur ausgebildet ist, insbesondere als Küchenarmatur, Waschtischarmatur, Wannenfüllarmatur oder Brausearmatur, oder in ein Fluidleitungssystem integriert ist.

37. Vorrichtung nach einem oder mehreren der Ansprüche 1 bis 36, dadurch gekennzeichnet, daß der Fluidauslaß (4) eine Freistrahl-Auslaufarmatur bzw. der Auslaufteil einer Freistrahl-Auslaufarmatur ist.

38. Vorrichtung nach einem oder mehreren der Ansprüche 1, 2 und 4 bis 37, dadurch gekennzeichnet, daß die Steuereinheit (8), die Betätigungseinrichtung (5) und die Speichereingabeeinrichtung (9) (M, SP) so ausgebildet sind, daß für den Lernmodus eine der in der nachstehenden Funktionstabelle aufgelisteten funktionellen Kombinationen von Betätigungen der Betätigungseinrichtung (5) und/oder der Speichereingabeeinrichtung (9) (M, SP) zu Lernbeginn und Lernende vorliegt:
| Betätigung(en) | | | | | |
|---|---|---|---|---|---|
| zu Lernbeginn | | | zu Lernende | | |
| (5) | (M) | (SP) | (5) | (M) | (SP) |
| 0 | 1 | 0 | 0 | 0 | 1 |
| 0 | 1 | 0 | 1 | 0 | 1 |
| 0 | 0 | 1 | 0 | 1 | 0 |
| 0 | 0 | 1 | 0 | 1 | 1 |
| 0 | 0 | 1 | 1 | 1 | 0 |
| 0 | 0 | 1 | 1 | 1 | 1 |
| 0 | 1 | 1 | 1 | 0 | 0 |
| 1 | 1 | 0 | 0 | 0 | 1 |
| 1 | 1 | 0 | 1 | 0 | 1 |
| 1 | 0 | 1 | 0 | 1 | 0 |
| 1 | 0 | 1 | 1 | 1 | 0 |
| 1 | 1 | 1 | 1 | 0 | 0 |
| 1 | 0 | 0 | 0 | 1 | 1 |
| 1 | 0 | 0 | 1 | 1 | 1 |

39. Vorrichtung nach einem oder mehreren der Ansprüche 1, 2 und 4 bis 38, dadurch gekennzeichnet, daß die Steuereinheit (8), die Betätigungseinrichtung (5) und die Speichereingabeeinrichtung (9) (M, SP) so ausgewählt sind, daß für den Lernmodus eine der in der nachstehenden Bedientabelle aufgelisteten Kombinationen von Betätigungen bzw. Abfolgen von Betätigungen der Betätigungseinrichtung (5) und/oder der Speichereingabeeinrichtung (9) (M, SP) zu Lernbeginn und Lernende vorliegt: 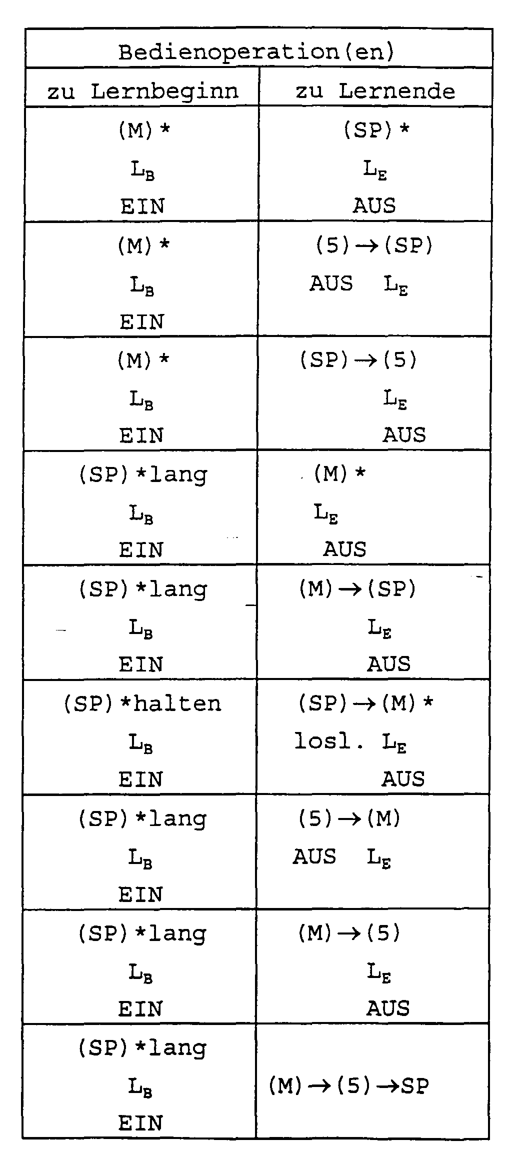 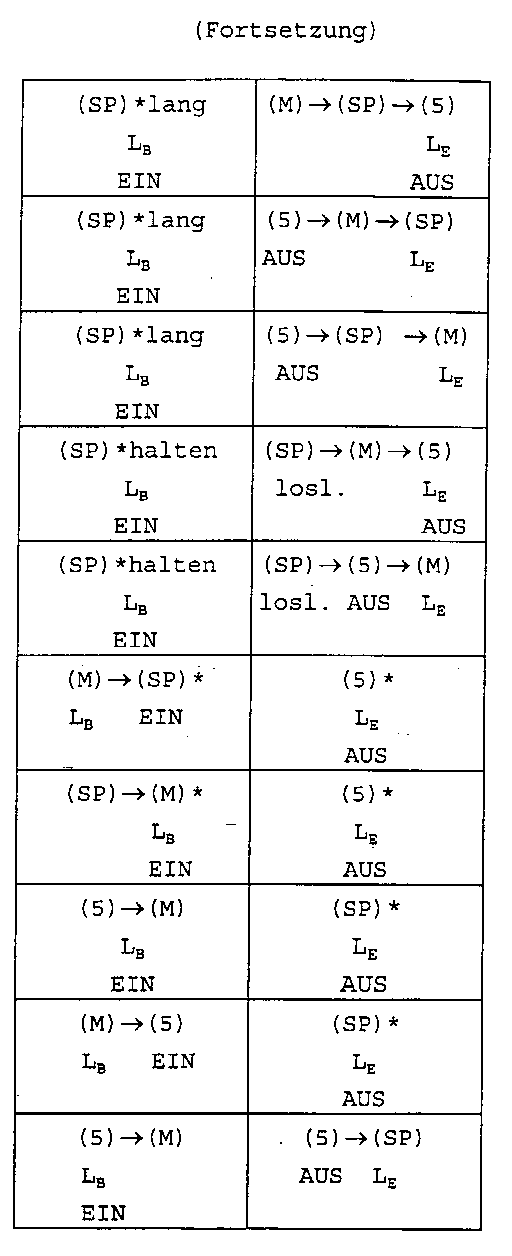 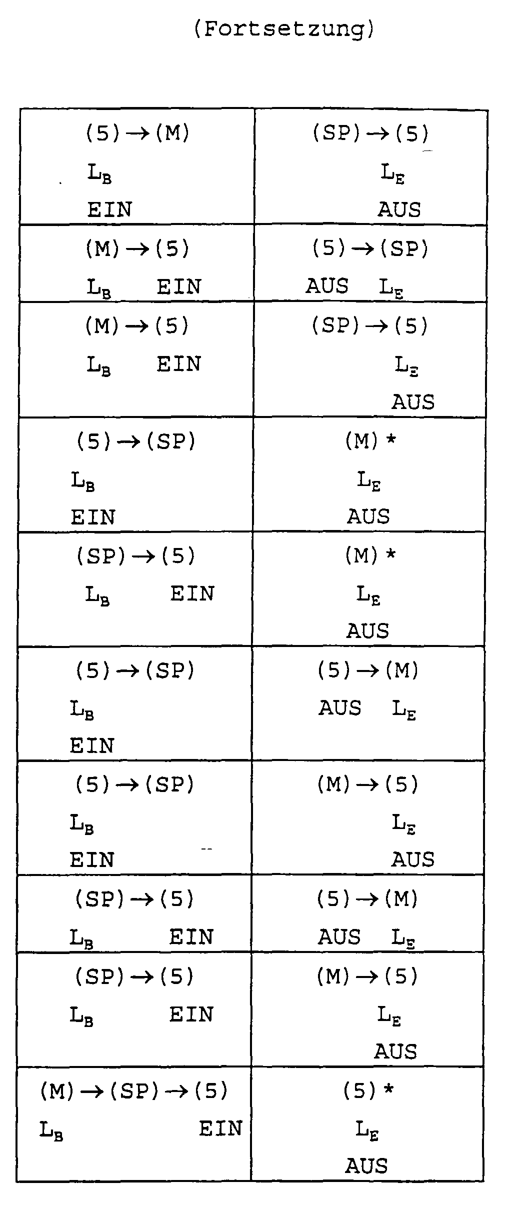 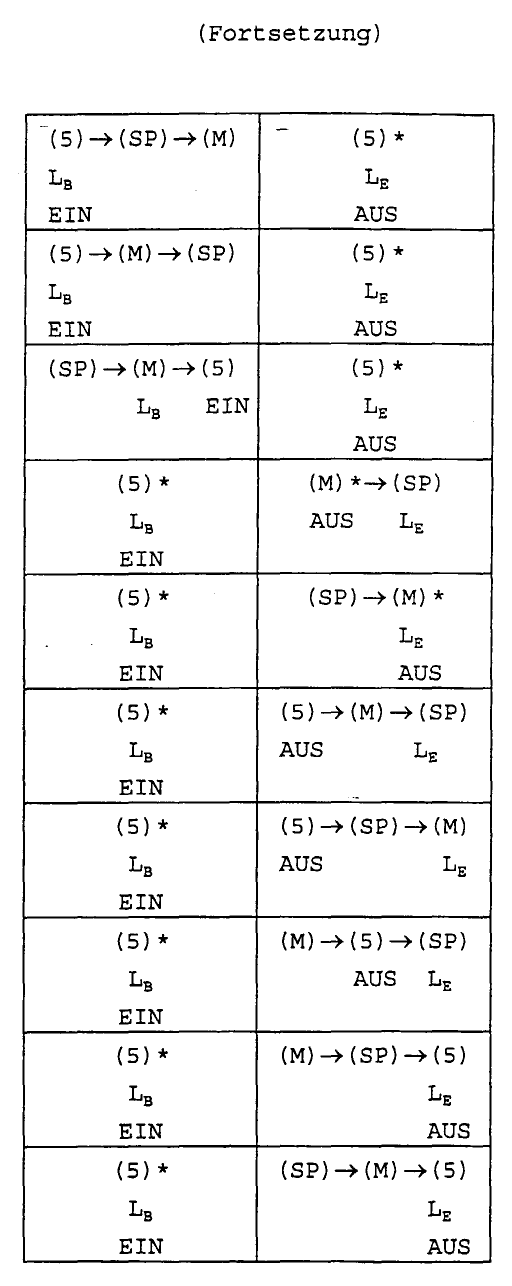 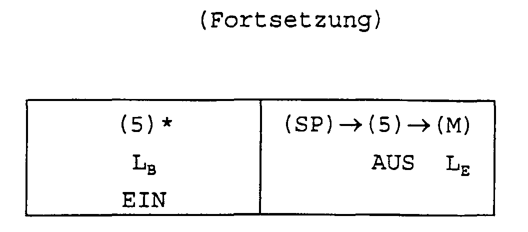 wobei bedeuten:
L_{B} den Beginn des Lernmodus,
L_{E} das Ende des Lernmodus,
EIN das Öffnen des Absperrorgans (7),
AUS das Schließen des Absperrorgans (7),
→ die Abfolge der Bedienoperationen und
* eine Doppelfunktion des betreffenden Eingabeelements, d.h. die ihm unmittelbar zugeordnete Funktion sowie eine zweite Funktion.

40. Vorrichtung nach einem oder mehreren der Ansprüche 1 und 3 bis 37, dadurch gekennzeichnet, daß die Steuereinheit (8), die Betätigungseinrichtung (5) und die Speichereingabeeinrichtung (9) (MSP) so ausgebildet sind, daß für den Lernmodus eine der in der nachstehenden Funktionstabelle aufgelisteten funktionellen Kombinationen von Betätigungen der Betätigungseinrichtung (5) und/oder der Speichereingabeeinrichtung (9) (MSP) zu Lernbeginn und Lernende vorliegt:
| Betätigung(en) | | | |
|---|---|---|---|
| zu Lernbeginn | | zu Lernende | |
| (5) | (MSP) | (5) | (MSP) |
| 1 | 0 | 0 | 1 |
| 1 | 0 | 1 | 1 |
| 0 | 1 | 0 | 1 |
| 0 | 1 | 1 | 0 |
| 0 | 1 | 1 | 1 |
| 1 | 1 | 0 | 1 |
| 1 | 1 | 1 | 0 |
| 1 | 1 | 1 | 1 |

41. Vorrichtung nach einem oder mehreren der Ansprüche 1, 3 bis 37 und 40, dadurch gekennzeichnet, daß die Steuereinheit (8) die Betätigungseinrichtung (5) und die Speichereingabeeinrichtung (9) (MSP) so ausgebildet sind, daß für den Lernmodus eine der in der nachstehenden Bedientabelle aufgelisteten Kombinationen von Betätigungen bzw. Abfolgen von Betätigungen der Betätigungseinrichtung (5) und/oder der Speichereingabeeinrichtung (9) (MSP) zu Lernbeginn und Lernende vorliegt: 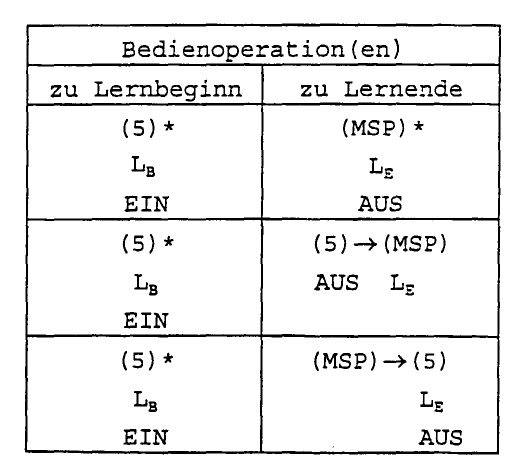 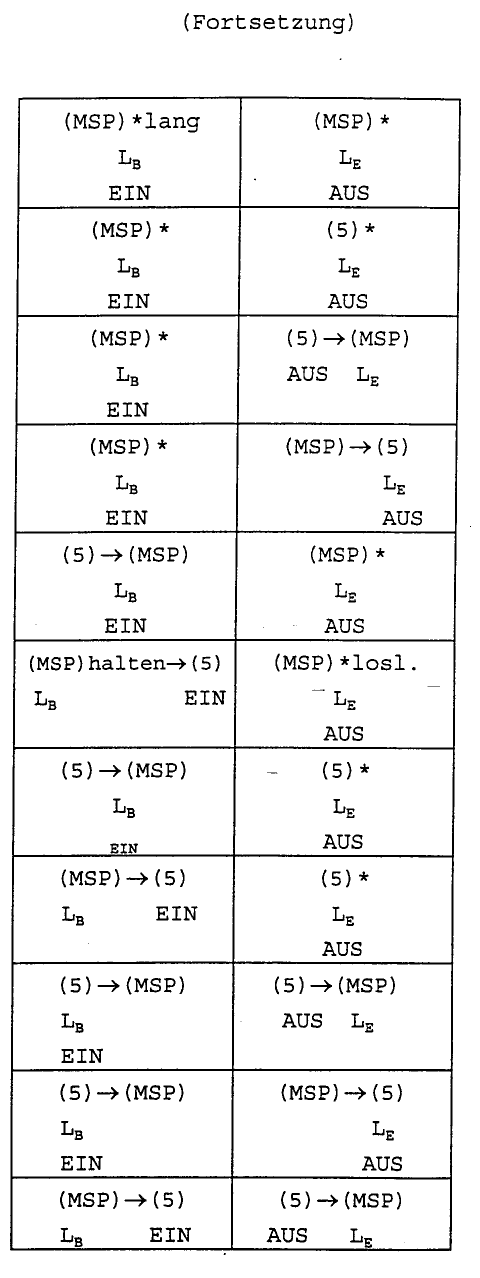 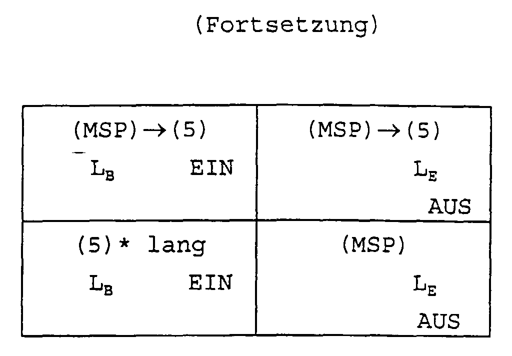 wobei bedeuten:
L_{B} den Beginn des Lernmodus,
L_{E} das Ende des Lernmodus,
EIN das Öffnen des Absperrorgans (7),
AUS das Schließen des Absperrorgans (7),
→ die Abfolge der Bedienoperationen und
* eine Doppelfunktion des betreffenden Eingabeelements, d.h. die ihm unmittelbar zugeordnete Funktion sowie eine zweite Funktion.

42. Verfahren zur wiederholbaren Dosierung eines Fluids (1) in einer wählbaren und reproduzierbaren Menge mit Hilfe eines in einer Fluidleitung (2) mit Fluideinlaß (3) und Fluidauslaß (4) vorgesehenen Absperrorgans (7), das von einer elektronischen Steuereinheit (8) steuerbar ist, die nach Eingabe einer der gewählten, zu dosierenden Menge an Fluid (1) entsprechenden Eingabeinformation das Absperrorgan (7) öffnet und nach Ausströmen der gewählten Menge an Fluid (1) aus dem Fluidauslaß (4), die als entsprechende Mengeninformation in der Steuereinheit (8) gespeichert ist, das Absperrorgan (7) wieder schließt, dadurch gekennzeichnet, daß
(A) zur Erzeugung der in der Steuereinheit (8) gespeicherten Mengeninformation
- durch Eingabe einer Eingabeinformation (5; M, SP; MSP) an die Steuereinheit (8) oder durch Öffnen des Absperrorgans (7) durch Öffnen durch eine Bedienungsperson ein Lernmodus der Steuereinheit (8) initiiert wird (L_{B}),
- die Steuereinheit (8) während des Lernmodus die aus dem Fluidauslaß (4) ausgeströmte Menge an Fluid (1) als dieser Menge entsprechende Mengeninformation erfaßt und speichert
und
- der Lernmodus durch das nachfolgende, von einer Bedienungsperson vorgenommene Schließen des Absperrorgans (7) von der Steuereinheit (8) beendet wird (L_{E})
und
(B) zur wiederholbaren Dosierung des Fluids (1) in einer der in der Steuereinheit (8) gespeicherten Mengeninformation entsprechenden Menge
- durch Eingabe einer Eingabeinformation (SP; MSP) an die Steuereinheit (8), gegebenenfalls in Kombination mit einer Betätigung der Betätigungseinrichtung (5), ein Dosiermodus der Steuereinheit (8) initiiert wird,
- das Absperrorgan (7) daraufhin durch die Steuereinheit (8) geöffnet wird,
- die Steuereinheit (8) das Absperrorgan (7) wieder schließt, wenn eine Menge an Fluid (1) aus dem Fluidauslaß (4) ausgeströmt ist, die der in der Lernphase gespeicherten zugehörigen Mengeninformation entspricht, und
- der Dosiermodus mit dem Schließen des Absperrorgans (7) beendet wird.

43. Verfahren nach Anspruch 42, dadurch gekennzeichnet, daß die Steuereinheit (8) während des Dosiermodus den Speicher, in dem die Mengeninformation gespeichert ist, gegen Überschreiben oder Löschen sperrt.

44. Verfahren nach Anspruch 42 und/oder 43, dadurch gekennzeichnet, daß bei Vorliegen einer Sicherheits-Absperreinrichtung (15) zwischen dem Absperrorgan (7) und dem Fluidauslaß (4) die Sicherheits-Absperreinrichtung (15) bei Beginn eines Dosiervorgangs im Lernmodus wie auch im Dosiermodus zeitlich vor dem Absperrorgan (7) geöffnet und bei Beendigung des Dosiervorgangs zeitlich nach dem Schließen des Absperrorgans (7) geschlossen wird (Fig. 4, 5, 9).

45. Verfahren nach einem oder mehreren der Ansprüche 42 bis 44, dadurch gekennzeichnet, daß das Absperrorgan (7) im Sinne eines Zweipunktbetriebs ohne Zwischenzustände geöffnet und geschlossen wird (Fig. 1, 3).

46. Verfahren nach einem oder mehreren der Ansprüche 42 bis 44, dadurch gekennzeichnet, daß das Absperrorgan (7) beim Öffnen während eines vorgegebenen Zeitraums oder in vorgegebenen Schritten stufenweise oder kontinuierlich vom geschlossenen in den offenen Zustand und beim Schließen während eines vorgegebenen Zeitraums oder in vorgegebenen Schritten stufenweise oder kontinuierlich vom offenen in den geschlossenen Zustand gesteuert wird (Fig. 9).

47. Verfahren nach einem oder mehreren der Ansprüche 42 bis 46, dadurch gekennzeichnet, daß die Mengeninformation über eine Zeitmessung des Zeitraums zwischen dem Öffnen und dem nachfolgenden Schließen des Absperrorgans (7) erzeugt wird.

48. Verfahren nach einem oder mehreren der Ansprüche 42 bis 47, dadurch gekennzeichnet, daß die Mengeninformation bei konstantem Durchsatz bzw. Druck an Fluid (1) erzeugt wird.

49. Verfahren nach einem oder mehreren der Ansprüche 42 bis 46, dadurch gekennzeichnet, daß die Mengeninformation über eine Durchflußmengenmessung der Durchflußmenge an Fluid (1) durch die Fluidleitung (2) zwischen dem Öffnen und dem nachfolgenden Schließen des Absperrorgans (7) erzeugt wird (Fig. 6).

50. Verfahren nach einem oder mehreren der Ansprüche 47 bis 49, dadurch gekennzeichnet, daß die Mengeninformation durch Korrektur der dem Zeitraum bzw. der Durchflußmenge entsprechenden Signale oder Daten bezüglich der Temperatur und/oder der Dichte und/oder der Viskosität und/oder des Drucks des Fluids (1) erzeugt wird.

51. Verfahren nach einem oder mehreren der Ansprüche 42 bis 50, dadurch gekennzeichnet, daß die Mengeninformation durch die elektronische Steuereinheit (8) in Form einer Relativmenge oder einer Absolutmenge ermittelt und über eine Ausgabeeinheit (21) ausgedruckt und/oder optisch und/oder akustisch angezeigt und/oder durch Sprachausgabe ausgegeben wird.

52. Verfahren nach einem oder mehreren der Ansprüche 42 bis 51, dadurch gekennzeichnet, daß ein absolut arbeitender Durchflußmengensensor (25) zur Ermittlung der Durchflußmenge an Fluid (1) verwendet wird und die elektronische Steuereinheit (8) nach einer vorgegebenen Anzahl von Dosiervorgängen bei einem neuerlichen Dosiervorgang eine Überprüfung und ggfs. Korrektur von gespeicherten Steuerdaten aufgrund des Signals vom Durchflußmengensensor (25) vornimmt und die gespeicherten Mengeninformationen entsprechend aktualisiert.

53. Verfahren nach einem oder mehreren der Ansprüche 42 bis 52, dadurch gekennzeichnet, daß die Eingabeinformationen leitungsunabhängig an die Steuereinheit (8) übertragen werden, insbesondere durch optische Datenübertragung im sichtbaren Spektralbereich oder im IR-Bereich oder durch Datenübertragung per Funk (Fig. 13).

54. Verfahren nach einem oder mehreren der Ansprüche 42 bis 53, dadurch gekennzeichnet, daß die Steuereinrichtung (8) nach Erfassung einer dauernden Abgabe von Fluid (1) über einen vorgegebenen Zeitraum nach dem Öffnen des Absperrorgans (7) hinaus und/oder nach Überschreitung eines vorgegebenen maximalen Dosiervolumens oder einer vorgegebenen maximalen Dosiermasse an Fluid (1) das Absperrorgan (7) und/oder die Sicherheits-Absperreinrichtung (15) schließt und vorzugsweise in diesem Fall ein optisches und/oder akustisches Störungssignal über die Ausgabeeinheit (21) abgibt.

55. Verfahren nach einem oder mehreren der Ansprüche 42 bis 54, dadurch gekennzeichnet, daß für den Lernmodus eine der in der nachstehenden Funktionstabelle aufgelisteten funktionellen Kombinationen von Eingabeinformationen (5; M, SP) zu Lernbeginn und Lernende angewandt wird:
| Eingabeinformation(en) | | | | | |
|---|---|---|---|---|---|
| zu Lernbeginn | | | zu Lernende | | |
| (5) | (M) | (SP) | (5) | (M) | (SP) |
| 0 | 1 | 0 | 0 | 0 | 1 |
| 0 | 1 | 0 | 1 | 0 | 1 |
| 0 | 0 | 1 | 0 | 1 | 0 |
| 0 | 0 | 1 | 0 | 1 | 1 |
| 0 | 0 | 1 | 1 | 1 | 0 |
| 0 | 0 | 1 | 1 | 1 | 1 |
| 0 | 1 | 1 | 1 | 0 | 0 |
| 1 | 1 | 0 | 0 | 0 | 1 |
| 1 | 1 | 0 | 1 | 0 | 1 |
| 1 | 0 | 1 | 0 | 1 | 0 |
| 1 | 0 | 1 | 1 | 1 | 0 |
| 1 | 1 | 1 | 1 | 0 | 0 |
| 1 | 0 | 0 | 0 | 1 | 1 |
| 1 | 0 | 0 | 1 | 1 | 1 |

56. Verfahren nach einem oder mehreren der Ansprüche 42 bis 55, dadurch gekennzeichnet, daß für den Lernmodus eine der in der nachstehenden Bedientabelle aufgelisteten Kombinationen von Eingabeinformationen (5; M, SP) zu Lernbeginn und Lernende angewandt wird: 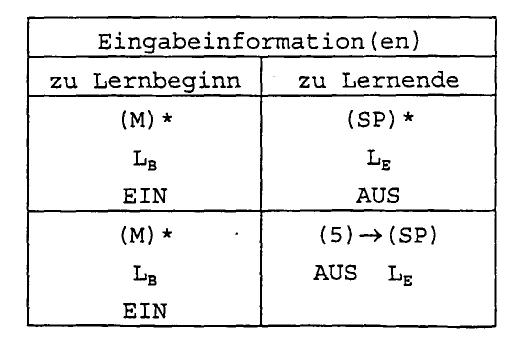 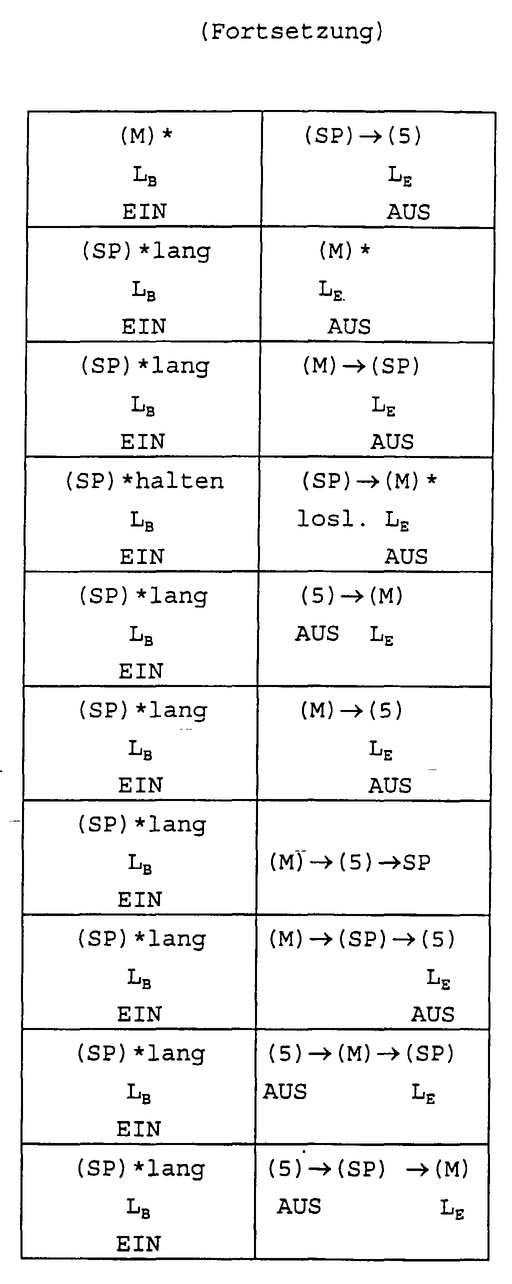 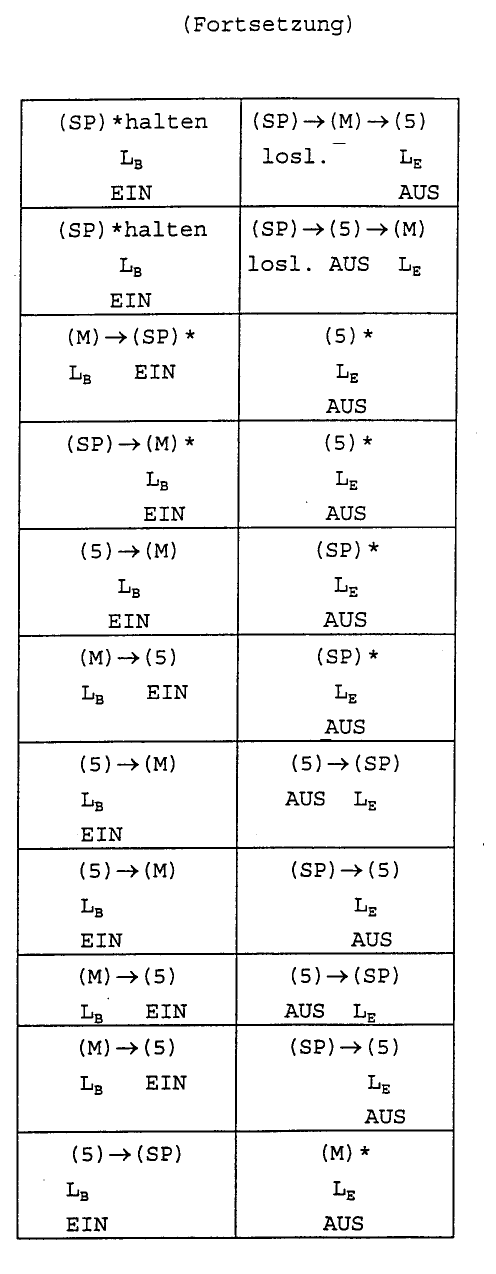 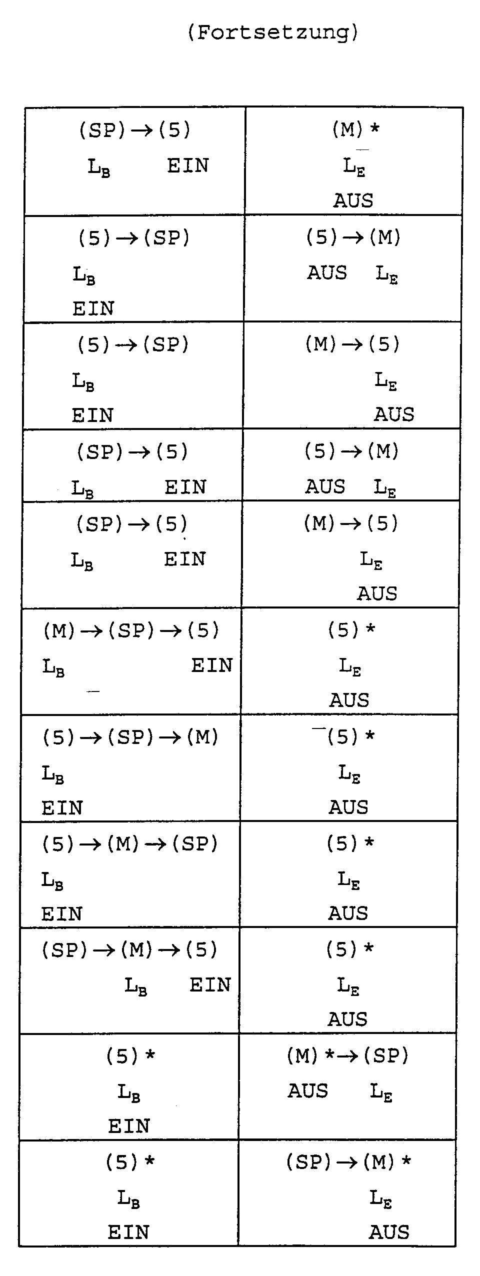 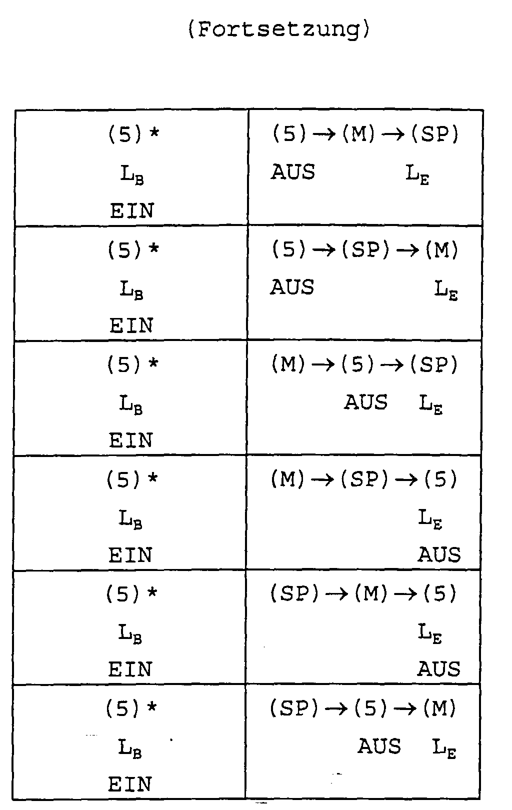 wobei bedeuten:
L_{B} den Beginn des Lernmodus,
L_{E} das Ende des Lernmodus,
EIN das Öffnen des Absperrorgans (7),
AUS das Schließen des Absperrorgans (7),
→ die Abfolge der Bedienoperationen und
* eine Doppelfunktion des betreffenden Eingabeelements, d.h. die ihm unmittelbar zugeordnete Funktion sowie eine zweite Funktion.

57. Verfahren nach einem oder mehreren der Ansprüche 42 bis 54, dadurch gekennzeichnet, daß für den Lernmodus eine der in der nachstehenden Funktionstabelle aufgelisteten funktionellen Kombinationen (5; MSP) zu Lernbeginn und Lernende angewandt wird:
| Eingabeinformation(en) | | | |
|---|---|---|---|
| zu Lernbeginn | | zu Lernende | |
| (5) | (MSP) | (5) | (MSP) |
| 1 | 0 | 0 | 1 |
| 1 | 0 | 1 | 1 |
| 0 | 1 | 0 | 1 |
| 0 | 1 | 1 | 0 |
| 0 | 1 | 1 | 1 |
| 1 | 1 | 0 | 1 |
| 1 | 1 | 1 | 0 |
| 1 | 1 | 1 | 1 |

58. Verfahren nach einem oder mehreren der Ansprüche 42 bis 54 und 57, dadurch gekennzeichnet, daß für den Lernmodus eine der in der nachstehenden Bedientabelle aufgelisteten Kombinationen von Eingabeinformationen (5; MSP) zu Lernbeginn und Lernende angewandt wird: 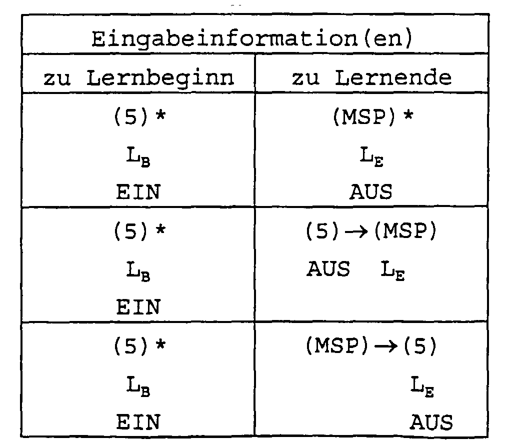 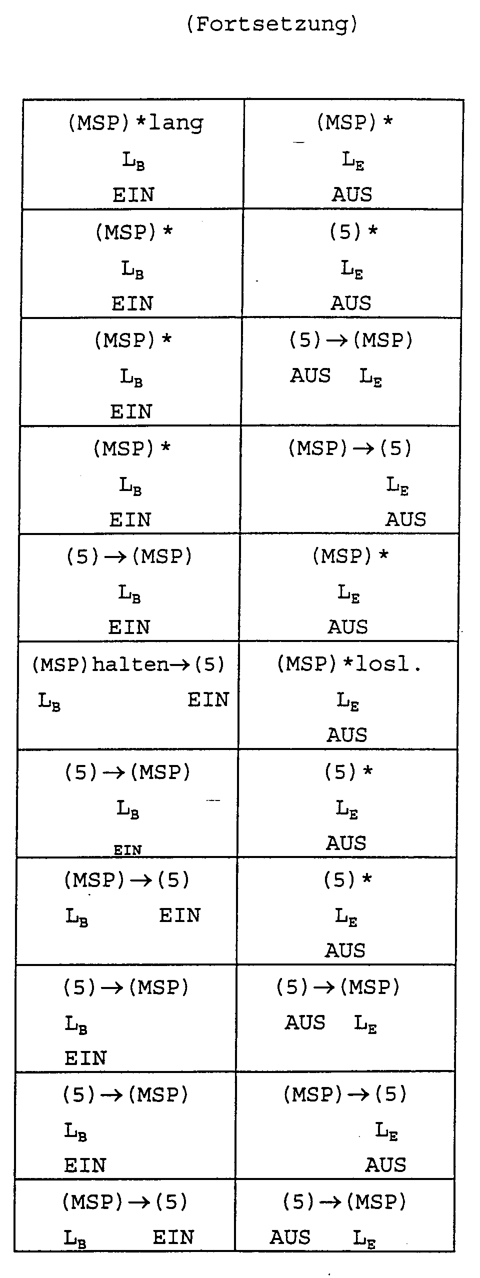 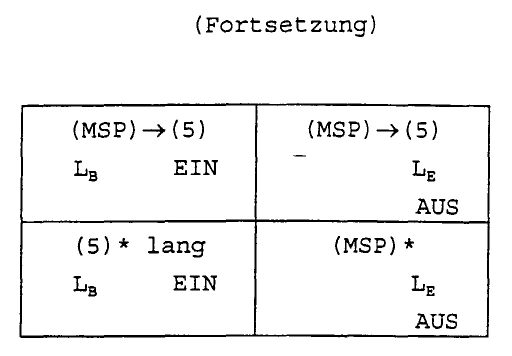 wobei bedeuten:
L_{B} den Beginn des Lernmodus,
L_{E} das Ende des Lernmodus,
EIN das Öffnen des Absperrorgans (7),
AUS das Schließen des Absperrorgans (7),
→ die Abfolge der Bedienoperationen und
* eine Doppelfunktion des betreffenden Eingabeelements, d.h. die ihm unmittelbar zugeordnete Funktion sowie eine zweite Funktion.
